(19) Europäisches Patentamt / European Patent Office / Office européen des brevets

(11) **EP 4 282 901 B1**

(12) **EUROPEAN PATENT SPECIFICATION**

(45) Date of publication and mention of the grant of the patent:
**20.05.2026 Bulletin 2026/21**

(21) Application number: **22763251.0**

(22) Date of filing: **01.03.2022**

(51) International Patent Classification (IPC):
***C08G 73/06*** *(2006.01)* ***C08J 5/22*** *(2006.01)*
***H01B 1/06*** *(2006.01)* ***C08G 79/025*** *(2016.01)*

(52) Cooperative Patent Classification (CPC):
**C08G 79/025; C08J 5/2256; H01B 1/122;**
C08G 73/0627; C08J 2379/04; C08J 2385/02;
Y02E 60/50

(86) International application number:
**PCT/JP2022/008595**

(87) International publication number:
**WO 2022/186196 (09.09.2022 Gazette 2022/36)**

(54) **PHOSPHAZENE BOND-CONTAINING POLYMER**

PHOSPHAZENBINDUNG ENTHALTENDES POLYMER

POLYMÈRE CONTENANT UNE LIAISON PHOSPHAZÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.03.2021 JP 2021032544**

(43) Date of publication of application:
**29.11.2023 Bulletin 2023/48**

(73) Proprietor: **Nippon Shokubai Co., Ltd.**
**Osaka-shi, Osaka 541-0043 (JP)**

(72) Inventors:
- **MIYATA, Yoshinori**
  **Suita-shi, Osaka 564-0034 (JP)**
- **IMIYA, Hiroto**
  **Suita-shi, Osaka 564-0034 (JP)**

(74) Representative: **Cabinet Beau de Loménie**
**103, rue de Grenelle**
**75340 Paris Cedex 07 (FR)**

(56) References cited:
**CN-A- 102 660 043** **CN-A- 104 479 135**
**CN-A- 104 479 135** **CN-A- 109 988 332**
**CN-A- 109 988 332** **CN-A- 112 189 278**
**CN-A- 112 189 278** **DE-A1- 2 721 826**
**JP-A- 2015 044 760** **JP-A- H08 239 395**
**JP-A- H08 239 395** **US-A1- 2006 217 526**
**US-A1- 2011 046 246**

- **RODNEY KEAT ET AL: "A phosphorus-31 nuclear magnetic resonance study of amino-derivatives of the chlorocyclophosphazenes, N3P3Cl6 and N4P4Cl8", JOURNAL OF THE CHEMICAL SOCIETY. DALTON TRANSACTIONS, no. 16, 1 January 1976 (1976-01-01), GB, pages 1582, XP055251773, ISSN: 0300-9246, DOI: 10.1039/dt9760001582**
- **KEAT R ET AL: "Phosphorus-nitrogen compounds. Part XX. The reaction of piperidine with hexachlorocyclotriphosphazatriene; the replacement pattern and the structure of the products; the "cis-effect"", 1 January 1966 (1966-01-01), pages 908 - 913, XP009558259, ISSN: 0022-4944, Retrieved from the Internet <URL:https://xlink.rsc.org/?DOI=J19660000908> [retrieved on 19660101], DOI: 10.1039/J19660000908**
- **ROTHEMUND SANDRA, TEASDALE IAN: "Preparation of polyphosphazenes: a tutorial review", CHEMICAL SOCIETY REVIEWS, vol. 45, no. 19, 1 January 2016 (2016-01-01), pages 5200 - 5215, XP009558260, ISSN: 0306-0012, DOI: 10.1039/C6CS00340K**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 282 901 B1

## Description

TECHNICAL FIELD

The present invention relates to phosphazene bond-containing polymers. Specifically, the present invention relates to a phosphazene bond-containing polymer suitable for electrolyte materials, anion exchange membranes, and the like, in fuel cells and water electrolysis devices; and also relates to an electrolyte material and an anion exchange membrane.

BACKGROUND ART

In response to a recent increase in interest in the use of hydrogen as an energy source, the production of hydrogen by water electrolysis and its use in fuel cells and the like have been actively studied. Proton-conducting membranes typified by Nafion® have long been known as ion-conducting materials for use in water electrolysis devices and fuel cells. Proton-conducting membranes however exhibit strong acidity and are highly corrosive. Due to such properties, the materials of the peripheral members are limited, and for example, expensive noble metals are required to be used as catalysts for electrodes, leading to higher costs.

Known anion conductive materials conducting hydroxide ions include materials having quaternary ammonium groups, for example (e.g., Patent Literatures 1 to 3).

Also, a phosphazene ring is known to be cationized by introducing a methyl group to a nitrogen atom in a phosphazene ring that contains a phosphorus atom to which an alkoxy group is bonded (e.g., Non-Patent Literature 1).

Patent Literature 4 discloses a compound with the following structure:

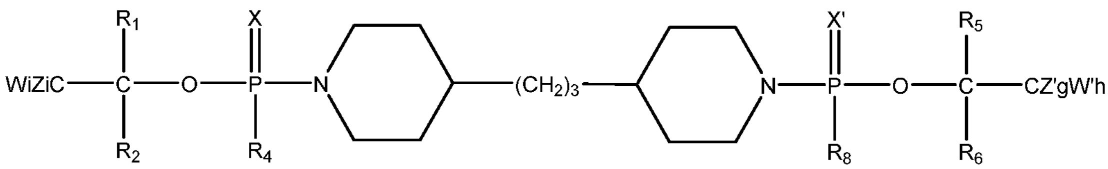

Patent Literature 5 discloses a polymerization reaction product obtained from a first monomer and a second monomer, both of which have two benzene rings and may have a substituent containing an acylic cationic phosphazene group.

Patent Literature 6 discloses a lithium salt represented by the formula $[(R\text{-}Ar\text{-}O)x(P{=}N)n(Li_2O_3P)_{2n\text{-}x}]$.

Patent Literature 7 discloses describes a phosphazene derivative with a structure represented by formula I wherein n is at least 3, and A is a group linked to the ring by an oxygen or nitrogen atom and containing a C=C double bond or an alkoxysilane group:

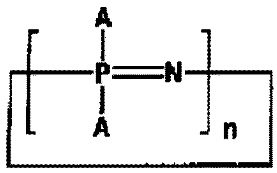

I

Patent Literature 8 discloses a polymer material having the structure shown as a formula (1) wherein P-N bonds are not part of a cyclic structure:

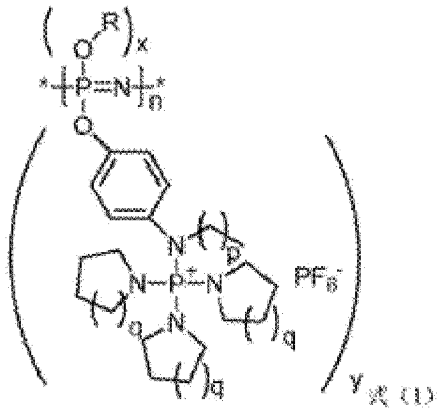

Patent Literature 9 discloses a phosphazene bond-containing polymer with a structure represented by formula (1) wherein P-N bonds are not part of a cyclic structure:

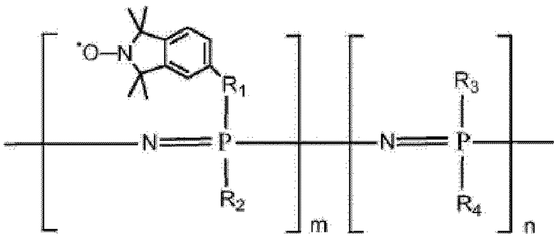

(1)

Patent Literature 10 discloses a method for producing a phosphazene polymer by thermopolymerizing a substituted chlorocyclotriphosphazene obtained through the reaction of sodium alkoxide or aryl oxide with hexachlorocyclotriphosphazene.

Non-Patent Literature 2 discloses a phosphazene compound obtained by reacting hexachlorocyclotriphosphazene with an amine compound.

Non-Patent Literature 3 discloses a phosphazene compound obtained by reacting piperidine with hexachlorocyclotriphosphazene.

Non-Patent Literature 4 discloses the reaction of hexachlorocyclotriphosphazenes with diamines to obtain a network polymer.

CITATION LIST

- Patent Literature

Patent Literature 1: JP 2018-70782 A
Patent Literature 2: JP 2013-107916 A
Patent Literature 3: JP 2015-125888 A
Patent Literature 4: JP-2015-044760 A
Patent Literature 5: US 2006/217526 A
Patent Literature 6: CN 112 189 278 A
Patent Literature 7: JP-H08-239395 A
Patent Literature 8: CN 109 988 332 A
Patent Literature 9: CN 104 479 135 A
Patent Literature 10: DE 27 21 826 A1

- Non-Patent Literature

Non-Patent Literature 1: Macromolecules 2012, 45, 1182-1189
Non-Patent Literature 2: Keat et al., Journal of the Chemical Society, no. 16, 1976, page 1582
Non-Patent Literature 3: Keat et al., Journal of the Chemical Society, 1966, pages 908-913
Non-Patent Literature 4: Rothemund et al., Chemical Society Reviews, vol. 45, no. 19, 2016, pages 5200-5215

## SUMMARY OF INVENTION

### - Technical Problem

Ion-conducting materials are required not only to be excellent in ion-conductivity but also to be chemically stable in the electrolytic solution of fuel cells or water electrolysis devices under operating conditions.

Anion-conducting materials as described above are advantageous from the viewpoint of corrosiveness compared to proton-conducting materials as described above.
However, the present inventors have confirmed that materials having quaternary ammonium groups easily decompose in alkaline aqueous solutions. Furthermore, Non-Patent Literature 1 discloses that the cationized phosphazene ring is chemically unstable and decationization of the cationized phosphazene ring proceeds.

Thus, there is a room for improvement in the conventionally proposed materials for use in members such as anion-conducting materials or other materials in fuel cells and water electrolysis devices in terms of chemical stability, particularly alkali resistance. In response to this, the present invention aims to provide a polymer having excellent alkali resistance and anion conductivity, a method of producing the polymer, an electrolyte material containing the polymer, and an anion exchange membrane containing the polymer.

### - Solution to Problem

The present inventors focused on polymers containing phosphazene bonds and conducted extensive studies thereon. As a result, the present inventors found that a phosphazene bond in which a hydrocarbon group is bonded to the nitrogen atom and a bond in which a nitrogen-containing group is bonded to the phosphorus atom give higher alkali resistance to a phosphazene bond and a phosphazene structure containing such a phosphazene bond, leading to the present invention.

### - Statement of the Invention

The present invention relates to a phosphazene bond-containing polymer containing a phosphorus atom constituting a phosphazene bond, the phosphorus atom including a phosphorus atom to which a nitrogen-containing group is bonded, and a nitrogen atom constituting the phosphazene bond, the nitrogen atom including a nitrogen atom to which a hydrocarbon group is bonded, wherein the phosphazene bond-containing polymer is a cationic polymer, and wherein the phosphazene bond-containing polymer has a cyclic-phosphazene structure in a main chain or a side chain.

### - Advantageous Effects of Invention

The phosphazene bond-containing polymer of the present invention containing a phosphazene bond in which the phosphorus atom and the nitrogen atom each have a specific group has excellent alkali resistance. The phosphazene bond-containing polymer thus can be preferably used as an anion exchange membrane or an electrolyte material in fuel cells, water electrolysis devices, or the like.

## BRIEF DESCRIPTION OF DRAWINGS

FIG. 1 shows the results of solid-state $^{13}C$-NMR analyses of membranes prepared using phosphazene bond-containing polymers (2a) and (2) produced in Example 3.
FIG. 2 shows the results of solid-state $^{31}P$-NMR analyses of membranes prepared using the phosphazene bond-containing polymers (2a) and (2) produced in Example 3.
FIG. 3 shows the results of solid-state $^{15}N$-NMR analyses of membranes prepared using the phosphazene bond-containing polymers (2a) and (2) produced in Example 3.

DESCRIPTION OF EMBODIMENTS

The present invention will be described in detail below. A combination of two or more of individual preferred embodiments of the present invention described below is also a preferred embodiment of the present invention.

<Phosphazene bond-containing polymer>

The phosphazene bond-containing polymer of the present invention contains a phosphorus atom constituting a phosphazene bond, the phosphorus atom including a phosphorus atom to which a nitrogen-containing group is bonded, and a nitrogen atom constituting the phosphazene bond, the nitrogen atom including a nitrogen atom to which a hydrocarbon group is bonded.

The term "phosphazene bond" herein refers to a bond between a phosphorus atom and a nitrogen atom (P-N bond), and is not limited by other conditions such as the bonding form between the phosphorus atom and the nitrogen atom. For example, the bonding form between the phosphorus atom and the nitrogen atom of the phosphazene bond may be any form, and examples thereof include a single bond, a double bond, and a bond exhibiting a resonance structure in which electrons are delocalized. The phosphazene bond may be neutral in charge, or may be positively or negatively charged, for example. When the phosphazene bond is charged, the charge may be localized on the nitrogen atom or the phosphorus atom constituting the phosphazene bond, or may be delocalized over the entire phosphazene bond.

The term "phosphazene structure" herein encompasses all structures containing the above-described phosphazene bond. The phosphazene structure may contain one phosphazene bond or two or more repeating phosphazene bonds. In a phosphazene structure containing two or more phosphazene bonds, phosphorus and nitrogen atoms are alternately bonded.

The phosphazene structure may be a structure in which phosphazene bonds are linked to each other in the form of a chain, i.e., a chain structure, or a structure in which phosphazene bonds are linked to each other in the form of a ring such as a six-membered ring, i.e., a cyclic structure.

The phosphazene structure may be neutral in charge, or may be positively or negatively charged, for example. When the phosphazene structure is electrically charged, the charge may be localized on a phosphorus atom, a nitrogen atom, or on part of a phosphazene bond constituting the phosphazene structure, or may be delocalized over the entire phosphazene structure.

The phosphazene bond-containing polymer of the present invention contains at least one phosphazene bond in the molecule. In other words, the phosphazene bond-containing polymer of the present invention has at least one phosphazene structure in the molecule.

The phosphazene bond-containing polymer of the present invention may contain one phosphazene structure or two or more phosphazene structures in the molecule. The phosphazene structure in the polymer may contain only one phosphazene bond or two or more phosphazene bonds.

The phosphazene bond (phosphazene structure) is present in the main chain, a side chain, or both the main chain and a side chain, of the polymer.

The phosphazene bond-containing polymer of the present invention contains a phosphorus atom constituting a phosphazene bond, the phosphorus atom including a phosphorus atom to which a nitrogen-containing group is bonded, and a nitrogen atom constituting the phosphazene bond, the nitrogen atom including a nitrogen atom to which a hydrocarbon group is bonded. Furthermore, the phosphazene bond-containing polymer of the present invention is a positively charged cationic polymer, for example when the polymer further contains, as a phosphorus atom constituting the phosphazene bond, a phosphorus atom singly bonded to two adjacent nitrogen atoms and further singly bonded to two groups selected from the group consisting of nitrogen-containing groups and groups not containing nitrogen.

As a result of the generation of positive charge, the above-described bonds, that is, the bond between the phosphorus atom and the nitrogen-containing group, the bond between the phosphorus atom and the group not containing nitrogen, and the bonds between the phosphorus atom and the adjacent two nitrogen atoms constituting the phosphazene bond, may remain single bonds or may undergo a change in bonding state due to a contribution of positive charge generated. When two nitrogen-containing groups are bonded to the phosphorus atom, they may be the same as or different from each other, and when two groups not containing nitrogen are bonded to the phosphorus atom, they may be the same as or different from each other.

The positive charge generated in the cationic polymer may be localized on a phosphorus atom adjacent to a nitrogen atom to which a hydrocarbon group is bonded, localized on a nitrogen atom to which a hydrocarbon group is bonded, or delocalized in a phosphazene structure containing such a phosphorus atom or a phosphazene structure containing such a nitrogen atom, for example.
The phosphazene bond-containing polymer of the present invention is a positively charged polymer (cationic polymer).

The phosphazene bond-containing polymer of the present invention may contain a counterion. When the phosphazene bond-containing polymer of the present invention is positively charged as described above, it preferably

contains a counter anion. The equivalent of the counter anion is preferably equal to or approximately equal to the equivalent of the positive charge.

The counter anion may be an inorganic ion commonly used as a counter anion. Examples thereof include halide ions such as a fluoride ion ($F^-$), a chloride ion ($Cl^-$), a bromide ion ($Br^-$), and an iodine ion ($I^-$), a hydroxide ion, a carbonate ion, a bicarbonate ion, and trifluoromethanesulfonate. One or more of these may be used.

The phosphazene bond-containing polymer of the present invention preferably has anion exchange properties. The phosphazene bond-containing polymer of the present invention being a cationic polymer, it has excellent anion exchange properties. The phosphazene bond-containing polymer of the present invention preferably has a hydroxy ion exchange capacity of 0.3 mmol/g or more, more preferably 0.4 mmol/g or more, still more preferably 0.5 mmol/g or more. The upper limit is usually 3.0 mmol/g or less, but is not limited thereto.

The hydroxy ion exchange capacity can be determined by measuring the ion exchange capacity as described in EXAMPLES.

The phosphazene bond-containing polymer of the present invention is a cationic polymer in order to satisfy the hydroxy ion exchange capacity within the above-described preferred range.

The phosphazene bond-containing polymer of the present invention preferably has anion conductivity. The phosphazene bond-containing polymer of the present invention being a cationic polymer, it has excellent anion conductivity. The anion conductivity of the phosphazene bond-containing polymer of the present invention is preferably 1 mS/cm or more, more preferably 5 mS/cm or more, still more preferably 10 mS/cm or more. The upper limit is usually 1000 mS/cm or less, but is not limited thereto.

The anion conductivity can be determined from the following formula by the same method as the measurement of membrane resistance described in EXAMPLES.

Anion conductivity (S/cm) = 1/(Membrane resistance ($\Omega$ cm)/Membrane thickness (cm))

Of the nitrogen atoms constituting the phosphazene bonds in the phosphazene bond-containing polymer of the present invention, the amount of nitrogen atoms to which hydrocarbon groups are bonded is not limited. From the viewpoint of easily achieving excellent ionic conductivity, the number of nitrogen atoms to which hydrocarbon groups are bonded is preferably 1/10 or more, more preferably 2/15 or more, particularly preferably 1/6 or more relative to the total number of nitrogen atoms constituting the phosphazene bonds, which is taken as 1. The upper limit is preferably 2/3 or less, more preferably 3/5 or less, still more preferably 8/15 or less, but is not limited thereto.

The number of nitrogen atoms to which hydrocarbon groups are bonded is preferably in the range of 1/10 to 2/3, more preferably in the range of 2/15 to 3/5, still more preferably in the range of 1/6 to 8/15 relative to the total number of nitrogen atoms constituting the phosphazene bonds, which is taken as 1.

The ratio can be determined by $^{31}$P-NMR analysis.

Of the phosphorus atoms constituting the phosphazene bonds in the phosphazene bond-containing polymer of the present invention, the amount of phosphorus atoms to which nitrogen-containing groups are bonded is not limited. From the viewpoint of easily achieving excellent ionic conductivity, the number of phosphorus atoms to which nitrogen-containing groups are bonded is preferably 1/3 or more, more preferably 2/3 or more, particularly preferably 1 or more relative to the total number of phosphorus atoms constituting the phosphazene bonds, which is taken as 1. The upper limit is preferably 10 or less, but is not limited thereto.

The number of phosphorus atoms to which nitrogen-containing groups are bonded is preferably in the range of 1/3 to 10, more preferably in the range of 2/3 to 10, still more preferably in the range of 1 to 10 relative to the total number of phosphorus atoms constituting the phosphazene bonds, which is taken as 1.

The ratio can be determined by $^{31}$P-NMR analysis.

The phosphazene bond-containing polymer of the present invention contains a repeating unit consisting of a phosphazene structure or a repeating unit containing a phosphazene structure as part of the repeating unit, and contains many phosphazene structures in the structure of the polymer.

Of the phosphazene structures in the phosphazene bond-containing polymer of the present invention, the percentage of cationized phosphazene structure is preferably 10% or more, more preferably 13% or more, still more preferably 17% or more.

These preferred percentages of cationized phosphazene structure apply to the phosphazene bond-containing polymers of the present invention according to Embodiments (1) to (4), which are described later.

The percentage of cationized phosphazene structure can be determined as follows: the cationized phosphazene bond-containing polymer is subjected to $^{31}$P-NMR analysis to determine the proportion of the peak area derived from the P atoms in the non-cationized phosphazene structures relative to the total peak area derived from the P atoms in the polymer.

In the phosphazene bond-containing polymer of the present invention, the positional relationship between the

phosphorus atom to which a nitrogen-containing group is bonded and the nitrogen atom to which a hydrocarbon group is bonded is not limited.

The structures of phosphazene bonds in the phosphazene bond-containing polymer of the present invention are exemplified as Structures (i) to (iv).

Structure (i): A phosphazene bond in which the phosphorus atom to which a nitrogen-containing group is bonded and the nitrogen atom to which a hydrocarbon group is bonded are directly bonded.

Structure (ii): A phosphazene bond in which the phosphorus atom to which no nitrogen-containing group is bonded and the nitrogen atom to which a hydrocarbon group is bonded are directly bonded.

Structure (iii): A phosphazene bond in which the phosphorus atom to which a nitrogen-containing group is bonded and the nitrogen atom to which no hydrocarbon group is bonded are directly bonded.

Structure (iv): A phosphazene bond in which the phosphorus atom to which no nitrogen-containing group is bonded and the nitrogen atom to which no hydrocarbon group is bonded are directly bonded.

To the phosphorus atom in Structures (ii) and (iv) is usually bonded one or two groups not containing nitrogen. To the phosphorus atom in Structures (i) and (iii) is usually bonded one group not containing nitrogen when one nitrogen-containing group is bonded to the phosphorus atom.

The nitrogen-containing group, the group not containing nitrogen, and the hydrocarbon group in Structures (i) to (iv) are described later.

The phosphazene bond-containing polymer of the present invention essentially contains either a phosphazene bond of Structure (i) or a combination of phosphazene bonds of Structures (ii) and (iii).

The phosphazene bond-containing polymer essentially containing a phosphazene bond of Structure (i) may further contain a phosphazene bond of Structure (ii), (iii), or (iv) as a phosphazene bond.

The percentage of the phosphazene bond of Structure (i) in the phosphazene bond-containing polymer is not limited. The amount of the phosphazene bond of Structure (i) based on the total 100 mol% of the phosphazene bonds in the phosphazene bond-containing polymer is preferably 1 to 100 mol%. The lower limit is more preferably 3 mol% or more, still more preferably 6 mol% or more, even more preferably 9 mol% or more, particularly preferably more than 9 mol%.

Also, the upper limit is more preferably 90 mol% or less, still more preferably 75 mol% or less, particularly preferably 60 mol% or less.

The amount of the phosphazene bond of Structure (i) is more preferably in the range of 3 to 90 mol%, still more preferably in the range of 6 to 75 mol%, even more preferably in the range of 9 to 60 mol%, particularly preferably in the range of more than 9 mol% to 60 mol%.

The phosphazene bond-containing polymer containing the phosphazene bond of Structure (i) may contain any percentages of the phosphazene bonds of Structures (ii), (iii), and (iv). The total amount of the phosphazene bonds of Structures (ii), (iii), and (iv) based on the total 100 mol% of the phosphazene bonds in the phosphazene bond-containing polymer is preferably 0 mol% or more and 99 mol% or less. The upper limit is more preferably 97 mol% or less, still more preferably 94 mol% or less, even more preferably 91 mol% or less, particularly preferably less than 91 mol%. Also, the lower limit is more preferably 10 mol% or more, still more preferably 25 mol% or more, even more preferably 40 mol% or more.

The total amount of the phosphazene bonds of Structures (ii), (iii), and (iv) is preferably in the range of 0 to 99 mol%, more preferably in the range of 10 to 97 mol%, still more preferably in the range of 25 to 94 mol%, even more preferably in the range of 40 to 91 mol%, particularly preferably in the range of 40 mol% to less than 91 mol%.

The phosphazene bond-containing polymer essentially containing the phosphazene bonds of Structures (ii) and (iii) may further contain the phosphazene bond of Structure (i) or (iv) as a phosphazene bond.

The percentages of the phosphazene bonds of Structures (ii) and (iii) in the phosphazene bond-containing polymer containing the phosphazene bonds of Structures (ii) and (iii) are not limited. The total amount of the phosphazene bonds of Structures (ii) and (iii) based on the total 100 mol% of the phosphazene bonds in the phosphazene bond-containing polymer is preferably 1 to 100 mol%. The lower limit is more preferably 5 mol% or more, still more preferably 10 mol% or more, even more preferably 15 mol% or more. The upper limit is more preferably 90 mol% or less.

The percentage of the phosphazene bonds of Structure (ii) and (iii) is more preferably in the range of 5 to 90 mol%, still more preferably in the range of 10 to 90 mol%, even more preferably in the range of 15 to 90 mol%.

The percentage of the phosphazene bond of Structure (ii) in the phosphazene bond-containing polymer containing the phosphazene bonds of Structures (ii) and (iii) is not limited. The percentage of the phosphazene bond of Structure (ii) based on the total 100% of the phosphazene bonds in the phosphazene bond-containing polymer is preferably 1 to 95 mol%. The lower limit is more preferably 3 mol% or more, still more preferably 6 mol% or more, even more preferably 9 mol% or more. The upper limit is more preferably 80 mol% or less, still more preferably 75 mol% or less.

The percentage of the phosphazene bond of Structure (ii) is more preferably in the range of 3 to 80 mol%, still more preferably in the range of 6 to 75 mol%.

The percentage of the phosphazene bond of Structure (iii) in the phosphazene bond-containing polymer containing the phosphazene bonds of Structures (ii) and (iii) is not limited. The percentage of the phosphazene bond

of Structure (iii) based on the total 100% of the phosphazene bonds in the phosphazene bond-containing polymer is preferably 5 to 99 mol%. The lower limit is more preferably 10 mol% or more, still more preferably 15 mol% or more, even more preferably 30 mol% or more. The upper limit is more preferably 87 mol% or less, still more preferably 84 mol% or less.

The percentage of the phosphazene bond of Structure (iii) is more preferably in the range of 10 to 87 mol%, still more preferably in the range of 15 to 84 mol%.

The percentages of the phosphazene bonds of Structures (iv) and (i) in the phosphazene bond-containing polymer containing the phosphazene bonds of Structures (ii) and (iii) are not limited. The amount of the phosphazene bonds of Structures (iv) and (i) based on the total 100 mol% of the phosphazene bonds in the phosphazene bond-containing polymer is preferably 0 to 99 mol% (99 mol% or less), more preferably 95 mol% or less, still more preferably 90 mol% or less, even more preferably 85 mol% or less.

Preferred embodiments of the phosphazene bond-containing polymer essentially containing the phosphazene bond of Structure (i) include a phosphazene bond-containing polymer according to Embodiment (1), which is described later.

Preferred embodiments of the phosphazene bond-containing polymer essentially containing the phosphazene bonds of Structures (ii) and (iii) include a phosphazene bond-containing polymer according to Embodiment (2), which is described below.

In the phosphazene bond-containing polymer of the present invention, the phosphazene structure may be a chain structure or a cyclic structure. A polymer containing only a chain structure as the phosphazene structure is referred to as a chain-phosphazene bond-containing polymer, and a polymer containing a cyclic structure as the phosphazene structure is referred to as a cyclic-phosphazene bond-containing polymer. In a preferred embodiment of the present invention, the phosphazene bond-containing polymer contains a cyclic-phosphazene structure. The cyclic-phosphazene bond-containing polymer encompasses a polymer containing only a cyclic structure as the phosphazene structure and a polymer containing both a cyclic structure and a chain structure as the phosphazene structures.

Herein, when the phosphazene structure is a cyclic structure, the structure is also referred to as a phosphazene ring. The cyclic-phosphazene bond-containing polymer (Embodiment (3)) and the chain-phosphazene bond-containing polymer (Embodiment (4)) are described in detail below.

<Hydrocarbon group bonded to nitrogen atom>

The following describes a hydrocarbon group bonded to the nitrogen atom constituting a phosphazene bond in the phosphazene bond-containing polymer of the present invention.

The hydrocarbon group may be a monovalent or multivalent hydrocarbon group.

Examples of the monovalent hydrocarbon group include an aliphatic hydrocarbon group such as an alkyl group, an alkenyl group, or an aralkyl group and an aromatic hydrocarbon group such as an aryl group. The aliphatic hydrocarbon group may be a saturated hydrocarbon group, an unsaturated hydrocarbon group, or an aralkyl group. The aliphatic hydrocarbon group may have a chain structure (chain aliphatic hydrocarbon group) or a cyclic structure (cyclic aliphatic hydrocarbon group). The aliphatic hydrocarbon group may be a hydrocarbon group including two or more of these hydrocarbon groups.

In particular, the monovalent hydrocarbon group is preferably a C1-C18 saturated aliphatic hydrocarbon group, a C2-C18 unsaturated aliphatic hydrocarbon group, a C6-C18 aromatic hydrocarbon group, or a C7-C17 aralkyl group, more preferably a C1-C18 saturated aliphatic hydrocarbon group. Preferred among these is a C1-C18 saturated aliphatic hydrocarbon group, with an alkyl group being more preferred.

The alkyl group may have a chain structure or a cyclic structure. When the alkyl group has a chain structure, the carbon number of the alkyl group is preferably 1 to 18, more preferably 1 to 12, still more preferably 1 to 6, even more preferably 1 to 3. Particularly preferably, the carbon number is 1, in other words, the alkyl group is a methyl group.

When the alkyl group has a cyclic structure, the carbon number of the alkyl group is preferably 3 to 18, more preferably 4 to 12, even more preferably 5 to 8. Particularly preferably, the carbon number is 6, in other words, the alkyl group is a cyclohexyl group.

Examples of the multivalent hydrocarbon group include those having a structure in which one or more hydrogen atoms are removed from any of the monovalent hydrocarbon groups, with the number of hydrogen atoms removed corresponding to the valence of the multivalent hydrocarbon group. Preferred among these is a group provided by removing one or more hydrogen atoms from any of the monovalent hydrocarbon groups, with the number of hydrogen atoms removed corresponding to the valence of the multivalent hydrocarbon group. The multivalent hydrocarbon group is preferably a divalent hydrocarbon group. The divalent hydrocarbon group may be bonded to the nitrogen atom constituting a phosphazene bond as well as to a structure different from the phosphazene structures in the phosphazene bond-containing polymer of the present invention.

The hydrocarbon group may have a substituent. The substituent may have any valence, and is usually a monovalent or divalent substituent.

Preferred examples of the monovalent substituent include a monovalent organic group, halogen atoms, a hydroxy group, an alkyl ether, an aryl ether, and an acyl group.

Preferred among halogen atoms are a chlorine atom, a bromine atom, and a fluorine atom, with a fluorine atom being more preferred.

Examples of the monovalent organic group which the hydrocarbon group has include a C1-C18 saturated aliphatic hydrocarbon group, a C2-C18 unsaturated aliphatic hydrocarbon group, a C6-C18 aromatic hydrocarbon group, and a C7-C17 aralkyl group. Preferred among these is a C1-C18 saturated aliphatic hydrocarbon group.

Examples of the divalent substituent which the hydrocarbon group has include an oxygen atom, a sulfur atom, and those having a structure in which one hydrogen atom is further removed from any of the monovalent substituents. The divalent substituent may be bonded to the hydrocarbon group bonded to the nitrogen atom constituting a phosphazene bond as well as to a structure different from the phosphazene structures in the phosphazene bond-containing polymer of the present invention.

<Nitrogen-containing group bonded to phosphorus atom>

The following describes a nitrogen-containing group bonded to the phosphorus atom constituting a phosphazene bond in the phosphazene bond-containing polymer of the present invention.

The nitrogen-containing group is not limited as long as it is an organic group containing nitrogen. The nitrogen-containing group is preferably bonded to the phosphorus atom (P) constituting a phosphazene bond via the nitrogen atom of the nitrogen-containing group.

Examples of the nitrogen-containing group include an amide residue, an imide residue, and an amine residue. Here, the amine residue refers to a structure in which one hydrogen atom is removed from the nitrogen atom constituting an amine. The same applies to an amide residue and an imide residue. Of these, an amine residue is preferred.

The amine residue is preferably a primary amine residue or a secondary amine residue, more preferably a secondary amine residue.

Preferably, the amine residue is one in which the organic group bonded to the nitrogen atom constituting the amine residue is a hydrocarbon group, or one in which the organic group bonded to the nitrogen atom constituting the amine residue contains a hydrocarbon group.

In the amine residue, the organic group bonded to the nitrogen atom constituting the amine residue may be chain or cyclic. When the organic group is chain, it may be heterocyclic. Moreover, the nitrogen atom and the organic group constituting the amine residue may form a cyclic structure.

The amine residue may be either an aliphatic amine residue or an aromatic amine residue, and is preferably an aliphatic amine residue. The aliphatic amine may be either a chain aliphatic amine or a cyclic aliphatic amine. The chain aliphatic amine is preferably diethylamine, cyclohexylmethylamine, or the like. The cyclic aliphatic amine is preferably a heterocyclic aliphatic amine such as pyrrolidine, piperidine, morpholine, or azepane. The heterocyclic aliphatic amine is preferably one containing, as a heteroelement in addition to carbon constituting the heterocyclic ring, an element different from the nitrogen atom constituting the amino group. Preferred examples of the element include oxygen and sulfur. When the element is oxygen, the amine is preferably morpholine or phenoxazine, for example. The aromatic amine is preferably a heterocyclic aromatic amine such as pyridine, pyrrole, indole, or carbazole.

The amine residue may be a residue of a compound containing only one amino group in the molecule (monoamine) or a residue of a compound containing two or more amino groups (polyamine).

In the case of a monoamine, a group provided by removing a hydrogen atom from the single amino group in the structure (amino group residue) is bonded as a nitrogen-containing group to a phosphorus atom.

In the case of a polyamine, at least one group provided by removing a hydrogen atom from any of the multiple amino groups in the structure (amino group residue) is bonded as a nitrogen-containing group to a phosphorus atom. The multiple amino group residues in the structure of the polyamine may be bonded to a phosphorus atom(s) as nitrogen-containing groups. The amino group residues may be bonded to a structure(s) different from the phosphazene structures in the phosphazene bond-containing polymer of the present invention. When the multiple amino group residues in the polyamine structure are bonded to a phosphorus atom(s), two or more amino group residues in the polyamine molecule may be bonded to the same phosphorus atom or to different phosphorus atoms.

Preferably, the nitrogen-containing group is represented by the following formula (B-1):

$$NR^{b1}{}_{n} \qquad \text{(B-1)}$$

wherein n is 1 or 2; when n is 2, $R^{b1}$s are each independently a hydrogen atom or an organic group containing an optionally substituted monovalent or multivalent hydrocarbon group; when n is 1, $R^{b1}$ is an organic group containing an optionally substituted multivalent hydrocarbon group.

When n is 2 in the formula (B-1), two $R^{b1}$s are preferably optionally substituted monovalent or multivalent

hydrocarbon groups. Two $R^{b1}$s may be the same as or different from each other.

Hereinafter, a nitrogen-containing group represented by the formula (B-1) where n is 1 and a nitrogen-containing group represented by the formula (B-1) where n is 2 are respectively sometimes referred to as a nitrogen-containing group (b1) and a nitrogen-containing group (b2). A mere "nitrogen-containing group" refers to both, unless otherwise stated.

An organic group ($R^{b1}$) containing an optionally substituted multivalent hydrocarbon group in the nitrogen-containing group (b1) and an organic group ($R^{b1}$) containing an optionally substituted monovalent or multivalent hydrocarbon group in the nitrogen-containing group (b2) are respectively sometimes referred to as an organic group (b1) and an organic group (b2).

The nitrogen-containing group represented by the formula (B-1) preferably has a structure in which a carbon atom constituting the hydrocarbon group is bonded to the nitrogen atom constituting the nitrogen-containing group.

The nitrogen-containing group (b1) is represented by the formula (B-1) where n is 1, and $R^{b1}$ is an organic group (b1) (an organic group containing an optionally substituted multivalent hydrocarbon group).

In the nitrogen-containing group (b1), two carbon atoms of the hydrocarbon group in the organic group (b1) are bonded to the nitrogen atom in the formula (B-1). These carbon atoms bonded to the nitrogen atom may be derived from the same hydrocarbon group in the organic group (b1), or when the organic group (b1) contains two or more identical or different hydrocarbon groups, these carbon atoms bonded to the nitrogen atom may be derived from the different hydrocarbon groups.

The organic group (b1) may be any one containing a hydrocarbon group. In a preferred embodiment of the organic group (b1), the organic group (b1) is a divalent hydrocarbon group. In this case, the organic group (b1) is more preferably an unsubstituted divalent hydrocarbon group.

The organic group (b1) may be a group in which the two or more identical or different hydrocarbon groups are bonded to each other via specific linking groups. In this case, the organic group (b1) contains two or more hydrocarbon groups. Preferred examples of the linking group include a -O- (ether bond), -S- (thioether bond), - C(=O)-O- (ester bond), and -C(=O)-S- (thioester bond). More preferred among these are an ether bond and a thioether bond. In the ester bond or the thioester bond, - C(=O)- is a carbonyl structure, and the ester bond and the thioester bond can also be expressed as -COO- and -COS-, respectively. The same applies hereinafter.

The organic group (b1) may constitute two or more different nitrogen-containing groups via a hydrocarbon group(s) in the organic group (b1). In this case, these nitrogen-containing groups may be bonded to a phosphorus atom in one phosphazene structure or may be bonded to phosphorus atoms in different phosphazene structures.

As described above, when the organic group (b1) constitutes another nitrogen-containing group in addition to the nitrogen-containing group containing the nitrogen atom in the formula (B-1), the another nitrogen-containing group has a structure in which a carbon atom constituting the hydrocarbon group in the organic group (b1) is bonded to a nitrogen atom. When the organic group (b1) contains two or more hydrocarbon groups and the hydrocarbon groups constitute two or more nitrogen-containing groups as described above, the carbon atoms bonded to the nitrogen atoms of the nitrogen-containing groups may be derived from the same hydrocarbon group or different hydrocarbon groups.

When the organic group (b1) constituting the nitrogen-containing group (b1) constitutes another nitrogen-containing group in addition to the nitrogen-containing group containing the nitrogen atom in the formula (B-1), the another nitrogen-containing group may be the nitrogen-containing group (b1) or (b2). In other words, the organic group constituting the another nitrogen-containing group may be the organic group (b1) or (b2).

In a preferred embodiment of the case where the organic group constituting another nitrogen-containing group is the organic group (b1), the organic group (b1) has only one hydrocarbon group, and two carbon atoms at one end of the hydrocarbon group are bonded to the nitrogen atom in the formula (B-1), and two carbon atoms at the other end of the hydrocarbon group are bonded to another nitrogen atom, whereby the group represented by the formula (B-1) has a structure in which two nitrogen-containing groups are bonded via the hydrocarbon group. In this case, the hydrocarbon group is a tetravalent hydrocarbon group.

In a preferred embodiment of the case where the organic group constituting another nitrogen-containing group is the organic group (b2), the organic group (b1) has only one hydrocarbon group, and two carbon atoms at one end of the hydrocarbon group are bonded to the nitrogen atom in the formula (B-1), and one carbon atom at the other end of the hydrocarbon group is bonded to another nitrogen atom, whereby the group represented by the formula (B-1) has a structure in which two nitrogen-containing groups are bonded via the hydrocarbon group. In this case, the hydrocarbon group is a trivalent hydrocarbon group.

When the organic group (b1) constituting the nitrogen-containing group (b1) constitutes another nitrogen-containing group in addition to the nitrogen-containing group containing the nitrogen atom in the formula (B-1), the organic group (b1) may be bonded to a different structure in the phosphazene bond-containing polymer of the present invention, other than the nitrogen-containing group. The organic group (b1) may be bonded to the different structure via a carbon atom constituting the hydrocarbon group in the organic group (b1), or via part of the substituent.

The nitrogen-containing group (b2) is represented by the formula (B-1) where n is 2, and each $R^{b1}$ is a hydrogen atom or an organic group (b2) (an organic group containing an optionally substituted monovalent or multivalent

hydrocarbon group). Each organic group (b2) is bonded to the nitrogen atom in the formula (B-1) via one carbon atom constituting the hydrocarbon group in the organic group (b2). In the nitrogen-containing group (b2), to the nitrogen atom in the formula (B-1) may be bonded one organic group (b2) or two or more organic groups (b2).

The nitrogen-containing group (b2) contains at least one organic group (b2). Preferably, two $R^{b1}$s are each the organic group (b2). The organic group (b2) is preferably a hydrocarbon group, more preferably an unsubstituted hydrocarbon group.

The organic group (b2) may be a group in which the two or more identical or different hydrocarbon groups are bonded to one another with specific linking groups. Preferred examples of the linking group include a -O-(ether bond), -S- (thioether bond), -C(=O)-O- (ester bond), -C(=O)-S- (thioester bond), -S(=O)- (sulfoxide bond), and - $S(=O)_2$- (sulfonyl bond). More preferred among these are an ether bond and a sulfonyl bond.

The organic group (b2) constitutes a nitrogen-containing group in such a way that one carbon atom constituting the hydrocarbon group in the organic group (b2) is bonded to the nitrogen atom in the formula (B-1). The organic group (b2) may also constitute another nitrogen-containing group in addition to the nitrogen-containing group containing the nitrogen atom in the formula (B-1). In other words, the organic group (b2) may constitute the nitrogen-containing group (b2) containing the nitrogen atom in the formula (B-1) and a nitrogen-containing group containing another nitrogen atom different from the nitrogen atom in the formula (B-1), at the same time. In a preferred embodiment of this case, the organic group (b2) consists of one hydrocarbon group, and one carbon atom at one end of the hydrocarbon group is bonded to the nitrogen atom in the formula (B-1) and one carbon atom at the other end of the hydrocarbon group is bonded to another nitrogen atom, whereby the group represented by the formula (B-1) has a structure in which two nitrogen-containing groups are linked by a hydrocarbon group. In this case, the hydrocarbon group is a divalent hydrocarbon group.

Thus, when the nitrogen-containing group (b2) constitutes two or more nitrogen-containing groups, these nitrogen-containing groups may be bonded to the same phosphorus atom, to a phosphorus atom(s) in one phosphazene structure, or to phosphorus atoms in different phosphazene structures.

As described above, when the organic group (b2) constitutes another nitrogen-containing group in addition to the nitrogen-containing group containing the nitrogen atom in the formula (B-1), a carbon atom constituting the hydrocarbon group in the organic group (b2) is preferably bonded to the nitrogen atom in the another nitrogen-containing group. When the organic group (b2) contains two or more hydrocarbon groups as described above, and the hydrocarbon groups constitute two or more nitrogen-containing groups, the carbon atoms bonded to the nitrogen atoms of the nitrogen-containing groups may be derived from the same hydrocarbon group or different hydrocarbon groups.

When the organic group (b2) constituting the nitrogen-containing group (b2) constitutes another nitrogen-containing group in addition to the nitrogen-containing group containing the nitrogen atom in the formula (B-1), the another nitrogen-containing group may be the nitrogen-containing group (b1) or (b2). In other words, the organic group constituting the another nitrogen-containing group may be the organic group (b1) or (b2).

The organic group (b2) may be bonded to a structure different from the phosphazene structures in the phosphazene bond-containing polymer of the present invention, other than the nitrogen-containing group. The organic group (b2) may be bonded to the different structure via a carbon atom constituting the hydrocarbon group, or via part of the substituent.

The following describes the hydrocarbon group(s) constituting the nitrogen-containing group (including the nitrogen-containing groups (b1) and (b2)).

Examples of the monovalent hydrocarbon group include an aliphatic hydrocarbon group such as alkyl, alkenyl, or aralkyl group and an aromatic hydrocarbon group such as an aryl group. The aliphatic hydrocarbon group may be a saturated hydrocarbon group, an unsaturated hydrocarbon group, or an aralkyl group. The aliphatic hydrocarbon group may have a chain structure (aliphatic chain hydrocarbon group) or a cyclic structure (aliphatic cyclic hydrocarbon group). The aliphatic hydrocarbon group may be a hydrocarbon group including two or more of these hydrocarbon groups.

In particular, the monovalent hydrocarbon group is preferably a C1-C18 saturated aliphatic hydrocarbon group, a C2-C18 unsaturated aliphatic hydrocarbon group, a C6-C18 aromatic hydrocarbon group, or a C7-C17 aralkyl group, more preferably a C1-C18 saturated aliphatic hydrocarbon group. Preferred among these is a C6-C18 saturated aliphatic cyclic hydrocarbon group (cycloalkyl group).

Examples of the divalent hydrocarbon group include those having a structure in which one hydrogen atom is removed from any of the monovalent hydrocarbon groups described above. Examples of the divalent hydrocarbon group include the same hydrocarbon groups described as examples of the monovalent hydrocarbon group, except that they are divalent. The divalent hydrocarbon group may be an aliphatic hydrocarbon group or an aromatic hydrocarbon group, a saturated hydrocarbon group or an unsaturated hydrocarbon group; may have a chain structure or a cyclic structure; and may be a hydrocarbon group including two or more of these hydrocarbon groups in combination.

In particular, the divalent hydrocarbon group is preferably a C1-C18 saturated aliphatic hydrocarbon group, a C2-C18 unsaturated aliphatic hydrocarbon group, a C6-C18 aromatic hydrocarbon group, or a C7-C17 aralkyl group, more preferably a C1-C18 saturated aliphatic hydrocarbon group, still more preferably a C2-C12 saturated aliphatic chain hydrocarbon group, particularly preferably a C4-C7 saturated aliphatic chain hydrocarbon group.

Preferred the trivalent or higher valent hydrocarbon group are the same as those of the divalent hydrocarbon group described above, except that the number of hydrogen atoms removed from hydrocarbon group varies depending on the valence.

Each hydrocarbon group in the organic group (b1) and the organic group (b2) may have a substituent. Preferred examples of the substituent include halogen atoms, a hydroxy group, a carboxy group, an amino group, a mercapto group, an amide group, an ether group, an ester group, and a thioether group. Preferred among halogen atoms are a chlorine atom, a bromine atom, and a fluorine atom, with a fluorine atom being preferred.

As described above, the substituent may be bonded to the hydrocarbon group constituting the nitrogen-containing group as well as to another phosphazene bond or a structure different from the phosphazene structures in the phosphazene bond-containing polymer of the present invention.

<Group not containing nitrogen, the group being bonded to phosphorus atom>

The following describes a group not containing nitrogen, the group being bonded to the phosphorus atom constituting a phosphazene bond.

The group not containing nitrogen may have any valence, and is usually a monovalent or divalent group. The group not containing nitrogen is not limited. Preferred examples of the monovalent group not containing nitrogen include a hydroxy group, halogen atoms, a hydrocarbon group, a $OR^{01}$ group, a $C(=O)R^{02}$ group, and a $SR^{03}$ group.

Examples of the divalent group not containing nitrogen include those having a structure in which one hydrogen atom is further removed from any of monovalent groups (e.g., a hydrocarbon group, a $OR^{01}$ group, a $C(=O)R^{02}$ group, a $SR^{03}$ group), a group including two of the same or different monovalent groups in combination, an oxygen atom, and a sulfur atom. Preferred among these are those having a structure in which one hydrogen atom is further removed from any of the monovalent groups (e.g., a hydrocarbon group, a $OR^{01}$ group, a $C(=O)R^{02}$ group, a $SR^{03}$ group) and a group including two of the same or different monovalent groups in combination.

Here, $R^{01}$, $R^{02}$, and $R^{03}$ are each independently a hydrocarbon group.

When the group not containing nitrogen, the group being bonded to the phosphorus atom, is a hydrocarbon group, the hydrocarbon group is not limited. Examples thereof include an aliphatic hydrocarbon group such as an alkyl group, an alkenyl group, or an aralkyl group and an aromatic hydrocarbon group such as an aryl group. The aliphatic hydrocarbon group may be a saturated hydrocarbon group, an unsaturated hydrocarbon group, or an aralkyl group, and may have a chain structure (an acyclic aliphatic hydrocarbon group) or a cyclic structure (a cyclic aliphatic hydrocarbon group). The hydrocarbon group may be one including two or more of these hydrocarbon groups in combination.

In particular, the hydrocarbon group is preferably a C1-C18 saturated aliphatic hydrocarbon group, a C2-C18 unsaturated aliphatic hydrocarbon group, a C6-C18 aromatic hydrocarbon group, or a C7-C17 aralkyl group, more preferably a C6-C18 aromatic hydrocarbon group.

$R^{01}$, $R^{02}$, and $R^{03}$ are each independently a hydrocarbon group. Preferred embodiments thereof are the same as those for the above-described hydrocarbon groups.

Preferred among halogen atoms are a chlorine atom, a bromine atom, and a fluorine atom, with a fluorine atom being preferred.

An example of the group including two of the same or different monovalent groups (e.g., a hydrocarbon group, a $OR^{01}$ group, a $C(=O)R^{02}$ group, a $SR^{03}$ group) in combination is a group in which these monovalent groups are bonded to each other via their respective hydrocarbon groups. In this case, two same groups, for example, two $OR^{01}$ groups, may be combined into a group (a $-OR^{01}-R^{01}O-$ group, where the two hydrocarbon groups represented by $R^{01}$ may be the same as or different from each other), or two different groups may be combined into a group.

The divalent group may be bonded to the phosphorus atom constituting Structure (iv) described above as well as to a structure different from the phosphazene structures in the phosphazene bond-containing polymer of the present invention, for example.

The phosphazene bond-containing polymer of the present invention may have a phosphazene structure in the main chain, in a side chain, or in both of these. When the polymer has a phosphazene structure in the main chain, the main chain of the polymer may consist of phosphazene structures, or may include phosphazene structures and linking groups therebetween connecting the phosphazene structures. Preferably, the main chain includes phosphazene structures and linking groups therebetween connecting the phosphazene structures. In this case, the phosphazene bond-containing polymer contains a repeating unit including a phosphazene structure and a linking group. An example of the linking group is a linking group Z1 of Embodiment (3) described later.

When the polymer has a phosphazene structure in a side chain, the repeating unit may have any structure. Preferably, the repeating unit has a structure in which the phosphazene structure is bonded to a side chain of the hydrocarbon group.

The following describes preferred embodiments (e.g., (1) to (4)) of the phosphazene bond-containing polymer of the present invention.

The various constituents and the preferred embodiments of the constituents of the phosphazene bond-containing polymer of the present invention described above are also applied to the embodiments (e.g., (1) to (4)) unless otherwise stated.

Preferred embodiments of the phosphazene bond-containing polymer of the present invention also include polymers having structures in which any of the embodiments and the preferred embodiments of the embodiments herein are combined.

<Phosphazene bond-containing polymer according to Embodiment (1)>

Preferred embodiments of the phosphazene bond-containing polymer of the present invention include a phosphazene bond-containing polymer containing a structural unit (A-1) represented by the following formula (A-1) (Embodiment (1)).

[Chem. 1]

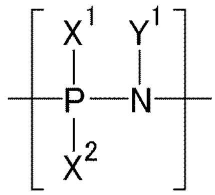

(A-1)

In the formula, $Y^1$ is a hydrocarbon group; $X^1$ and $X^2$ are each independently at least one selected from the group consisting of a hydroxy group, halogen atoms, a hydrocarbon group, a $OR^{11}$ group, a $C(=O)R^{12}$ group, a $SR^{13}$ group, and a nitrogen-containing group, with at least one of $X^1$ or $X^2$ being a nitrogen-containing group; the hydrocarbon group, the $OR^{11}$ group, the $C(=O)R^{12}$ group, the $SR^{13}$ group, and the nitrogen-containing group are each optionally a monovalent group, or optionally a divalent group bonded to the hydrocarbon group for $Y^1$, bonded to a phosphazene structure different from the phosphazene structure of the structural unit (A-1), or bonded to a structure that is not a phosphazene structure, in the phosphazene bond-containing polymer; $X^1$ and $X^2$ are optionally bonded to each other; $R^{11}$, $R^{12}$, and $R^{13}$ are each independently a hydrocarbon group; and the phosphorus atom P or the nitrogen atom N in the formula is optionally positively charged.

In other words, the phosphazene bond-containing polymer according to Embodiment (1) contains the structural unit (A-1) represented by the formula (A-1) as a phosphazene bond. The phosphazene bond-containing polymer according to Embodiment (1) may contain one or more structural units (A-1) in the structure. The structural unit (A-1) may be present as an entire repeating unit or as part of a repeating unit.

In the formula (A-1), $Y^1$ is a hydrocarbon group. The hydrocarbon group and preferred embodiments thereof are the same as the hydrocarbon group bonded to a nitrogen atom in the phosphazene bond-containing polymer of the present invention and preferred embodiments thereof.

The nitrogen-containing group in the formula (A-1) and preferred embodiments thereof are the same as the nitrogen-containing group bonded to a phosphorus atom in the phosphazene bond-containing polymer of the present invention and preferred embodiments thereof.

Non-limiting examples of the hydrocarbon group for $X^1$ and $X^2$ include an aliphatic hydrocarbon group such as an alkyl group, an alkenyl group, or an aralkyl group and an aromatic hydrocarbon group such as an aryl group. The aliphatic hydrocarbon group may be a saturated hydrocarbon group, an unsaturated hydrocarbon group, or an aralkyl group, and may have a chain structure (an acyclic aliphatic hydrocarbon group) or a cyclic structure (a cyclic aliphatic hydrocarbon group). The aliphatic hydrocarbon group may be a hydrocarbon group including two or more of these hydrocarbon groups.

Preferred among these are a C1-C18 saturated aliphatic hydrocarbon group, a C2-C18 unsaturated aliphatic hydrocarbon group, a C6-C18 aromatic hydrocarbon group, and a C7-C17 aralkyl group. Preferred among these is a C6-C18 aromatic hydrocarbon group.

$R^{11}$, $R^{12}$, and $R^{13}$ are each independently a hydrocarbon group. preferred embodiments thereof are the same as those of the hydrocarbon group for $X^1$ and $X^2$.

Preferred among halogen atoms are a chlorine atom, a bromine atom, and a fluorine atom, with a fluorine atom being preferred.

When the hydrocarbon group, the $OR^{11}$ group, the $C(=O)R^{12}$ group, the $SR^{13}$ group, and the nitrogen-containing group are divalent groups, these groups have the structures provided by removing one hydrogen atom from a monovalent hydrocarbon group, a monovalent $OR^{11}$ group, a monovalent $C(=O)R^{12}$ group, a monovalent $SR^{13}$ group, and a monovalent nitrogen-containing group, respectively, or are each a group including two of the same or different monovalent groups in combination.

Although not shown in the formula (A-1), the phosphorus atom P or the nitrogen atom N in the formula may be positively charged.

The description of the phosphazene bond-containing polymer of the present invention describes a condition for forming a cationic polymer. Since the phosphorus atom in the structural unit represented by the formula (A-1) satisfies this condition, the phosphazene bond-containing polymer according to Embodiment (1) is a cationic polymer, and has excellent ion conductivity and excellent anion exchange properties. Thus, the polymer according to Embodiment (1) is a cationic polymer.

The generated positive charge may be localized on P (phosphorus atom) adjacent to N (nitrogen atom) to which $Y^1$ is bonded (e.g., P in the formula), localized on N (nitrogen atom) to which $Y^1$ is bonded, or delocalized in a phosphazene structure containing the P (phosphorus atom) or the N (nitrogen atom).

The phosphazene bond-containing polymer according to Embodiment (1) may have a counter anion. Materials, content, and preferred embodiments of the counter anion are as described in the above description of the phosphazene bond-containing polymer of the present invention.

The phosphazene bond-containing polymer according to Embodiment (1) may contain a structural unit other than the structural unit (A-1) as a phosphazene bond. For example, the phosphazene bond-containing polymer according to Embodiment (1) may further contain a structural unit (A-2) represented by the formula (A-2) or a structural unit (A-3) represented by the formula (A-3), which are described later, or a structural unit (A-4) represented by the following formula (A-4). Preferred embodiments of the polymer of the present invention include such a phosphazene bond-containing polymer.

[Chem. 2]

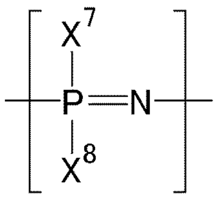

(A-4)

In the formula (A-4), $X^7$ and $X^8$ are each independently at least one selected from the group consisting of a hydroxy group, halogen atoms, a hydrocarbon group, a $OR^{41}$ group, a $C(=O)R^{42}$ group, and a $SR^{43}$ group; the hydrocarbon group, the $OR^{41}$ group, the $C(=O)R^{42}$ group, and the $SR^{43}$ group each may be a monovalent group, or may be a divalent group bonded to a phosphazene structure different from the phosphazene structure represented by the structural unit (A-4) or to a structure that is not a phosphazene structure, in the phosphazene bond-containing polymer; $X^7$ and $X^8$ may be bonded to each other; and $R^{41}$, $R^{42}$, and $R^{43}$ are each independently a hydrocarbon group.

When the phosphazene bond-containing polymer according to Embodiment (1) contains the structural unit (A-2), it may contain one or more structural units (A-2) in the structure. The structural unit (A-2) may be present as an entire repeating unit or as part of a repeating unit. The same applies to the structural unit (A-3) and the structural unit (A-4).

Each of $X^7$ and $X^8$ in the formula (A-4) is preferably a $OR^{41}$ group.

Each of $R^{41}$, $R^{42}$, and $R^{43}$ is a hydrocarbon group. Preferred embodiments thereof are the same as those for $R^{11}$ in the formula (A-1) and the like.

Preferred embodiments of the hydrocarbon group for $X^7$ and $X^8$ are the same as those of the hydrocarbon group for $X^1$ and $X^2$ in the formula (A-1).

Of the nitrogen atoms constituting the phosphazene bonds in the phosphazene bond-containing polymer according to Embodiment (1), the amount of nitrogen atoms to which hydrocarbon groups are bonded is not limited. From the viewpoint of easily achieving excellent ionic conductivity, the number of nitrogen atoms to which hydrocarbon groups are bonded is preferably 1/10 or more, more preferably 2/15 or more, particularly preferably 1/6 or more relative to the total number of nitrogen atoms constituting the phosphazene bonds, which is taken as 1. The upper limit is preferably 2/3 or less, more preferably 3/5 or less, still more preferably 8/15 or less, but is not limited thereto.

The number of nitrogen atoms to which hydrocarbon groups are bonded is preferably in the range of 1/10 to 2/3, more preferably in the range of 2/15 to 3/5, more preferably in the range of 2/15 to 3/5, still more preferably in the range of 1/6 to 8/15 relative to the total number of nitrogen atoms constituting the phosphazene bonds, which is taken as **1.**

Of the phosphorus atoms constituting the phosphazene bonds in the phosphazene bond-containing polymer according to Embodiment (1), the amount of phosphorus atoms to which nitrogen-containing groups are bonded is not limited. From the viewpoint of easily achieving excellent ionic conductivity, the number of phosphorus atoms to which nitrogen-containing groups are bonded is preferably 1/3 or more, more preferably 2/3 or more, particularly preferably 1 or more relative to the total number of phosphorus atoms constituting the phosphazene bonds, which is taken as **1.** The upper limit is preferably 10 or less, but is not limited thereto.

The number of phosphorus atoms to which nitrogen-containing groups are bonded is preferably in the range of 1/3 to 10, more preferably in the range of 2/3 to 10, still more preferably in the range of 1 to 10 relative to the total number of phosphorus atoms constituting the phosphazene bonds, which is taken as **1.**

The percentage of the amount of the structural unit (A-1) in the phosphazene bond-containing polymer according to Embodiment (1) is not limited. The amount of the structural unit (A-1) is preferably 1 to 100 mol% based on 100 mol% of the structural units constituting the phosphazene structures in the phosphazene bond-containing polymer. The lower limit is more preferably 3 mol% or more, still more preferably 6 mol% or more, even more preferably 9 mol% or more, particularly preferably more than 9 mol%. Also, the upper limit is more preferably 90 mol% or less, still more preferably 75 mol% or less, particularly preferably 60 mol% or less.

The amount of the structural unit (A-1) based on 100 mol% of the structural units constituting the phosphazene structures in the phosphazene bond-containing polymer is preferably in the range of 3 to 90 mol%, more preferably in the range of 6 to 75 mol%, still more preferably in the range of 9 to 60 mol%, particularly preferably in the range of more than 9 mol% to 60 mol%.

The percentages of the structural units (A-2), (A-3), and (A-4) in the phosphazene bond-containing polymer according to Embodiment (1) are not limited. The total amount of the structural units (A-2), (A-3), and (A-4) based on 100 mol% of the structural units constituting the phosphazene structures in the phosphazene bond-containing polymer is preferably 0 mol% or more and 99 mol% or less. The upper limit is more preferably 97 mol% or less, still more preferably 94 mol% or less, even more preferably 91 mol% or less, particularly preferably less than 91 mol%. Also, the lower limit is more preferably 10 mol% or more, still more preferably 25 mol% or more, even more preferably 40 mol% or more.

The total amount of the structural units (A-2), (A-3), and (A-4) based on 100 mol% of the structural units constituting the phosphazene structures in the phosphazene bond-containing polymer is preferably in the range of 0 to 99 mol%, more preferably in the range of 10 to 97 mol%, still more preferably in the range of 25 to 94 mol%, even more preferably in the range of 40 to 91 mol%, particularly preferably in the range of 40 to less than 91 mol%.

<Phosphazene bond-containing polymer according to Embodiment (2)>

Preferred embodiments of the phosphazene bond-containing polymer of the present invention include a phosphazene bond-containing polymer containing the structural unit (A-2) represented by the following formula (A-2) and the structural unit (A-3) represented by the following formula (A-3) (Embodiment (2)).

[Chem. 3]

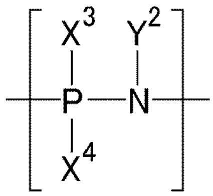

(A-2)

In the formula, $Y^2$ is a hydrocarbon group; $X^3$ and $X^4$ are each independently selected from the group consisting of a hydroxy group, halogen atoms, a hydrocarbon group, a $OR^{21}$ group, a $C(=O)R^{22}$ group, and a $SR^{23}$ group; the hydrocarbon group, the $OR^{21}$ group, the $C(=O)R^{22}$ group, and the $SR^{23}$ group are each optionally a monovalent group, or optionally a divalent group bonded to the hydrocarbon group for $Y^2$, bonded to a phosphazene structure different from the phosphazene structure of the structural unit (A-2), or bonded to a structure that is not a phosphazene structure, in the phosphazene bond-containing polymer; $X^3$ and $X^4$ are optionally bonded to each other; $R^{21}$, $R^{22}$, and $R^{23}$ are each independently a hydrocarbon group; and the phosphorus atom P or the nitrogen atom N in the formula is optionally positively charged.

[Chem. 4]

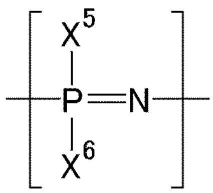

(A-3)

In the formula, $X^5$ and $X^6$ are each independently at least one selected from the group consisting of a hydroxy group, halogen atoms, a hydrocarbon group, a $OR^{31}$ group, a $C(=O)R^{32}$ group, a $SR^{33}$ group, and a nitrogen-containing

group, with at least one of $X^5$ or $X^6$ being a nitrogen-containing group; the hydrocarbon group, the $OR^{31}$ group, the $C(=O)R^{32}$ group, the $SR^{33}$ group, and the nitrogen-containing group are each optionally a monovalent group, or optionally a divalent group bonded to a phosphazene structure different from the phosphazene structure of the structural unit (A-3), or bonded to a structure that is not a phosphazene structure, in the phosphazene bond-containing polymer; $X^5$ and $X^6$ are optionally bonded to each other; and $R^{31}$, $R^{32}$, and $R^{33}$ are each independently a hydrocarbon group.

In other words, the phosphazene bond-containing polymer according to Embodiment (2) contains the structural unit (A-2) represented by the formula (A-2) and the structural unit (A-3) represented by the formula (A-3) as phosphazene bonds. The phosphazene bond-containing polymer according to Embodiment (2) may contain one or more structural units (A-2) in the structure. The structural unit (A-2) may be present as an entire repeating unit or as part of a repeating unit. The same applies to the structural unit (A-3).

$Y^2$ in the formula (A-2) is a hydrocarbon group. The hydrocarbon group and preferred embodiments thereof are the same as the hydrocarbon group bonded to a nitrogen atom described for the phosphene bond-containing polymer of the present invention and preferred embodiments thereof.

$X^3$ and $X^4$ are each independently at least one selected from the group consisting of a hydroxy group, halogen atoms, a hydrocarbon group, a $OR^{21}$ group, a $C(=O)R^{22}$ group, and a $SR^{23}$ group. Preferred among these is a $OR^{21}$ group.

Each of $R^{21}$, $R^{22}$, and $R^{23}$ is a hydrocarbon group. Preferred embodiments thereof are the same as those for $R^{11}$ in the formula (A-1) and the like.

Preferred embodiments of the hydrocarbon group for $X^3$ and $X^4$ are the same as those of the hydrocarbon group for $X^1$ and $X^2$ in the formula (A-1).

In the formula (A-3), $X^5$ and $X^6$ are each independently at least one selected from the group consisting of a hydroxy group, halogen atoms, a hydrocarbon group, a $OR^{31}$ group, a $C(=O)R^{32}$ group, a $SR^{33}$ group, and a nitrogen-containing group, and at least one of $X^5$ or $X^6$ is a nitrogen-containing group.

The nitrogen-containing group and preferred embodiments thereof are the same as the nitrogen-containing group bonded to a phosphorus atom described for the phosphazene bond-containing polymer of the present invention and preferred embodiments thereof.

Preferred embodiments of the groups and atoms for $X^5$ and $X^6$, other than the nitrogen-containing group, are the same as those for $X^1$ and $X^2$ in the formula (A-1).

Each of $R^{31}$, $R^{32}$, and $R^{33}$ is a hydrocarbon group. Preferred embodiments thereof are the same as those for $R^{11}$ in the formula (A-1) and the like.

Preferred embodiments of the hydrocarbon group for $X^5$ and $X^6$ are the same as those of the hydrocarbon group for $X^1$ and $X^2$ in the formula (A-1).

Although not shown in the formula (A-2), the phosphorus atom P or the nitrogen atom N in the formula may be positively charged. The positive charge may be localized on P (phosphorus atom) or N (nitrogen atom), or may be delocalized in the phosphazene structure containing the structural unit (A-2).

The description of the phosphazene bond-containing polymer of the present invention describes a condition for forming a cationic polymer. Since the phosphorus atom in the structural unit represented by the formula (A-2) satisfies this condition, the phosphazene bond-containing polymer according to Embodiment (2) is a cationic polymer, and has excellent ion conductivity and excellent anion exchange properties. Thus, the polymer according to Embodiment (2) is a cationic polymer.

The generated positive charge may be localized on P (phosphorus atom) adjacent to N (nitrogen atom) to which $Y^2$ is bonded (e.g., P in the formula), localized on N (nitrogen atom) to which $Y^2$ is bonded, or delocalized in a phosphazene structure containing the P (phosphorus atom) or a phosphazene structure containing the N (nitrogen atom).

The phosphazene bond-containing polymer according to Embodiment (2) may have a counter anion. Materials, content, and preferred embodiments of the counter anion are as described in the above description of the phosphazene bond-containing polymer of the present invention.

Of the nitrogen atoms constituting the phosphazene bonds in the phosphazene bond-containing polymer according to Embodiment (2), the amount of nitrogen atoms to which hydrocarbon groups are bonded is not limited. From the viewpoint of easily achieving excellent ionic conductivity, the number of nitrogen atoms to which hydrocarbon groups are bonded is preferably 1/10 or more, more preferably 2/15 or more, particularly preferably 1/6 or more relative to the total number of nitrogen atoms in the phosphazene bonds, which is taken as 1. The upper limit is preferably 2/3 or less, more preferably 3/5 or less, still more preferably 8/15 or less, but is not limited thereto.

The number of nitrogen atoms to which hydrocarbon groups are bonded is preferably in the range of 1/10 to 2/3, more preferably in the range of 2/15 to 3/5, more preferably in the range of 2/15 to 3/5, still more preferably in the range of 1/6 to 8/15 relative to the total number of nitrogen atoms constituting the phosphazene bonds, which is taken as **1.**

Of the phosphorus atoms constituting the phosphazene bonds in the phosphazene bond-containing polymer according to Embodiment (2), the amount of phosphorus atoms to which nitrogen-containing groups are bonded is not limited. From the viewpoint of easily achieving excellent ionic conductivity, the number of phosphorus atoms to which nitrogen-containing groups are bonded is preferably 1/3 or more, more preferably 2/3 or more, particularly preferably 1 or

more relative to the total number of phosphorus atoms in the phosphazene bonds, which is taken as 1. The upper limit is preferably 10 or less, but is not limited thereto.

The number of phosphorus atoms to which nitrogen-containing groups are bonded is preferably in the range of 1/3 to 10, more preferably in the range of 2/3 to 10, still more preferably in the range of 1 to 10 relative to the total number of phosphorus atoms in the phosphazene bonds, which is taken as 1.

The phosphazene bond-containing polymer according to Embodiment (2) may have a structural unit other than the structural units (A-2) and (A-3) as a phosphazene bond. For example, the phosphazene bond-containing polymer may further contain the structural unit (A-1) or the structural unit (A-4).

When the phosphazene bond-containing polymer according to Embodiment (2) contains the structural unit (A-1), it may contain one or more structural units (A-1) in the structure. The structural unit (A-1) may be present as an entire repeating unit or as part of a repeating unit. The same applies to the structural unit (A-4).

The percentages of the structural units (A-2) and (A-3) in the phosphazene bond-containing polymer according to Embodiment (2) are not limited. The total amount of the structural units (A-2) and (A-3) is preferably 1 to 100 mol% based on 100 mol% of the structural units constituting the phosphazene structures in the phosphazene bond-containing polymer. The lower limit is more preferably 5 mol% or more, still more preferably 10 mol% or more, even more preferably 15 mol% or more. The upper limit is more preferably 90 mol% or less.

The total amount of the structural units (A-2) and (A-3) based on 100 mol% of the structural units constituting the phosphazene structures in the phosphazene bond-containing polymer is preferably in the range of 1 to 100 mol%, more preferably in the range of 5 to 90 mol%, more preferably in the range of 10 to 90 mol%, still more preferably in the range of 15 to 90 mol%.

The percentage of the structural unit (A-2) in the phosphazene bond-containing polymer according to Embodiment (2) is not limited. The amount of the structural unit (A-2) is preferably 1 to 95 mol% based on 100 mol% of the structural units constituting the phosphazene structures in the phosphazene bond-containing polymer. The lower limit is more preferably 3 mol% or more, still more preferably 6 mol% or more, even more preferably 9 mol% or more. The upper limit is more preferably 80 mol% or less.

The amount of the structural unit (A-2) based on 100 mol% of the structural units constituting the phosphazene structures in the phosphazene bond-containing polymer is preferably in the range of 1 to 95 mol%, more preferably in the range of 3 to 80 mol%, still more preferably in the range of 6 to 75 mol%, even more preferably in the range of 9 to 60 mol%.

The percentage of the structural unit (A-3) in the phosphazene bond-containing polymer according to Embodiment (2) is not limited. The amount of the structural unit (A-3) is preferably 5 to 99 mol% based on 100 mol% of the structural units constituting the phosphazene structures in the phosphazene bond-containing polymer. The lower limit is more preferably 10 mol% or more, still more preferably 15 mol% or more, even more preferably 30 mol% or more. The upper limit is more preferably 87 mol% or less.

The amount of the structural unit (A-3) based on 100 mol% of the structural units constituting the phosphazene structures in the phosphazene bond-containing polymer is preferably in the range of 5 to 99 mol%, more preferably in the range of 10 to 87 mol%, still more preferably in the range of 15 to 84 mol%, even more preferably in the range of 30 to 81 mol%.

The percentages of the structural units (A-4) and (A-1) in the phosphazene bond-containing polymer according to Embodiment (2) are not limited. The total amount of the structural units (A-4) and (A-1) is preferably 0 to 99 mol% based on 100 mol% of the structural units constituting the phosphazene structures in the phosphazene bond-containing polymer. The amount is more preferably 95 mol% or less, still more preferably 90 mol% or less, even more preferably 85 mol% or less.

The total amount of the structural units (A-4) and (A-1) based on 100 mol% of the structural units constituting the phosphazene structures in the phosphazene bond-containing polymer is preferably in the range of 0 to 99 mol%, more preferably in the range of 0 to 95 mol%, still more preferably in the range of 0 to 90 mol%, even more preferably in the range of 0 to 85 mol%.

<Embodiment (3): Cyclic-phosphazene bond-containing polymer>

The following describes a cyclic-phosphazene bond-containing polymer as a preferred embodiment of the phosphazene bond-containing polymer of the present invention. The cyclic-phosphazene bond-containing polymer may be abbreviated as a ring-containing polymer.

The ring-containing polymer according to Embodiment (3) contains a cyclic structure (phosphazene ring) as a phosphazene structure. From the viewpoint of easy availability, the phosphazene ring in the ring-containing polymer of the present invention is preferably a four-, six-, or eight-membered ring, more preferably a six- or eight-membered ring, particularly preferably a six-membered ring.

The phosphazene ring refers to a ring consisting of phosphazene bonds. For example, a structure containing three phosphorus atoms and three nitrogen atoms which constitute a ring, in other words, a ring consisting of three

phosphazene bonds, is called a six-membered ring or (a phosphazene ring having) a six-membered ring structure.

A four-membered phosphazene ring refers to a cyclobisphosphazene structure as its basic structure. Also, a six-membered phosphazene ring refers to a cyclotriphosphazene structure, and an eight-membered phosphazene ring refers to a cyclotetraphosphazene structure.

Like the phosphazene bond-containing polymer of the present invention described above, the ring-containing polymer according to Embodiment (3) is a cationic polymer.

Preferred examples of the structures of the phosphazene bonds constituting the ring-containing polymer according to Embodiment (3) include the same structures as Structures (i) to (iv) described for the phosphazene bond-containing polymer of the present invention. An exemplary preferred embodiment of the ring-containing polymer is a structure containing in the molecule a phosphazene ring containing the phosphazene bond of Structure (i) and/or a phosphazene ring containing the phosphazene bond of Structure (ii) and a phosphazene ring containing the phosphazene bond of Structure (iii). In particular, the ring-containing polymer more preferably contains a phosphazene ring containing the phosphazene bond of Structure (i).

The ring-containing polymer containing a phosphazene ring containing the phosphazene bond of Structure (i) may further contain a phosphazene ring containing the phosphazene bond of Structure (ii), (iii), or (iv). The phosphazene rings containing the respective phosphazene bonds of Structure (ii), (iii), and (iv) may be the same as or different from each other, and may be the same as or different from the phosphazene ring containing the phosphazene bond of Structure (i). The percentages and preferred percentages of the phosphazene bonds of these embodiments are as described for the phosphazene bond-containing polymer of the present invention.

In the structure containing a phosphazene ring containing the phosphazene bond of Structure (ii) and a phosphazene ring containing the phosphazene bond of Structure (iii), the phosphazene ring containing the phosphazene bond of Structure (ii) and the phosphazene ring containing the phosphazene bond of Structure (iii) may be the same as or different from each other. The ring-containing polymer preferably contains a phosphazene ring containing the phosphazene bond of Structure (ii) and the phosphazene bond of Structure (iii).

The ring-containing polymer containing a phosphazene ring containing the phosphazene bond of Structure (ii) and a phosphazene ring containing the phosphazene bond of Structure (iii) may further contain, as a phosphazene bond, the phosphazene bond of Structure (i) or (iv), but preferably does not contain the phosphazene bond of Structure (i). The percentages and preferred percentages of the phosphazene bonds of these embodiments are as described for the phosphazene bond-containing polymer of the present invention.

Of the nitrogen atoms constituting the phosphazene bonds in the ring-containing polymer according to Embodiment (3), the amount of nitrogen atoms to which hydrocarbon groups are bonded is not limited. The preferred range thereof is as described for the phosphazene bond-containing polymer of the present invention. In other words, from the viewpoint of easily achieving excellent ionic conductivity, the number of nitrogen atoms to which hydrocarbon groups are bonded is preferably 1/10 or more, more preferably 2/15 or more, particularly preferably 1/6 or more relative to the total number of nitrogen atoms constituting the phosphazene bonds, which is taken as **1.** The upper limit is preferably 2/3 or less, more preferably 3/5 or less, still more preferably 8/15 or less, but is not limited thereto.

The number of nitrogen atoms to which hydrocarbon groups are bonded is preferably in the range of 1/10 to 2/3, more preferably in the range of 2/15 to 3/5, still more preferably in the range of 1/6 to 8/15 relative to the total number of nitrogen atoms constituting the phosphazene bonds, which is taken as **1.**

The ratio can be determined by $^{31}$P-NMR analysis.

Of the phosphorus atoms constituting the phosphazene bonds in the ring-containing polymer according to Embodiment (3), the amount of phosphorus atoms to which nitrogen-containing groups are bonded is not limited. The preferred range thereof is as described for the phosphazene bond-containing polymer of the present invention. In other words, from the viewpoint of easily achieving excellent ionic conductivity, the number of phosphorus atoms to which nitrogen-containing groups are bonded is preferably 1/3 or more, more preferably 2/3 or more, particularly preferably 1 or more relative to the total number of phosphorus atoms in the phosphazene bonds, which is taken as 1. The upper limit is preferably 10 or less, but is not limited thereto.

The number of phosphorus atoms to which nitrogen-containing groups are bonded is preferably in the range of 1/3 to 10, more preferably in the range of 2/3 to 10, still more preferably in the range of 1 to 10 relative to the total number of phosphorus atoms constituting the phosphazene bonds, which is taken as **1.**

These ratios can be determined by $^{31}$P-NMR measurement.

When the proportion of the phosphazene rings in the ring-containing polymer according to Embodiment (3) is represented by the percentage of the number of phosphorus atoms constituting the phosphazene structures, it is 50 at% or more, more preferably 60 at% or more, still more preferably 70 at% or more based on 100 at% of all phosphazene structures in the polymer.

The ring-containing polymer according to Embodiment (3) may have any molecular weight. The weight average molecular weight of the polymer is preferably in the range of 1,000 to 1,000,000, more preferably in the range of 3,000 to 700,000, even more preferably in the range of 5,000 to 500,000.

The number average molecular weight of the polymer is preferably in the range of 1,000 to 500,000, more preferably in the range of 1,500 to 350,000, even more preferably in the range of 2,500 to 250,000.

The molecular weight distribution, weight-average molecular weight, and number-average molecular weight can be measured by gel permeation chromatography under the conditions described in EXAMPLES.

The hydrocarbon group bonded to the nitrogen atom constituting a phosphazene bond and the nitrogen-containing group bonded to the phosphorus atom constituting the phosphazene bond in the ring-containing polymer according to Embodiment (3) and preferred embodiments thereof are the same as those described for the phosphazene bond-containing polymer of the present invention. Preferred embodiments of the present invention include an embodiment in which the ring-containing polymer according to Embodiment (3) is the phosphazene bond-containing polymer according to Embodiment (1) and an embodiment in which the ring-containing polymer according to Embodiment (3) is the phosphazene bond-containing polymer according to Embodiment (2).

Other constituents and preferred embodiments described for the phosphazene bond-containing polymer of the present invention and those described in Embodiments (2) and (3) are applicable to the ring-containing polymer according to Embodiment (3).

(Case where phosphazene ring constitutes main chain)

The following describes a ring-containing polymer according to Embodiment (3) in which phosphazene rings constitute the main chain. This polymer is also referred to as a ring-containing polymer (cp1).

In the main chain constituted by phosphazene rings in the ring-containing polymer (cp1), adjacent phosphazene rings are usually bonded by a linking chain Z1, and this structure is repeated to constitute the ring-containing polymer (cp1).

Any two phosphazene rings linked by the linking chain Z1 are represented by a ring (a) and a ring (b).

The structure of the linking chain Z1 is exemplified by, but not limited to, the following.

Structure (a): A structure in which the linking chain Z1 is the nitrogen-containing group bonded to the phosphorus atom constituting a phosphazene bond in the phosphazene ring

Structure (b): A structure in which the linking chain Z1 is the hydrocarbon group bonded to the nitrogen atom constituting a phosphazene bond in the phosphazene ring

Structure (c): A structure in which the linking chain Z1 is the group not containing nitrogen, the group being bonded to the phosphorus atom constituting a phosphazene bond in the phosphazene ring

Embodiments of the ring-containing polymer (cp1) include one in which phosphorus atoms constituting the phosphazene rings (a) and (b) are linked to each other by, for example, the structure of the linking chain Z1 having any of Structures (a) to (c), and one in which a phosphorus atom constituting the phosphazene ring (a) or (b) is linked to a nitrogen atom by, for example, the structure of the linking chain Z1 having any of Structures (a) to (c).

Of the ring-containing polymers having the respective Structures (a) to (c), an exemplary polymer containing a six-membered phosphazene ring is one having a structure represented by the following formula (D-1), (D-2), or (D-3) as a repeating unit.

[Chem. 5]

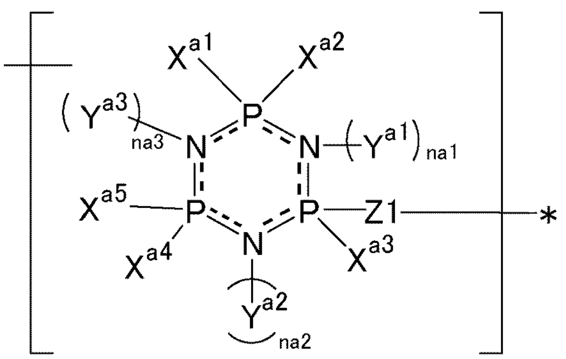

(D-1)

In the formula, $X^{a1}$ to $X^{a5}$ are each independently at least one selected from the group consisting of a hydroxy group, halogen atoms, a hydrocarbon group, a $OR^{11}$ group, a $C(=O)R^{12}$ group, a $SR^{13}$ group, and a nitrogen-containing group; the hydrocarbon group, the $OR^{11}$ group, the $C(=O)R^{12}$ group, the $SR^{13}$ group, and the nitrogen-containing group are each optionally a monovalent group, or optionally a divalent group bonded to a phosphazene structure different from the

phosphazene structure of the structural unit (D-1), or bonded to a structure that is not a phosphazene structure, in the phosphazene bond-containing polymer; $R^{11}$, $R^{12}$, and $R^{13}$ are each independently a hydrocarbon group; Z1 is a nitrogen-containing group; $Y^{a1}$ to $Y^{a3}$ are each a hydrocarbon group; $X^{a1}$ to $X^{a5}$ and $Y^{a1}$ to $Y^{a3}$ each may form a bond; na1 to na3 are each 0 or 1; a dotted line in the ring structure indicates the formation of a resonance structure; when at least one of na1 to na3 is 1 and a hydrocarbon group is bonded to at least one of the nitrogen atoms constituting the phosphazene ring, the resonance structure is formed by atoms constituting the ring structure excluding the nitrogen atom to which the hydrocarbon group is bonded; the ring structure is positively charged; and the symbol * indicates an atom that is bonded to Z1 and is a phosphorus atom or nitrogen atom constituting the phosphazene ring in an adjacent repeating unit.

[Chem. 6]

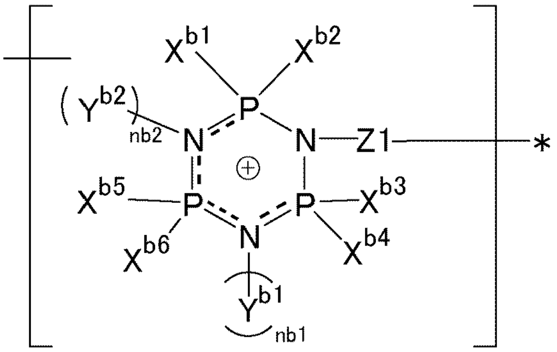

(D-2)

In the formula, $X^{b1}$ to $X^{b6}$ are each independently at least one selected from the group consisting of a hydroxy group, halogen atoms, a hydrocarbon group, a $OR^{11}$ group, a $C(=O)R^{12}$ group, a $SR^{13}$ group, and a nitrogen-containing group; the hydrocarbon group, the $OR^{11}$ group, the $C(=O)R^{12}$ group, the $SR^{13}$ group, and the nitrogen-containing group are each optionally a monovalent group, or optionally a divalent group bonded to a phosphazene structure different from the phosphazene structure of the structural unit (D-2), or bonded to a structure that is not a phosphazene structure, in the phosphazene bond-containing polymer; $R^{11}$, $R^{12}$, and $R^{13}$ are each independently a hydrocarbon group; Z1 is a hydrocarbon group; $Y^{b1}$ and $Y^{b2}$ are each a hydrocarbon group; $X^{b1}$ to $X^{b6}$ and $Y^{b1}$ and $Y^{b2}$ each may form a bond; nb1 and nb2 are each 0 or 1; a dotted line in the ring structure indicates the formation of a resonance structure; the ring structure is positively charged; and when a hydrocarbon group is bonded to at least one of nitrogen atoms constituting the phosphazene ring, excluding the nitrogen atom to which Z1 is bonded, the resonance structure is formed by the other nitrogen atom to which neither a hydrocarbon group nor Z1 is bonded and two phosphorus atoms on both sides of the nitrogen atom.

The symbol * indicates an atom that is bonded to Z1 and is a phosphorus atom or nitrogen atom constituting the phosphazene ring in an adjacent repeating unit or any of atoms in $X^{b1}$ to $X^{b6}$, $Y^{b1}$, and $Y^{b2}$ of an adjacent phosphazene ring.

[Chem. 7]

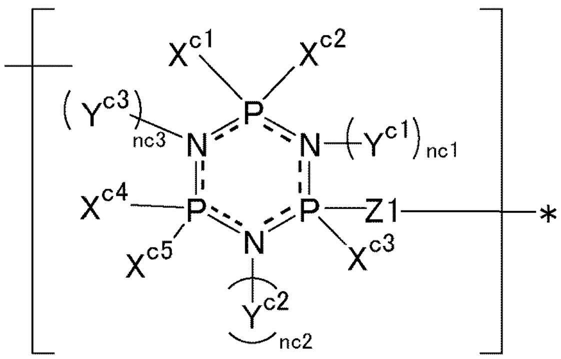

(D-3)

In the formula, $X^{c1}$ to $X^{c5}$ are each independently at least one selected from the group consisting of a hydroxy group, halogen atoms, a hydrocarbon group, a $OR^{11}$ group, a $C(=O)R^{12}$ group, a $SR^{13}$ group, and a nitrogen-containing group; the hydrocarbon group, the $OR^{11}$ group, the $C(=O)R^{12}$ group, the $SR^{13}$ group, and the nitrogen-containing group are each optionally a monovalent group, or optionally a divalent group bonded to a phosphazene structure different from the phosphazene structure of the structural unit (D-3), or bonded to a structure that is not a phosphazene structure, in the

phosphazene bond-containing polymer; Z1 is a divalent hydrocarbon group, a divalent $OR^{11}$ group, a divalent $C(=O)R^{12}$ group, or a divalent $SR^{13}$ group, or a divalent group including two of the same or different groups in combination; $R^{11}$, $R^{12}$, and $R^{13}$ are each independently a hydrocarbon group; $Y^{c1}$ to $Y^{c3}$ are each a hydrocarbon group; $X^{c1}$ to $X^{c5}$ and $Y^{c1}$ to $Y^{c3}$ each may form a bond; nc1 to nc3 are each 0 or 1; a dotted line in the ring structure indicates the formation of a resonance structure; when at least one of nc1 to nc3 is 1 and a hydrocarbon group is bonded to at least one of the nitrogen atoms constituting the phosphazene ring, the resonance structure is formed by atoms constituting the ring structure excluding the nitrogen atom to which the hydrocarbon group is bonded; the ring structure is positively charged; and the symbol * indicates an atom that is bonded to Z1 and is a phosphorus atom or nitrogen atom constituting the phosphazene ring in an adjacent repeating unit.

Specific examples and preferred ones of $X^{a1}$ to $X^{a5}$, Xb1 to $X^{b6}$, and $X^{c1}$ to $X^{c5}$ in the respective formulas (D-1), (D-2), and (D-3), the halogen atoms, the hydrocarbon group, the $OR^{11}$ group, the $C(=O)R^{12}$ group, the $SR^{13}$ group, and the nitrogen-containing group for Z1 are the same as those for $X^1$ and $X^2$ in the formula (A-1) described above.

Specific examples and preferred ones of the hydrocarbon groups for $Y^{a1}$ to $Y^{a3}$, $Y^{b1}$ and $Y^{b2}$, and $Y^{c1}$ to $Y^{c3}$ in the respective formulas (D-1), (D-2), and (D-3) are the same as those for $Y^1$ in the formula (A-1).

The nitrogen-containing group, the group not containing nitrogen, and the hydrocarbon group for the linking chains Z1 in Structures (a) to (c) can be appropriately selected from those described for the phosphazene bond-containing polymer of the present invention. Preferred among the structures is Structure (a) or Structure (c).

The ring-containing polymer (cp1) may have any molecular weight. The weight average molecular weight is preferably in the range of 1,000 to 1,000,000, more preferably in the range of 3,000 to 700,000, even more preferably in the range of 5,000 to 500,000.

The number average molecular weight of the polymer is preferably in the range of 1,000 to 500,000, more preferably in the range of 1,500 to 350,000, even more preferably in the range of 2,500 to 250,000.

The molecular weight distribution, weight average molecular weight, and number average molecular weight are measured by the methods described above.

The main chain of the ring-containing polymer (cp1) may have any structure. Examples thereof include a linear structure such as a straight linear structure or a branched linear structure; and a network structure.

Examples of a ring-containing polymer having a linear structure include a polymer containing a structural unit represented by the following formula (C-1-1) and a structural unit represented by the following formula (C-1-2) and a polymer containing a structural unit represented by the following formula (C-2-1) and a structural unit represented by the following formula (C-2-2).

[Chem. 8]

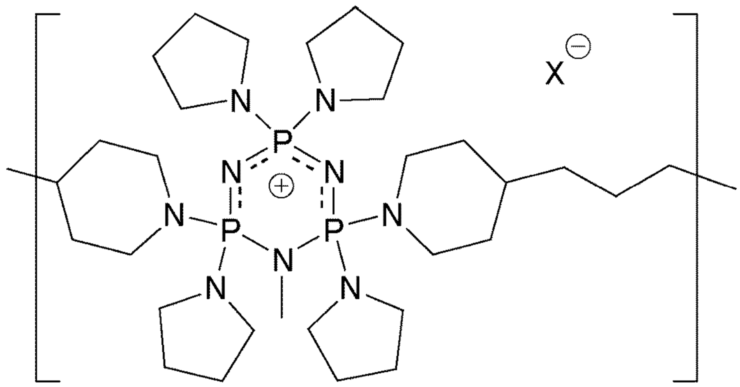

(C-1-1)

[Chem. 9]

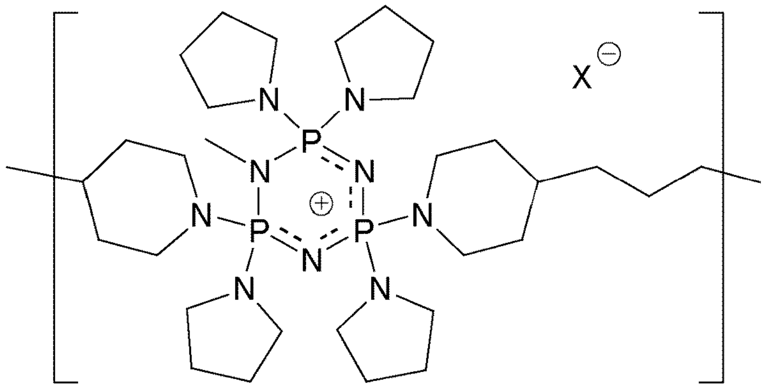

(C-1-2)

[Chem. 10]

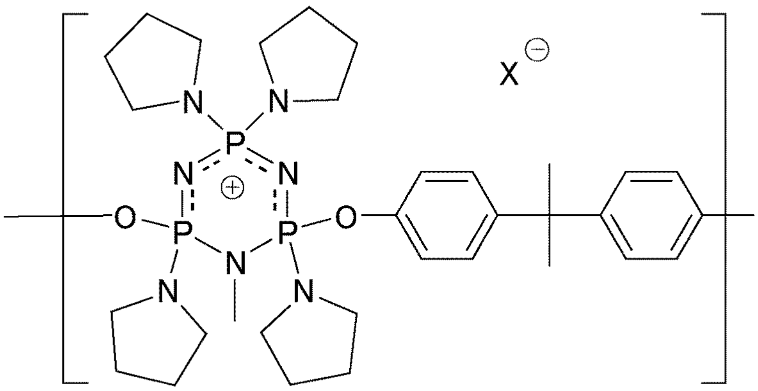

(C-2-1)

[Chem. 11]

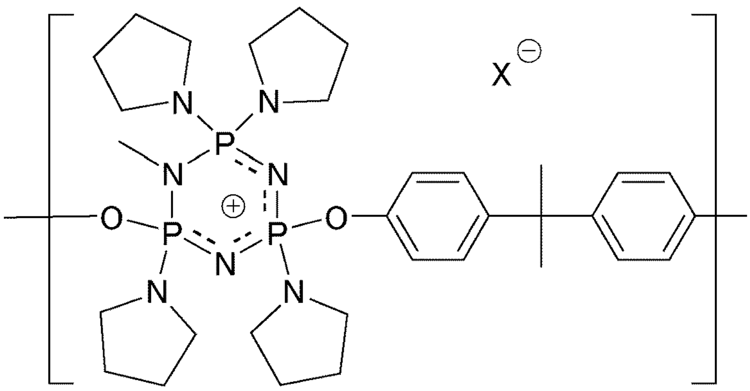

(C-2-2)

In the formulas (C-1-1), (C-1-2), (C-2-1), and (C-2-2), $X^-$ is a counter anion.

The counter anion may be a common inorganic ion, but is not limited thereto. Examples thereof include halide ions such as a fluoride ion ($F^-$), a chloride ion ($Cl^-$), a bromide ion ($Br^-$), and an iodine ion ($I^-$), a hydroxide ion, a carbonate ion, a bicarbonate ion, and trifluoromethanesulfonate. One or more of these may be used.

An example of a ring-containing polymer (cp1) having a network structure is a polymer containing a structure represented by the following formula (C-3).

[Chem. 12]

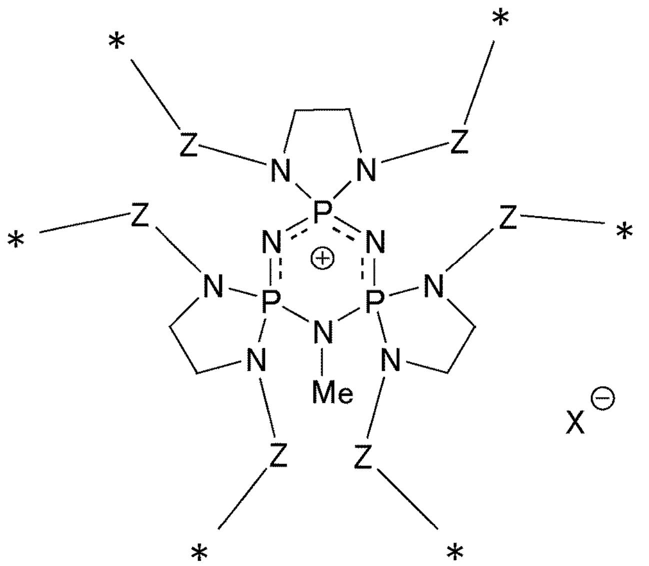

(C-3)

In the formula (C-3), $X^-$ is a counter anion.
Specific examples and preferred ones of the counter anion are the same as those of the counter anion in the formula (C-1-1) and the like.
Z in the structure may be any organic group. Examples of the organic group include the divalent groups among the organic groups (b1) described above. The symbol * means that Z in the structure is bonded to the nitrogen atom of another nitrogen-containing group.

(Case where phosphazene ring is present in side chain)

The following describes a ring-containing polymer according to Embodiment (3) having a phosphazene ring in a side chain. This polymer is also referred to as a ring-containing polymer (cp2).
The phosphazene ring is as described above.
In the ring-containing polymer (cp2), a phosphazene ring is bonded to the main chain via a linking chain Z2. The structure of the linking chain Z2 is exemplified by, but not limited to, the following.

Structure (d): A structure in which the linking chain Z2 is the nitrogen-containing group bonded to the phosphorus atom constituting a phosphazene bond
Structure (e): A structure in which the linking chain Z2 is the hydrocarbon group bonded to the nitrogen atom constituting a phosphazene bond
Structure (f): A structure in which the linking chain Z2 is the group not containing nitrogen, the group being bonded to the phosphorus atom constituting a phosphazene bond

In Structure (d), the linking chain Z2 is the nitrogen-containing group bonded to the phosphorus atom constituting the phosphazene bond of Structure (i) or Structure (iii), for example. For example, a nitrogen-containing group is bonded via its nitrogen atom to the phosphorus atom constituting a phosphazene bond in the phosphazene ring, and the nitrogen-containing group is also bonded to the main chain via a different site of the nitrogen-containing group, such as the hydrocarbon group of the organic group (b1) or (b2) or the substituent in the hydrocarbon group.
In Structure (e), the linking chain is the hydrocarbon group bonded to the nitrogen atom constituting Structure (i) or Structure (ii), for example. For example, the hydrocarbon group is bonded via its carbon atom to the nitrogen atom constituting a phosphazene bond in the phosphazene ring, and the hydrocarbon group is also bonded to the main chain via a different site of the hydrocarbon group, such as the carbon atom or the substituent in the hydrocarbon group.
In Structure (f), the group not containing nitrogen is bonded to the phosphorus atom constituting a phosphazene bond in the phosphazene ring and is also bonded to the main chain via a different site of the group, for example.
Of the ring-containing polymers having any of Structures (d) to (f), an exemplary polymer containing a six-membered phosphazene ring is one containing a structure represented by the following formula (D-4), (D-5), or (D-6) as a repeating unit.

[Chem. 13]

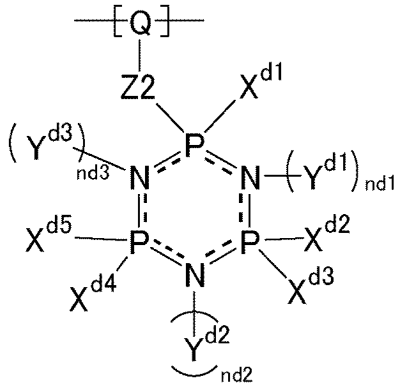

(D-4)

In the formula, $X^{d1}$ to $X^{d5}$ are each independently at least one selected from the group consisting of a hydroxy group, halogen atoms, a hydrocarbon group, a $OR^{11}$ group, a $C(=O)R^{12}$ group, a $SR^{13}$ group, and a nitrogen-containing group; the hydrocarbon group, the $OR^{11}$ group, the $C(=O)R^{12}$ group, the $SR^{13}$ group, and the nitrogen-containing group are each optionally a monovalent group, or optionally a divalent group bonded to a phosphazene structure different from the phosphazene structure of the structural unit (D-4), or bonded to a structure that is not a phosphazene structure, in the phosphazene bond-containing polymer; $R^{11}$, $R^{12}$, and $R^{13}$ are each independently a hydrocarbon group; Z2 is a nitrogen-containing group; $Y^{d1}$ to $Y^{d3}$ are each a hydrocarbon group; $X^{d1}$ to $X^{d5}$ and $Y^{d1}$ to $Y^{d3}$ each may form a bond; nd1 to nd3 are each 0 or 1; a dotted line in the ring structure indicates the formation of a resonance structure; when at least one of nd1 to nd3 is 1 and a hydrocarbon group is bonded to at least one of the nitrogen atoms constituting the phosphazene ring, the resonance structure is formed by atoms constituting the ring structure excluding the nitrogen atom to which the hydrocarbon group is bonded; the ring structure is positively charged; and Q is a trivalent organic group.

[Chem. 14]

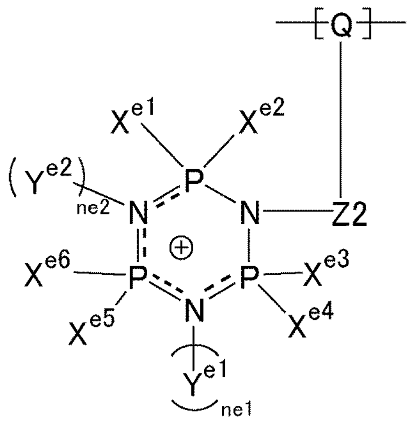

(D-5)

In the formula, $X^{e1}$ to $X^{e6}$ are each independently at least one selected from the group consisting of a hydroxy group, halogen atoms, a hydrocarbon group, a $OR^{11}$ group, a $C(=O)R^{12}$ group, a $SR^{13}$ group, and a nitrogen-containing group; the hydrocarbon group, the $OR^{11}$ group, the $C(=O)R^{12}$ group, the $SR^{13}$ group, and the nitrogen-containing group are each optionally a monovalent group, or optionally a divalent group bonded to a phosphazene structure different from the phosphazene structure of the structural unit (D-5), or bonded to a structure that is not a phosphazene structure, in the phosphazene bond-containing polymer; $R^{11}$, $R^{12}$, and $R^{13}$ are each independently a hydrocarbon group; Z2 is a hydrocarbon group; $Y^{e1}$ and $Y^{e2}$ are each a hydrocarbon group; $X^{e1}$ to $X^{e6}$ and $Y^{e1}$ and $Y^{e2}$ each may form a bond; a dotted line in the ring structure indicates the formation of a resonance structure; the ring structure is positively charged; when a hydrocarbon group is bonded to at least one of nitrogen atoms constituting the phosphazene ring, excluding the nitrogen atom to which Z2 is bonded, the resonance structure is formed by the other nitrogen atom to which neither a hydrocarbon group nor Z2 is bonded and two phosphorus atoms on both sides of the nitrogen atom; the ring structure is positively charged; and Q is a trivalent organic group.

[Chem. 15]

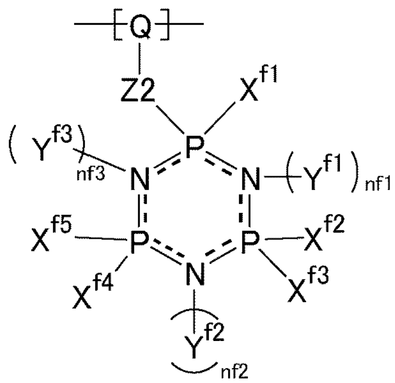

(D-6)

In the formula, $X^{f1}$ to $X^{f5}$ are each independently at least one selected from the group consisting of a hydroxy group, halogen atoms, a hydrocarbon group, a $OR^{11}$ group, a $C(=O)R^{12}$ group, a $SR^{13}$ group, and a nitrogen-containing group; the hydrocarbon group, the $OR^{11}$ group, the $C(=O)R^{12}$ group, the $SR^{13}$ group, and the nitrogen-containing group are each optionally a monovalent group, or optionally a divalent group bonded to a phosphazene structure different from the phosphazene structure of the structural unit (D-6), or bonded to a structure that is not a phosphazene structure, in the phosphazene bond-containing polymer; Z2 is a divalent hydrocarbon group, a divalent $OR^{11}$ group, a divalent $C(=O)R^{12}$ group, or a divalent $SR^{13}$ group; $R^{11}$, $R^{12}$, and $R^{13}$ are each independently a hydrocarbon group; $Y^{f1}$ to $Y^{f3}$ are each a hydrocarbon group; $X^{f1}$ to $X^{f5}$ and $Y^{f1}$ to $Y^{f3}$ each may form a bond; nf1 to nf3 are each 0 or 1; a dotted line in the ring structure indicates the formation of a resonance structure; when at least one of nd1 to nd3 is 1 and a hydrocarbon group is bonded to at least one of the nitrogen atoms constituting the phosphazene ring, the resonance structure is formed by atoms constituting the ring structure excluding the nitrogen atom to which the hydrocarbon group is bonded, and the ring structure is positively charged; and Q is a trivalent organic group.

Specific examples and preferred ones of $X^{d1}$ to $X^{d5}$, $X^{e1}$ to $X^{e6}$, and $X^{f1}$ to $X^{f5}$ in the respective formulas (D-4), (D-5), and (D-6), the halogen atoms, the hydrocarbon group, the $OR^{11}$ group, the $C(=O)R^{12}$ group, the $SR^{13}$ group, and the nitrogen-containing group for Z2 are the same as those for $X^1$ and $X^2$ in the formula (A-1) described above.

Specific examples and preferred ones of the hydrocarbon groups for $Y^{d1}$ to $Y^{d3}$, $Y^{e1}$ and $Y^{e2}$, and $Y^{f1}$ to $Y^{f3}$ in the respective formulas (D-4), (D-5), and (D-6) are the same as those for $Y^1$ in the formula (A-1).

An example of the trivalent organic group Q in the formulas (D-4), (D-5), and (D-6) is an optionally substituted hydrocarbon group. Examples of the hydrocarbon group include those obtained by removing two hydrogen atoms from any of the monovalent hydrocarbon groups among the hydrocarbon groups described above as the hydrocarbon group bonded to a nitrogen atom in the phosphazene bond-containing polymer of the present invention. Examples of the substituent in the hydrocarbon group include the substituents described above as the substituent in the hydrocarbon group bonded to a nitrogen atom in the phosphazene bond-containing polymer of the present invention.

Preferred among the structures is Structure (d) or Structure (e).

Non-limiting examples of the composition of the main chain in the ring-containing polymer (cp2) include polystyrene; polyolefins such as polyethylene and polypropylene; polysulfone; polyarylene sulfides such as polyphenylene sulfide; fluorine-containing hydrocarbon polymers such as polytetrafluoroethylene and polyvinylidene fluoride; polyester; (meth)acrylic polymers; polycarbonate; polyetheretherketone; polyethersulfone; polyetherimide; and polyamideimide.

From the viewpoint of excellent hydrolysis resistance, preferred among these are polystyrene, polyolefins, polysulfone, polyethersulfone, polyarylene sulfides, and fluorine-containing hydrocarbon polymers.

The main chain of the ring-containing polymer (cp2) may have any structure. Examples thereof include a linear structure such as a straight linear structure or a branched linear structure, and a network structure. From the viewpoint of strength, preferred among these are a network structure and a linear structure such as a branched linear structure.

The ring-containing polymer (cp2) may have any molecular weight. The weight average molecular weight of the polymer is preferably in the range of 1,000 to 1,000,000, more preferably in the range of 3,000 to 700,000, even more preferably in the range of 5,000 to 500,000.

The number average molecular weight of the polymer is preferably in the range of 1,000 to 500,000, more preferably in the range of 1,500 to 350,000, even more preferably in the range of 2,500 to 250,000.

The molecular weight distribution, weight average molecular weight, and number average molecular weight are measured by the methods described above.

A specific example of the ring-containing polymer (cp2) is a polymer containing a structural unit represented by the following formula (C-4) as a repeating unit.

[Chem. 16]

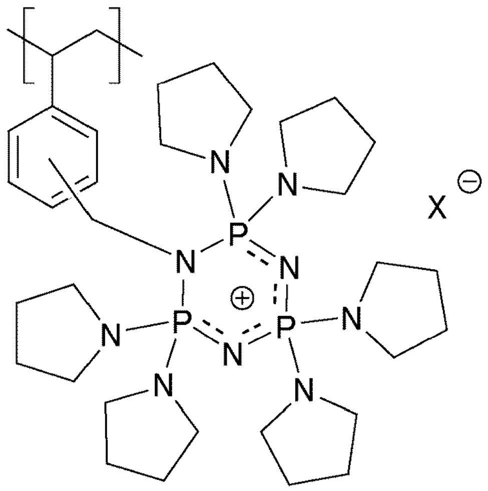

(C-4)

X- in the formula (C-4) is a counter anion. The counter anion is the same as the counter anion X- in the formula (C-1-1) and the like.

<Embodiment (4): Chain-phosphazene bond-containing polymer>

Preferred embodiments of the phosphazene bond-containing polymer of the present invention include a chain-phosphazene bond-containing polymer. The chain-phosphazene bond-containing polymer may be abbreviated as a chain-containing polymer. The chain-containing polymer according to Embodiment (4) contains only a chain-phosphazene structure as the phosphazene structure. The chain-containing polymer also has a structure in which a chain structure constitutes the main chain or a structure in which a chain structure is present in a side chain. A structure in which a chain structure constitutes the main chain is preferred because it is easily produced at a low cost.

Like the phosphazene bond-containing polymer of the present invention described above, the chain-containing polymer according to Embodiment (4) is also a cationic polymer.

Preferred examples of the structures of the phosphazene bonds constituting the chain-containing polymer according to Embodiment (4) include the same structures as Structures (i) to (iv) described for the phosphazene bond-containing polymer of the present invention. The chain-containing polymer preferably contains in the molecule a phosphazene structure containing the phosphazene bond of Structure (i) as an entire repeating unit or as part of a repeating unit and/or a combination of a phosphazene structure containing the phosphorene bond of Structure (ii) and a phosphazene structure containing the phosphazene bond of Structure (iii) as an entire repeating unit or as part of a repeating unit.

In particular, the chain-containing polymer more preferably contains a phosphazene structure containing the phosphazene bond of Structure (i) as an entire repeating unit or as part of a repeating unit.

The chain-containing polymer containing a phosphazene structure containing the phosphazene bond of Structure (i) as an entire repeating unit or as part of a repeating unit may further contain a phosphazene structure containing the phosphazene bond of Structure (ii), (iii), or (iv). In this case, the phosphazene structure containing the phosphazene bond of Structure (i) may further contain the phosphazene bond of Structure (ii), (iii), or (iv), or a phosphazene structure containing the phosphazene bond of Structure (ii), (iii), or (iv) may be present separately from the phosphazene structure containing the phosphazene bond of Structure (i).

When a phosphazene structure containing the phosphazene bond of Structure (ii), (iii), or (iv) is present separately from the phosphazene structure containing the phosphazene bond of Structure (i), the phosphazene structure containing the phosphazene bond of Structure (i) and the phosphazene structure containing the phosphazene bond of Structure (ii), (iii), or (iv) may be present in one repeating unit or in different repeating units.

The percentages and preferred percentages of the phosphazene bonds of these structures are as described for the phosphazene bond-containing polymer of the present invention.

In the structure containing a phosphazene structure containing the phosphazene bond of Structure (ii) and a phosphazene structure containing the phosphazene bond of Structure (iii) as an entire repeating unit or as part of a repeating unit, the phosphazene structure containing the phosphazene bond of Structure (ii) may further contain the phosphazene bond of Structure (iii), or a phosphazene structure containing the phosphazene bond of Structure (iii) may be present separately from the phosphazene structure containing the phosphazene bond of Structure (ii).

When a phosphazene structure containing the phosphazene bond of Structure (iii) is present separately from the phosphazene structure containing the phosphazene bond of Structure (ii), the phosphazene structure containing the phosphazene bond of Structure (ii) and the phosphazene structure containing the phosphazene bond of Structure (iii) may be present in one repeating unit or in different repeating units.

The chain-containing polymer according to Embodiment (4) preferably contains a phosphazene structure containing the phosphazene bond of Structure (ii) and the phosphazene bond of Structure (iii).

The chain-containing polymer containing a phosphazene structure containing the phosphazene bond of Structure (ii) and a phosphazene structure containing the phosphazene bond of Structure (iii) may further contain, as a phosphazene bond, the phosphazene bond of Structure (i) or (iv), but preferably does not contain the phosphazene bond of Structure (i). The percentages and preferred percentages of the phosphazene bonds of these structures are as described for the phosphazene bond-containing polymer of the present invention.

Of the nitrogen atoms constituting the phosphazene bonds in the chain-containing polymer according to Embodiment (4), the amount of nitrogen atoms to which hydrocarbon groups are bonded is not limited. The preferred range thereof is as described for the phosphazene bond-containing polymer of the present invention. In other words, from the viewpoint of easily achieving excellent ionic conductivity, the number of nitrogen atoms to which hydrocarbon groups are bonded is preferably 1/10 or more, more preferably 2/15 or more, particularly preferably 1/6 or more relative to the total number of nitrogen atoms constituting the phosphazene bonds, which is taken as **1.** The upper limit is preferably 2/3 or less, more preferably 3/5 or less, still more preferably 8/15 or less, but is not limited thereto.

The number of nitrogen atoms to which hydrocarbon groups are bonded is preferably in the range of 1/10 to 2/3, more preferably in the range of 2/15 to 3/5, more preferably in the range of 2/15 to 3/5, even more preferably in the range of 1/6 to 8/15 relative to the total number of nitrogen atoms constituting the phosphazene bonds, which is taken as **1.**

The ratio can be determined by $^{31}P$-NMR analysis.

Of the phosphorus atoms constituting the phosphazene bonds in the chain-containing polymer according to Embodiment (4), the amount of phosphorus atoms to which nitrogen-containing groups are bonded is not limited. The preferred range thereof is as described for the phosphazene bond-containing polymer of the present invention. In other words, from the viewpoint of easily achieving excellent ionic conductivity, the number of phosphorus atoms to which nitrogen-containing groups are bonded is preferably 1/3 or more, more preferably 2/3 or more, particularly preferably 1 or more relative to the total number of phosphorus atoms in the phosphazene bonds, which is taken as **1.** The upper limit is preferably 10 or less, but is not limited thereto.

The number of phosphorus atoms to which nitrogen-containing groups are bonded is preferably in the range of 1/3 to 10, more preferably in the range of 2/3 to 10, still more preferably in the range of 1 to 10 relative to all the phosphorus atoms constituting the phosphazene bonds, which is taken as **1.**

These ratios can be determined by $^{31}P$-NMR measurement.

When the proportion of the phosphazene structures in the chain-containing polymer according to Embodiment (4) is represented the percentage of the number of phosphorus atoms constituting the phosphazene structures, it is 50 at% or more, more preferably 60 at% or more, still more preferably 70 at% or more based on 100 at% of all phosphazene structures in the polymer.

The chain-containing polymer according to Embodiment (4) may have any molecular weight. The weigh average molecular weight of the polymer is preferably in the range of 1,000 to 1,000,000, more preferably in the range of 3,000 to 700,000, even more preferably in the range of 5,000 to 500,000.

The number average molecular weight of the polymer is preferably in the range of 1,000 to 500,000, more preferably in the range of 1,500 to 350,000, even more preferably in the range of 2,500 to 250,000.

The molecular weight distribution, weight average molecular weight, and number average molecular weight are measured by the methods described above.

The hydrocarbon group bonded to the nitrogen atom constituting a phosphazene bond in the chain-containing polymer according to Embodiment (4) and the nitrogen-containing group bonded to the phosphorus atom constituting the phosphazene bond and preferred embodiments thereof are the same as those described for the phosphazene bond-containing polymer of the present invention. Other constituents of the chain-containing polymer according to Embodiment (4) are the same as those described for the phosphazene bond-containing polymer of the present invention.

Of the chain-containing polymers, a polymer in which a chain structure constitutes the main chain may have a structure consisting of a single phosphazene chain structure or a structure in which a plurality of phosphazene chain structures are linked to each other via a linking chain to form a polymer structure, for example. In the structure in which a plurality of phosphazene chain structures are linked to each other via a linking chain to form a polymer structure, the linking chain is the same as the linking chain Z1 in the ring-containing polymer (cp1) of Embodiment (3).

The linking chain in a chain-containing polymer having a chain structure in a side chain is the same as the linking chain Z2 in the ring-containing polymer (cp2) of Embodiment (3). Also, the composition, structure, and the like thereof are the same as those of the ring-containing polymer (cp2).

Other embodiments and preferred embodiments of the chain-containing polymer according to Embodiment (4) of

the present invention are the same as the various structures and preferred embodiments of the phosphazene bond-containing polymer and the various embodiments and preferred embodiments of the cyclic-phosphazene bond-containing polymer of the present invention described above, except for the above-described features and the feature that the polymer contains only a chain-phosphazene structure as the phosphazene structure. For example, in a preferred embodiment of the present invention, the chain-containing polymer according to Embodiment (4) is in the form of the phosphazene bond-containing polymer according to Embodiment (1) or in the form of the phosphazene bond-containing polymer according to Embodiment (2).

<Method of producing phosphazene bond-containing polymer of the present invention>

The phosphazene bond-containing polymer of the present invention may be produced by any method.

A phosphazene bond-containing polymer having a phosphazene structure in the main chain can be obtained, for example, by a production method including the following steps.

Step (a): A step of polymerizing a phosphazene compound to form a polymer
Step (b): A step of introducing a nitrogen-containing group to the phosphorus atom constituting a phosphazene bond
Step (c): A step of introducing a hydrocarbon group to the nitrogen atom constituting a phosphazene bond

These steps (a) to (c) may be performed in any order. Any two of these three steps may be performed at the same time.

Exemplary preferred methods of producing the phosphazene bond-containing polymer having a phosphazene structure in the main chain include the following production methods (1) and (2). The production method (1) is preferred particularly for producing a polymer having a cyclic-phosphazene structure as a phosphazene structure in the main chain. The production method (2) is preferred particularly for producing a polymer having a chain-phosphazene structure as a phosphazene structure in the main chain.

A phosphazene bond-containing polymer having a phosphazene structure in a side chain can be obtained, for example, by a production method including the following steps.

Step (d): A step of preparing a polymer constituting the main chain
Step (e): A step of introducing a phosphazene structure to the polymer constituting the main chain
Step (f): A step of introducing a nitrogen-containing group to the phosphorus atom constituting a phosphazene bond
Step (g): A step of introducing a hydrocarbon group to the nitrogen atom constituting a phosphazene bond

These steps (d) to (g) may be performed in any order. Any two of these four steps may be performed at the same time.

An exemplary preferred method of producing the phosphazene bond-containing polymer having a phosphazene structure in a side chain is the following production method (3). The production method (3) is preferred particularly for producing a polymer having a cyclic-phosphazene structure as a phosphazene structure in a side chain.

The following describes the production methods (1) to (3).

<Production method (1)>

As described above, the production method (1) is preferred for producing a phosphazene bond-containing polymer having a phosphazene structure in the main chain, particularly for producing a polymer having a cyclic-phosphazene structure as a phosphazene structure in the main chain.

The production method (1) includes a polymerization step of reacting a diamine compound (a1) with a cyclic-phosphazene compound (p1) containing two or more phosphorus atoms to which halogen atoms such as a chlorine atom are bonded.

When the steps (a) and (b) are performed at the same time, the production method provides a polymer having a structure in which phosphazene rings each containing a phosphorus atom to which a nitrogen-containing group derived from a diamine compound is bonded are linked to each other via the nitrogen-containing group as a linking chain. In other words, the production method provides a polymer in which phosphazene rings and diamine-derived nitrogen-containing groups are alternately copolymerized.

Next, the step (c) is performed in which the resulting polymer is reacted with an appropriate amount of alkyl iodide as an alkylating agent, for example, to allow alkyl groups to bind to nitrogen atoms constituting the phosphazene bonds in the phosphazene rings. Such a production method can provide the phosphazene bond-containing polymer of the present invention having a phosphazene structure (phosphazene ring) in the main chain.

The structure of the polymer produced by the production method (1) can be controlled by the raw materials. In

order to produce a straight-chain linear polymer, the cyclic-phosphazene compound (p1) is preferably a compound containing two phosphorus atoms to which chlorine atoms are bonded. In order to produce a network polymer, the cyclic-phosphazene compound (p1) is preferably a compound containing three or more phosphorus atoms to which chlorine atoms are bonded. For example, a branched-chain linear polymer, a polymer having a network structure and a linear structure, a mixture of a network polymer and a linear polymer, and the like can be obtained by using as the cyclic-phosphazene compound (p1) a mixture of a compound containing two phosphorus atoms to which chlorine atoms are bonded and a compound containing three phosphorus atoms to which chlorine atoms are bonded and controlling the proportion of the mixture used and conditions.

The polymerization step includes the steps (a) and (b) performed at the same time and can be performed by mixing the cyclic-phosphazene compound (p1) with the diamine compound (a1) in an organic solvent, for example.

The organic solvent is preferably an organic solvent highly dissolving each compound. Examples of the organic solvent used include various organic solvents including hydrocarbon solvents such as toluene and xylene; ether solvents such as THF; ketone solvents such as methyl ethyl ketone; ester solvents; and nitrile solvents such as acetonitrile.

The reaction temperature in the polymerization step is preferably 0°C to 150°C, more preferably 50°C to 120°C.

The reaction duration is preferably, for example, 1 to 60 hours.

The pressure conditions are not limited, and may be ambient pressure, increased pressure, or reduced pressure.

The polymerization step is preferably performed in the presence of a basic component in order to trap hydrogen chloride produced as a by-product. It may be performed in the presence of a catalytic component.

Examples of the basic component include organic bases such as triethylamine and pyridine and inorganic bases such as potassium carbonate and sodium carbonate.

The catalytic component is preferably an ammonium salt such as tetrabutylammonium bromide.

The mixing ratio of the cyclic-phosphazene compound (p1) to the diamine compound (a1) in the polymerization step is preferably 2:1 to 1:2, more preferably 1.5:1 to 1:1.5, more preferably 1.2:1 to 1:1.2 in terms of molar ratio.

In the polymerization step, each compound may be mixed by any method. Preferably, the cyclic-phosphazene compound (p1), an excess amount of a base, and an optional catalytic component are dissolved or suspended in any of the above organic solvents to prepare a solution, and while maintaining the solution at the above-described preferred temperature, to the solution is gradually added a solution prepared by dissolving the diamine compound (a1) to any of the above organic solvents.

The concentration of the cyclic-phosphazene compound (p1) in the solution containing the cyclic-phosphazene compound (p1) is preferably in the range of 10% by mass to 70% by mass, more preferably in the range of 20% by mass to 60% by mass.

The polymerization reaction in the polymerization step is preferably performed in an inert gas atmosphere. Usually, the oxygen gas concentration is preferably 1% by volume or less.

The cyclic-phosphazene compound (p1) may be, for example, a compound represented by the following formula (P-1).

[Chem. 17]

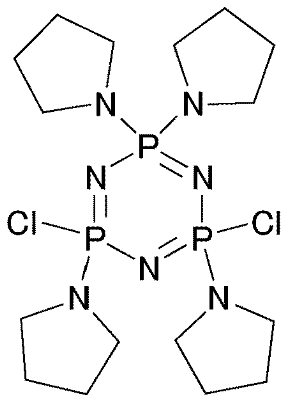

(P-1)

Examples of the diamine compound (a1) include compounds in which two amino groups are primary amino groups such as ethylenediamine, hexamethylenediamine, and phenylenediamine; and compounds in which two amino groups are secondary amino groups such as 1,3-di-4-piperidylpropane and N,N'-diethylhexamethylenediamine. One or more of these may be used. Preferred among these are compounds in which two amino groups are secondary amino groups.

The polymerization reaction allows two amino group residues derived from the amino groups of the diamine

compound (a1) to bind to phosphorus atoms in respective two adjacent phosphazene rings each derived from the cyclic-phosphazene compound (p1). Thereby, a polymer (1) containing a repeating structural unit having a structure in which phosphazene rings are linked by a nitrogen-containing group having two amino residues is obtained.

Then, the step (c) is preferably performed. Specifically, the production method of phosphazene bond-containing polymer preferably includes a hydrocarbon group introduction step of reacting a halogenated hydrocarbon with the polymer (1). This step allows hydrocarbon groups to be introduced into nitrogen atoms of the phosphazene rings of the polymer (1). As a result, a cyclic-phosphazene bond-containing polymer having a phosphazene ring in the main chain is obtained. The resulting polymer is a cationic polymer in which the phosphazene ring exhibits cationic properties.

The halogenated hydrocarbon is preferably an iodinated hydrocarbon, more preferably an alkyl iodide. The alkyl iodide is preferably a C1-C18 alkyl group, more preferably a C1-C12 alkyl group, still more preferably a C1-C6 alkyl group, even more preferably a C1-C3 alkyl group, particularly preferably a C1 alkyl group, but is not limited thereto. The alkyl group may have a substituent. The substituent is preferably a halogen atom.

The hydrocarbon group introduction step can be performed, for example, by mixing the polymer (1) with a halogenated hydrocarbon in an organic solvent. The organic solvent is preferably the same as the organic solvent that can be used in the polymerization step.

The reaction temperature in the hydrocarbon group introduction step is preferably 0°C to 100°C, more preferably 40°C to 80°C.

The reaction duration is preferably 1 to 10 hours, for example.

The pressure conditions are not limited, and may be ambient pressure, increased pressure, or reduced pressure.

The hydrocarbon group introduction step may be performed in the presence of a catalytic component or a basic component. The catalytic component is preferably a silver compound, an ammonium compound, or the like. The basic component is preferably an inorganic base such as potassium carbonate.

The hydrocarbon group introduction step performed in the presence of a basic component can provide a phosphazene bond-containing polymer having a higher cationization degree.

The mixing ratio between the polymer (1) and the halogenated hydrocarbon in the hydrocarbon group introduction step is represented by the molar ratio of the phosphazene ring in the polymer (1) to the halogenated hydrocarbon is preferably 3:1 to 1:20, more preferably 2:1 to 1:15, still more preferably 1:1 to 1:10.

The polymer (1) and the halogenated hydrocarbon may be mixed by any method in the hydrocarbon group introduction step. Preferably, the polymer (1) and an optional catalytic component or a basic component are dissolved or suspended in any of the above organic solvents to prepare a solution, and while maintaining the solution at the above-described preferred temperature, to the solution is gradually added a solution containing a halogenated hydrocarbon.

The organic solvent used in the solution containing a halogenated hydrocarbon is also the same as the organic solvent that can be used in the polymerization step.

The concentration of the polymer (1) in the solution (or suspension) containing the polymer (1) in the hydrocarbon group introduction step is preferably in the range of 5% by mass to 60% by mass, more preferably in the range of 10% by mass to 40% by mass.

The reaction in the hydrocarbon group introduction step is preferably performed in an inert gas atmosphere. Usually, the oxygen gas concentration is preferably 1% by volume or less.

The above-described production method provides a reaction liquid containing the phosphazene bond-containing polymer of the present invention having a cyclic-phosphazene structure in the main chain, in the form of a solution or suspension in an organic solvent.

The reaction liquid containing the phosphazene bond-containing polymer of the present invention is purified or dried by conventionally known methods to remove the raw material residues, catalysts, organic solvent, and the like from the reaction liquid, whereby a phosphazene bond-containing polymer in the form of powder can be obtained. Alternatively, the solvent can be replaced with another solvent (e.g., a solvent used for electrolyte materials) to obtain a solution or dispersion in which the phosphazene bond-containing polymer is dissolved or dispersed.

For example, polymerization is performed using a cyclic-phosphazene compound represented by the formula (P-1) as the phosphazene compound (p1) and 1,3-di-4-piperidylpropane as the diamine compound (a1) to obtain a polymer, and the polymer is reacted with methyl iodide, whereby a polymer (iodine is a counter ion) containing structural units represented by the following formulas (C-5-1) to (C-5-3) is obtained.

[Chem. 18]

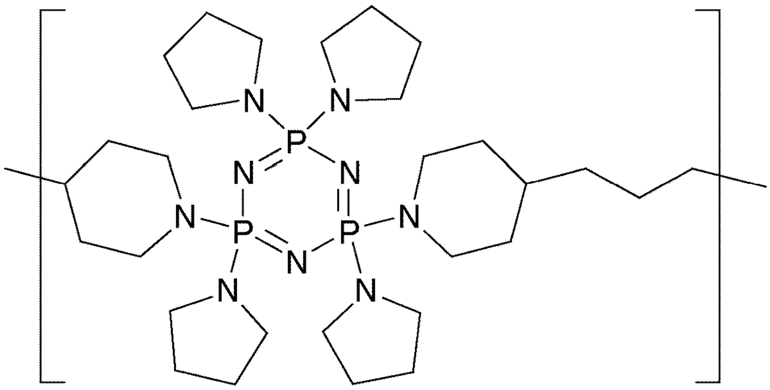

(C-5-1)

[Chem. 19]

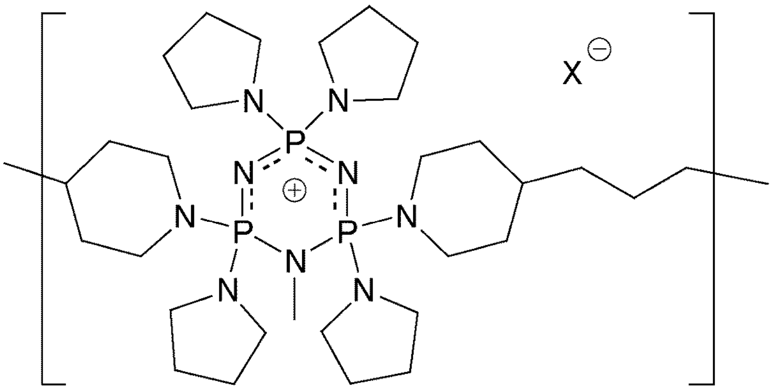

(C-5-2)

[Chem. 20]

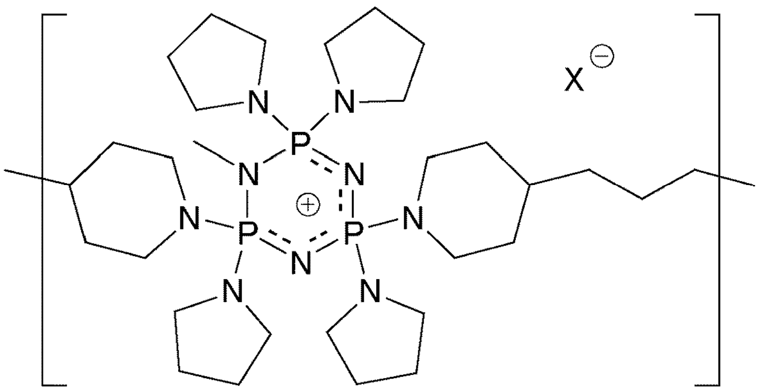

(C-5-3)

The total number of structural units in the polymer is preferably 3 to 300. The ratio of the total number of structural units represented by the formulas (C-5-2) and (C-5-3) to the number of structural units represented by the formula (C-5-1) can be adjusted by the amount of methyl iodide.

<<Cyclic-phosphazene compound (p1)>>

The cyclic-phosphazene compound (p1) used in the production step (a) will be described. The cyclic-phosphazene compound (p1) may be any one containing two or more chlorine-bonded phosphorus atoms each constituting a phosphazene bond. The compound may contain a phosphorus atom to which a group different from a chlorine atom is bonded.

The different group may be a nitrogen-containing group or a group not containing nitrogen selected from the groups described as the group that may be bonded to the phosphorus atoms in the phosphazene bond-containing polymer

of the present invention. Preferred examples of the group not containing nitrogen include a hydroxyl group, halogen atoms other than a chlorine atom, a hydrocarbon group, a $OR^{P1}$ group, a $C(=O)R^{P2}$ group, a $SR^{P3}$ group, an oxygen atom, and a sulfur atom. Here, $R^{P1}$, $R^{P2}$, and $R^{P3}$ are each independently a hydrocarbon group.

Non-limiting examples of the hydrocarbon group include an aliphatic hydrocarbon group such as an alkyl group, an alkenyl group, or an aralkyl group and an aromatic hydrocarbon group such as an aryl group. The aliphatic hydrocarbon group may be a saturated hydrocarbon group, an unsaturated hydrocarbon group, or an aralkyl group, and may have a chain structure (an acyclic aliphatic hydrocarbon group) or a cyclic structure (a cyclic aliphatic hydrocarbon group). The hydrocarbon group may be a hydrocarbon group including two or more of these hydrocarbon groups. Preferred among these are a C1-C18 saturated aliphatic hydrocarbon group, a C2-C18 unsaturated aliphatic hydrocarbon group, a C6-C18 aromatic hydrocarbon group, and a C7-C17 aralkyl group. In particular, a C6-C18 aromatic hydrocarbon group is preferred.

$R^{P1}$, $R^{P2}$, and $R^{P3}$ are each independently a hydrocarbon group. Preferred embodiments thereof are the same as those of the hydrocarbon group for $R^{01}$, $R^{02}$, and $R^{03}$ described above.

Examples of the halogen atoms other than a chlorine atom include bromine, fluorine, and iodine atoms. Preferred among these is a fluorine atom.

The group different from a chlorine atom, may be bonded to the phosphorus atoms in the cyclic-phosphazene compound (p1), is preferably a nitrogen-containing group. The nitrogen-containing group is preferably an amine residue. The nitrogen-containing group is also preferably a nitrogen-containing group represented by the following formula (B-2).

$$NR^{b2}{}_{n} \qquad (B\text{-}2)$$

In the formula (B-2), n is 1 or **2;** when n is 2, $R^{b2}$s are each independently a hydrogen atom or an organic group containing an optionally substituted monovalent or multivalent hydrocarbon group; and when n is 1, $R^{b2}$ is an organic group containing an optionally substituted multivalent hydrocarbon group.

When n is 2 in the formula (B-2), $R^{b2}$s are both preferably optionally substituted monovalent or multivalent hydrocarbon groups.

The nitrogen-containing group represented by the formula (B-2) and $R^{b2}$ and preferred embodiments thereof are the same as the nitrogen-containing group represented by the formula (B-1) described above (including the nitrogen-containing groups (b1) and (b2)) and $R^{b1}$ and preferred embodiments thereof. Therefore, the details thereof are omitted.

In the cyclic-phosphazene compound (p1), the number of chlorine atoms bonded to the phosphorus atoms is preferably 2 or 3, more preferably 2, per molecule of the cyclic-phosphazene compound (p1). The two or three chlorine atoms are preferably bonded to different phosphorus atoms.

When the number of phosphorus atoms constituting the cyclic structure of the cyclic-phosphazene compound (p1) is n, the total number of chlorine atoms bonded to the phosphorus atoms and nitrogen-containing groups bonded to the phosphorus atoms is preferably n or more, more preferably 1.5n or more, particularly preferably **2n.**

The cyclic-phosphazene compound (p1) is preferably a compound (p1-a) in which when the number of phosphorus atoms constituting the cyclic structure of the cyclic-phosphazene compound (p1) is n, the total number of chlorine atoms bonded to the phosphorus atoms and nitrogen-containing groups bonded to the phosphorus atoms is twice the number **n.** The cyclic-phosphazene compound (p1) is more preferably a compound (p1-b) in which n is **3.**

The cyclic-phosphazene compound (p1) is still more preferably a cyclic-phosphazene compound (p1-c) in which all the nitrogen-containing groups bonded to the phosphorus atoms are selected from the nitrogen-containing groups (b1) and (b2).

For example, the cyclic-phosphazene compound (p1) can be obtained by reacting a cyclic-phosphazene compound (p2) represented by the following formula (P-2):

[Chem. 21]

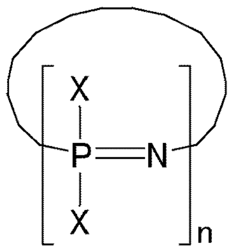

(P-2)

(wherein each X is a halogen atom; and n is an integer of 2 or more) with a compound capable of forming a hydrocarbon group, an $OR^{11}$ group, a $C(=O)R^{12}$ group, an $SR^{13}$ group, or a nitrogen-containing group, for example. Here, X is a halogen atom, preferably a chlorine atom. The letter n is an integer of 2 or more, preferably an integer of 2 to 4, particularly preferably

3.

For example, when 1 mol of hexachlorocyclotriphosphazene is reacted with 4 mol of pyrrolidine, a cyclic-phosphazene compound (p1-d) is obtained in which one chlorine atom and one pyrrolidine-derived group are bonded to each of two phosphorus atoms among the three phosphorus atoms and two pyrrolidine-derived groups are bonded to the last one phosphorus atom.

The cyclic-phosphazene compound (p1-d) is one embodiment of the compound (p1-b) or (p1-c). Among the cyclic-phosphazene compounds (p1), the compound (p1-d) is particularly suitable as a raw material of a phosphazene bond-containing polymer having excellent chemical stability.

The reaction for producing the cyclic-phosphazene compound (p1-d) can be performed, for example, by mixing hexachlorocyclotriphosphazene with a pyrrolidine compound in an organic solvent. The organic solvent is preferably the same as the organic solvent that can be used in the polymerization step.

The reaction temperature of the reaction for producing the cyclic-phosphazene compound (p1-d) is preferably -10°C to 120°C, more preferably 0°C to 100°C.

The reaction duration is preferably 1 to 10 hours, for example.

The pressure conditions are not limited, and may be ambient pressure, increased pressure, or reduced pressure.

The reaction for producing the cyclic-phosphazene compound (p1-d) may be performed in the presence of a basic component. The base is preferably an amine such as triethylamine, and an excess amount of pyrrolidine itself may be added to act as a base.

In the reaction for producing the cyclic-phosphazene compound (p1-d), the mixing ratio of hexachlorocyclotriphosphazene and pyrrolidine may be appropriately selected according to the percentage of nitrogen-containing groups to be introduced into the phosphazene ring.

In the reaction for producing the cyclic-phosphazene compound (p1-d), the raw materials may be mixed by any method. Preferably, hexachlorocyclotriphosphazene is dissolved in any of the above organic solvents to prepare a solution, and while maintaining the solution at the above preferred temperature, to the solution is gradually added a solution containing pyrrolidine. The organic solvent used in the pyrrolidine solution may be the same as the organic solvent that can be used in the polymerization step.

In the reaction for producing the cyclic-phosphazene compound (p1-d), a secondary amine or a primary amine may be used instead of pyrrolidine to give a phosphazene compound in which the nitrogen-containing groups derived from the amines used are bonded to the phosphorus atoms. Such a phosphazene compound can be used as a cyclic-phosphazene compound (1) in the polymerization step.

The production method (1) described above can provide a phosphazene bond-containing polymer having a cyclic-phosphazene structure as a phosphazene structure in the main chain.

The above description relates to a method of producing a phosphazene bond-containing polymer having, in the main chain, a structure in which phosphorus atoms in the respective cyclic-phosphazene structures are bonded via a linking group. A phosphazene bond-containing polymer having, in the main chain, a structure in which nitrogen atoms in the respective cyclic-phosphazene structures are bonded via a linking group can be produced by reacting a cyclic-phosphazene compound containing a nitrogen atom to which a reactive group is bonded with a compound having multiple functional groups that react with the reactive group. For example, a cyclic-phosphazene compound containing a nitrogen atom to which a fluorohydrocarbon group such as a 4-fluorobenzyl group is bonded is reacted with a diol represented by HO-R-OH (where R is a hydrocarbon group) in the presence of a base. Thereby, a phosphazene bond-containing polymer having, in the main chain, a structure in which nitrogen atoms in the respective cyclic-phosphazene structures are bonded via the linking group -O-R-O-.

Next, the production method (2) will be described below.

<Production method (2)>

The production method (2) is preferred for producing a phosphazene bond-containing polymer having a phosphazene structure in the main chain. The production method (2) is preferred particularly for producing a polymer having a chain-phosphazene structure as a phosphazene structure in the main chain.

In the production method (2), a conventionally known ring-opening polymerization of a phosphazene compound is performed as the step (a).

Preferably, hexachlorocyclotriphosphazene is ring-opening polymerized to obtain a linear polydichlorophosphazene. For example, hexachlorocyclotriphosphazene is dissolved in a solvent such as dichlorobenzene and heated to be ring-opening polymerized in the presence of a catalyst such as an organic sulfur compound, and only the polymer soluble in the solvent is separated, whereby a linear polymer, preferably, a straight-chain polymer (polydichlorophosphazene), is obtained.

Next, the step (b) is performed as follows. The polymer (polydichlorophosphazene) obtained in the step (a) is dissolved in an organic solvent such as THF to prepare a solution.

The resulting solution is mixed with an amine compound to allow a nitrogen-containing group derived from the amine compound to bind to at least one of the phosphorus atoms constituting the phosphazene bond accompanied by the de-HCl reaction. Thereby, a polymer containing phosphorus atoms to which nitrogen-containing groups are bonded is obtained.

The amine compound is preferably a primary amine or a secondary amine, particularly preferably a secondary amine. The secondary amine is preferably a heterocyclic amine compound containing a nitrogen atom as a heteroatom, more preferably an aliphatic heterocyclic amine compound such as pyrrolidine or piperidine.

Next, the step (c) is performed as follows. The polymer containing phosphorus atoms to which nitrogen-containing groups are bonded obtained in the step (b) is reacted with an appropriate amount of halogenated hydrocarbon to allow the alkyl group to bind to at least one of the nitrogen atoms constituting the phosphazene bonds.

The production method (2) can provide the phosphazene bond-containing polymer of the present invention having a chain-phosphazene structure in the main chain.

The halogenated hydrocarbon and preferred embodiments thereof may be the same as the halogenated hydrocarbon described in the step (c) in the production method (1) and preferred embodiments thereof. Preferred embodiments of the conditions for reacting the halogenated hydrocarbon and the like are also the same as those in the step (c) in the production method (1).

The production method (2) can provide a reaction liquid containing the phosphazene bond-containing polymer having a chain-phosphazene structure as a phosphazene structure in the main chain, in the form of a solution or suspension in an organic solvent. The phosphazene bond-containing polymer can be obtained in the form of a powder or in the form of a solution or dispersion containing the phosphazene bond-containing polymer, as in the production method (1).

Next, the production method (3) will be described below.

<Production method (3)>

The production method (3) is preferred for producing a phosphazene bond-containing polymer having a phosphazene structure in a side chain. The production method (3) is preferred particularly for producing a polymer having a cyclic-phosphazene structure as a phosphazene structure in a side chain. The production method (3) includes the following steps.

Step (d): A step of producing or preparing a polymer constituting the main chain
Step (e): A step of introducing a phosphazene structure into the polymer constituting the main chain
Step (f): A step of introducing a nitrogen-containing group to the phosphorus atom constituting a phosphazene bond
Step (g): A step of introducing a hydrocarbon group to the nitrogen atom constituting a phosphazene bond

These steps (d) to (g) may be performed in any order. Any two of these four steps may be performed at the same time.

The following specifically describes the production method (3).

The production method (3) includes reacting a cyclic-phosphazene compound with a polymer having a halogenated hydrocarbon group in a side chain.

The polymer having a halogenated hydrocarbon group in a side chain preferably has a halogenated alkyl group in a side chain. Preferred examples thereof to be used include polystyrene and polysulfone each substituted with a chloromethyl group. Thus, the step (d) may be a conventionally known method. For example, polystyrene having chloromethyl groups in side chains can be obtained by radically polymerizing 4-(chloromethyl)styrene.

In the step (e), the cyclic-phosphazene compound to be reacted with the polymer having a halogenated hydrocarbon group in a side chain is preferably a compound containing a phosphorus atom to which a nitrogen-containing group is bonded. In other words, the step (e) is preferably performed using a compound containing a phosphorus atom to which a nitrogen-containing group is bonded obtained by the step (f).

The compound containing a phosphorus atom to which a nitrogen-containing group is bonded may be a reaction product obtained by reacting the cyclic-phosphazene compound (p2) represented by the formula (P-2) that can be used in the production method (1) with a compound capable of forming a nitrogen-containing group. The compound capable of forming a nitrogen-containing group is preferably an amine compound. In other words, preferably, the step (f) can be a step of reacting the cyclic-phosphazene compound (p2) represented by the formula (P-2) with an amine compound.

More specifically, for example, hexachlorocyclotriphosphazene is mixed with an amine compound in an organic solvent such as THF to allow a nitrogen-containing group derived from the amine compound to bind to at least one of the phosphorus atoms constituting the phosphazene bond accompanied by the de-HCl reaction. The number of phosphorus atoms to which nitrogen-containing groups are bonded in the cyclic-phosphazene compound is preferably larger. More preferably, the mixing ratio of the amine compound to hexachlorocyclotriphosphazene is adjusted so that nitrogen-containing groups are bonded to all the phosphorus atoms.

The reaction temperature in the step (f) is preferably -10°C to 120°C, more preferably 0°C to 100°C.

The reaction duration is preferably 1 to 10 hours, for example.

The pressure conditions are not limited, and may be ambient pressure, increased pressure, or reduced pressure.

The step (f) may be performed in the presence of a basic component. The base is preferably an amine such as triethylamine, and an excess amount of pyrrolidine itself may be added to act as a base.

The amine compound for use in the step (f) is preferably a primary amine or a secondary amine, particularly preferably a secondary amine. The secondary amine is preferably a heterocyclic amine compound containing a nitrogen atom as a heteroatom, more preferably an aliphatic heterocyclic amine compound such as pyrrolidine or piperidine.

The step (f) can provide a cyclic-phosphazene compound containing a phosphorus atom to which a nitrogen-containing group is bonded, particularly preferably can provide a cyclic-phosphazene compound in which nitrogen-containing groups are bonded to all the phosphorus atoms in the phosphazene bonds constituting the cyclic-phosphazene compound.

The step (f) may be sequentially or simultaneously followed by the steps (e) and (g). When the steps (e) and (g) are simultaneously performed, the cyclic-phosphazene compound obtained in the step (f) is preferably mixed with the polymer having a halogenated hydrocarbon group in a side chain. The mixing removes the halogen from the halogenated hydrocarbon site in a side chain of the polymer, and the hydrocarbon group produced by the dehalogenation is bonded to the nitrogen atom constituting a phosphazene bond in the cyclic-phosphazene compound. In other words, a hydrocarbon group is bonded to the nitrogen atom constituting a phosphazene bond in the cyclic-phosphazene structure, and at the same time, the cyclic-phosphazene structure is introduced into the polymer as a side chain.

The reaction temperature in the steps (e) and (g) is usually preferably 0°C to 100°C, more preferably 40°C to 80°C.

The reaction duration is preferably 1 to 10 hours, for example.

The pressure conditions are not limited, and may be ambient pressure, increased pressure, or reduced pressure.

The steps (e) and (g) may be performed in the presence of a catalytic component or a basic component. The catalytic component is preferably a silver compound, an ammonium compound, or the like. The basic component is preferably an inorganic base such as potassium carbonate.

When the step (g) is performed in the presence of a basic component, a phosphazene bond-containing polymer having a higher cationization degree can be obtained.

The production method (3) can provide a reaction liquid containing the cyclic-phosphazene bond-containing polymer having a cyclic-phosphazene structure in a side chain, in the form of a solution or suspension in an organic solvent. The phosphazene bond-containing polymer can be obtained in the form of a powder or in the form of a solution or dispersion containing the phosphazene bond-containing polymer, as in the production method (1).

The above description relates to a method of producing a phosphazene bond-containing polymer having a structure in which a phosphorus atom of the cyclic-phosphazene structure is bonded to the main chain of the polymer via a linking group. A phosphazene bond-containing polymer having a structure in which a nitrogen atom of the cyclic-phosphazene structure is bonded to the main chain of the polymer via a linking group can be produced, for example, by reacting a polymer having a hydrocarbon group substituted with a hydroxy group such as a 4-hydroxyphenyl group with a cyclic-phosphazene compound containing a nitrogen atom to which a fluorohydrocarbon group such as a 4-fluorobenzyl group is bonded in the presence of a base.

<Applications>

Since the phosphazene bond-containing polymer of the present invention has excellent alkali resistance, it can be suitably used for members in fields requiring alkali resistance. The phosphazene bond-containing polymer of the present invention can also be suitable for a member constituting an electrochemical device, such as an electrolyte material used in an anion exchange membrane or the like, or an ion conductive material. The phosphazene bond-containing polymer of the present invention is useful particularly as an electrolyte material used in an anion exchange membrane or the like, or as an ion conductive material, for use in an electrochemical device using an alkaline electrolyte. In particular, the phosphazene bond-containing polymer of the present invention is useful as a membrane such as a solid polymer electrolyte membrane for electrolysis of water, a solid polymer electrolyte membrane for alkaline fuel cells, an electrolyte membrane for electrolytic reduction of carbon dioxide gas, an electrolyte membrane for electrodialysis, an electrolyte membrane for redox flow batteries, and an electrolyte membrane for batteries such as air batteries.

The present invention also encompasses an electrolyte material using the phosphazene bond-containing polymer of the present invention, an anion exchange membrane using the same, and an ion conductive material using the same.

<Electrolyte material>

The electrolyte material of the present invention contains the phosphazene bond-containing polymer of the present invention. The electrolyte material of the present invention may contain, in addition to the phosphazene bond-containing polymer of the present invention, solvents, other components such as monomers of the raw materials of the polymer, and the like.

Examples of the solvents include alcohols such as methanol, ethanol, propanol, and butanol; alkylene glycol monoalkyl ethers; halogen solvents such as dichloromethane, chloroform, 1,2-dichloroethane, chlorobenzene, and dichlorobenzene; dimethylformamide, dimethylacetamide, N-methyl-2-pyrrolidone (NMP), dimethylsulfoxide, γ-butyrolactone, and water. One or more of these may be used.

The electrolyte material of the present invention is useful for solid polymer electrolyte membranes for water electrolysis or alkaline fuel cells. In the electrolyte material of the present invention, the phosphazene bond-containing polymer is a cationic polymer.

<Anion exchange membrane>

The anion exchange membrane of the present invention contains the phosphazene bond-containing polymer of the present invention. The anion exchange membrane of the present invention is useful as a solid polymer electrolyte membrane for water electrolysis or alkaline fuel cells.

The anion exchange membrane of the present invention preferably has an average thickness of 10 to 1000 μm. The average thickness is more preferably 20 to 500 μm.

The thickness of the anion exchange membrane of the present invention can be measured with a commercially available micrometer, preferably with a digimatic micrometer available from Mitutoyo Corporation. Preferably, the thickness of the anion exchange membrane of the present invention is determined by measuring the thicknesses at 10 arbitrary points and taking the average of the measurement results.

The anion exchange membrane of the present invention may have any structure as long as it contains the phosphazene bond-containing polymer of the present invention. For example, the anion exchange membrane of the present invention may consist of a single layer containing the phosphazene bond-containing polymer of the present invention or consist of a laminate of two or more layers each containing the phosphazene bond-containing polymer of the present invention. The anion exchange membrane of the present invention may also consist of a laminate of one or more layers containing the phosphazene bond-containing polymer of the present invention and one or more layers not containing the phosphazene bond-containing polymer of the present invention.

The anion exchange membrane of the present invention may contain a mixture of a phosphazene bond-containing polymer and a different polymer in order to have both electrochemical properties and mechanical properties.

Examples of the different polymer to be mixed include hydrocarbon resins such as polyethylene, polypropylene, polystyrene, and polyphenylene; heteroatom-containing resins such as polyphenylene ether, polysulfone, polyphenylsulfone, polyethersulfone, polyphenylsulfone, polyphenylene sulfide, polyketone, polyimide, and polyetherimide; and resins such as fluororesins. These may be used alone or in combination of two or more. In order to achieve excellent heat resistance and alkali resistance, the anion exchange membrane of the present invention preferably contains at least one resin selected from the group consisting of polystyrene, polyphenylene, polyphenylene ether, polysulfone, polyphenylsulfone, and polyphenylene sulfide.

When the anion exchange membrane of the present invention consists of a mixture of a phosphazene bond-containing polymer and a different polymer, the percentage of the different polymer to be mixed with the phosphazene bond-containing polymer is preferably 50% by weight or less, more preferably 30% by weight or less, still more preferably 20% by weight or less of the entire membrane. Thereby, the electrochemical properties of the anion exchange membrane can be increased.

The anion exchange membrane of the present invention may be used in the following preferred specific structures: a structure in which a layer containing the phosphazene bond-containing polymer of the present invention is stacked on one or both surfaces of a porous support; a structure in which at least part of a porous support is, for example, impregnated with the phosphazene bond-containing polymer of the present invention for integration; and a structure in which a layer containing the phosphazene bond-containing polymer of the present invention is stacked on one or both surfaces of a porous support and at least part of the porous support is, for example, impregnated with the phosphazene bond-containing polymer of the present invention for integration.

Examples of the porous support include nonwoven fabrics, woven fabrics, meshes, mixed fabrics of nonwoven fabrics and woven fabrics, and microporous membranes. Preferred among these are nonwoven fabrics, woven fabrics, microporous membranes, with nonwoven fabrics and microporous membranes being more preferred and microporous membranes being still more preferred.

Examples of materials of the porous support include resins such as polyethylene, polypropylene, polysulfone,

polyethersulfone, polyphenylsulfone, polyphenylene sulfide, polyketone, polyimide, polyetherimide, and fluororesins. These may be used alone or in combination of two or more. In particular, in order to achieve excellent heat resistance and alkali resistance, the porous support preferably contains at least one resin selected from the group consisting of polypropylene, polyethylene, and polyphenylene sulfide, more preferably contains at least one resin selected from the group consisting of polypropylene and polyphenylene sulfide.

The porous support is preferably a nonwoven fabric, woven fabric, or microporous membrane containing at least one resin selected from the group consisting of polypropylene, polyethylene, and polyphenylene sulfide.
The porous support is more preferably a non-woven fabric or microporous membrane containing polypropylene.

When the porous support is in the form of a sheet, the porous support may have any thickness as long as the anion exchange membrane of the present invention can exhibit the effects of the present invention. The thickness is preferably 3 to 2000 μm, more preferably 5 to 1000 μm, still more preferably 10 to 500 μm, most preferably 15 to 250 μm.

The thickness of the porous support can be measured with a commercially available micrometer, preferably with a digimatic micrometer available from Mitutoyo Corporation. Preferably, the thickness is preferably determined by measuring the thicknesses at 10 arbitrary points and taking the average of the measurement results.

In the anion exchange membrane of the present invention, the phosphazene bond-containing polymer is a cationic polymer.

The anion exchange membrane of the present invention preferably has a hydroxy ion exchange capacity of 0.3 mmol/g or more, more preferably 0.4 mmol/g or more, still more preferably 0.5 mmol/g or more. The upper limit is usually 3.0 mmol/g or less, but is not limited thereto.

The hydroxy ion exchange capacity can be determined by measuring the ion exchange capacity described in EXAMPLES.

The anion exchange membrane of the present invention may be produced by any method capable of providing a membrane. The method may be a coating method of forming a coating film by coating the surface of a flat base material with a solution in which the phosphazene bond-containing polymer of the present invention is dissolved in a solvent, a method of rolling the phosphazene bond-containing polymer of the present invention with rolls to form a membrane, a method of extending the phosphazene bond-containing polymer of the present invention by plate pressing or the like to form a membrane, an injection molding method, an extrusion molding method, or a casting method. These forming methods may be used alone, or two or more of these may be used in combination.

In order to form an anion exchange membrane including a porous support as described above, for example, one or both surfaces of the porous support may be coated with a solution containing the phosphazene bond-containing polymer of the present invention. The coating may be performed by a known technique such as die coating, spin coating, gravure coating, curtain coating, dipping, spraying, or a method using an applicator or a coater.

The method of producing an anion exchange membrane may include, in addition to the step of forming the electrolyte material into a membrane as described above, a step of drying the membrane. The drying temperature may be set to an appropriate temperature, and may be 60°C to 160°C.

## EXAMPLES

The present invention is described in more detail below with reference to examples, but the present invention is not limited to these examples. It should be noted that the terms "part(s)" and "%" refer to "part(s) by mass" and "% by mass", respectively, unless otherwise stated.

Various measurements and evaluations of the polymers, compounds, and membranes obtained in the examples and comparative examples were performed by the following methods.

### <$^{31}$P-NMR analysis (solution-state analysis)>

Samples of polymers and compounds each in an amount of 5 to 50 mg were separately dissolved in a heavy solvent (0.7 mL) capable of dissolving the samples and transferred to NMR sample tubes (Kanto Chemical Co., Inc, outer diameter 4.961 mm, total length 178 mm). The tubes were capped and sealed. $^{31}$P-NMR analysis was performed using "JNM-ECZ600R/S3" available from JEOL Ltd. under the following conditions.

Equipment: "JNM-ECZ600R/S3" available from JEOL Ltd.
Rotation speed: 15 Hz
Pulse program: Inverse gated decoupling (IGD)
Repetition delay: 5 s
Number of scans: 128 to 256 times
Temperature: room temperature

<$^{13}C$-NMR analysis and $^{31}P$-NMR analysis (solid-state analysis)>

Samples of pulverized membranes and polymers were separately packed in 3.2 mm zirconia rotors. The rotors were capped and sealed. $^{31}P$-NMR analysis and $^{13}C$-NMR analysis were performed under the following conditions using "Avance II + 400 MHz" available from Bruker.

Probe: 3.2 mm MAS probe
Rotation speed: 16 kHz
Pulse program: Cross polarization (CP)
Repetition delay (D1): 2 s
Number of scans: 4096 times ($^{13}C$), 512 times ($^{31}P$)
CP contact time: 2 ms ($^{13}C$), 2.5 ms ($^{31}P$)
Chemical shift: $^{13}C\ ^{TM}{}_{TMS}$ = 0 ppm (external standard: adamantane 38.52 ppm), $^{31}P\delta_{H3PO4}$ = 0 ppm (external standard: diammonium hydrogen phosphate -1.6 ppm)
Temperature: 298 K

<$^{15}N$-NMR analysis (solid-state analysis)>

To samples of pulverized membranes and polymers each in an amount of about 12 mg was added 10 μL of a TEKPol/TCE (16 mM) solution, followed by mixing well. The mixtures were separately packed in 3.2 mm sapphire rotors. A Teflon® insert and a zirconia cap were attached to the rotors, and the rotors were sealed. A freeze-thaw operation was repeated three times for degassing. Thereafter, $^{15}N$-NMR analysis was performed under the following conditions using "NEO 400 MHz/263 GHz 9.4T DNP system" available from Bruker.

Probe: 3.2 mm LTMAS probe
Rotation speed: 10 kHz
Pulse program: Cross polarization (CP)
Repetition delay (D1): 2.7 to 3.3 s
Number of scans: 500 to 700 times
CP contact time: 3 ms
Chemical shift: $^{TM}{}_{NH3}$ = 0 ppm (external standard $^{15}NH_4Cl$ 39.27 ppm)
Temperature: 104 to 105 K

<Measurement of molecular weight>

The molecular weight was measured by gel permeation chromatography under the following conditions.

Apparatus: "GPC-101" available from Shodex
Column: GPC KF-804L (inner diameter 8 mm × 300 mm) available from Shodex
Column temperature: 40°C
Eluent: chloroform (containing 50 mM triethylamine)
Flow rate: 0.6 mL/min
Detector: RI
Molecular weight standard reference material: polystyrene

<Chemical stability evaluation>

(Evaluation A)

Evaluation of the chemical stability of phosphazene bond-containing polymers and phosphazene compounds

The polymers obtained in the examples and the compounds obtained in the synthesis examples were subjected to evaluation of chemical stability against a base of the ion-exchange groups by the following method based on $^{31}P$-NMR spectroscopy.
Potassium hydroxide was dissolved in heavy methanol or a solvent mixture of heavy methanol/heavy water (5/1). Potassium hydroxide solutions having concentrations of 1 M and 2 M were prepared.
Samples of the polymers obtained in the examples and samples of the compounds obtained in the synthesis examples were dissolved in the potassium hydroxide solutions to prepare sample solutions.

To NMR tubes containing the sample solutions were inserted capillary tubes containing an aqueous phosphoric acid solution sealed therein as an external standard. $^{31}$P-NMR analyses were performed at room temperature.
Next, the sample solutions were immersed in a sand bath maintained at 80°C, and after a predetermined time, $^{31}$P-NMR analyses were performed. The residual rate of each sample (each of the polymers and compounds) at the corresponding immersion duration was calculated by the following formula, and the decomposition behavior was tracked.

Residual rate = {(Peak area of residual phosphazenium compound after heating)/(Peak area of phosphoric acid) }/ { (Peak area of residual phosphazenium compound before heating)/(Peak area of phosphoric acid)} × 100 (%)

(Evaluation B)

Evaluation of the chemical stability of an ammonium compound

The chemical stability against a base of the ionexchange groups in the ammonium compound was evaluated by the following method based on $^{1}$H-NMR spectroscopy.
Potassium hydroxide was dissolved in a solvent mixture of heavy methanol/heavy water (5/1) to prepare a potassium hydroxide solution having a concentration of 1 M.
An ammonium compound was dissolved in the potassium hydroxide solution to prepare a sample solution.
The sample solution was introduced into an NMR tube, and $^{1}$H-NMR analysis was performed at room temperature.
Next, the sample solution was heated in a sand bath at 80°C, and after a predetermined time, $^{1}$H-NMR analysis was performed. The residual rate of the ammonium compound was calculated by the following formula, and the decomposition behavior was tracked.

Residual rate = (Peak area of residual ammonium compound after heating)/(Total peak area after heating) × 100 (%)

<Measurement of ion exchange capacity (IEC)>

Ion exchange capacity (IEC) refers to the amount of counter anions that can be taken up by an anion exchange membrane and is usually determined by measuring the taken up hydroxy ions. A membrane with higher IEC has relatively low membrane resistance and is expected to achieve high power generation efficiency in devices such as fuel cells and water electrolysers.
A $OH^-$ form anion exchange membrane (single membrane) was immersed in a 0.025 M HCl solution for 24 hours to replace the counter anion of the membrane with $Cl^-$. Thereafter, the supernatant HCl solution was separated and titrated with a 0.025 M aqueous sodium hydroxide solution. IEC was calculated using the following formula:

$$\text{IEC (mmol/g)} = (V_{HCl} \times C_{HCl} - V_{NaOH} \times C_{NaOH})/M$$

wherein $V_{HCl}$ (mL) is the volume of hydrochloric acid, $C_{HCl}$ (mol/L) is the concentration of hydrochloric acid, $V_{NaOH}$ (mL) is the volume of sodium hydroxide, $C_{NaOH}$ (mol/L) is the concentration of sodium hydroxide, and M (g) is the weight of the sample.

<Measurement of membrane resistance>

An anion exchange membrane (composite membrane) was installed in the center of a two-compartment cell (cross-sectional area X ($cm^2$)) equipped with nickel electrodes, and the compartments on both sides of the anion exchange membrane were filled with a 1 M KOH aqueous solution as an electrolyte. The resistance (A) between the electrodes at 25°C was measured with BATTERY HiTESTER 3555 available from HIOKI E.E. CORPORATION. Similarly, the resistance (B) between the electrodes was measured without installing an anion exchange membrane. The membrane resistance was obtained from the following formula.

$$\text{Membrane resistance} = (A - B) \times X\ (\Omega\cdot cm^2)$$

Synthesis Example 1: Synthesis of phosphazene compound (1)

A side-arm flask purged with nitrogen was charged with hexachlorocyclotriphosphazene (1.00 g, 2.88 mmol) and toluene (10 mL), followed by stirring for dissolution. The reaction liquid was cooled to -27°C. To the reaction liquid was

added pyrrolidine (1.65 g, 23.20 mmol) using a dropping funnel. The mixture was warmed to room temperature and reacted for 24 hours. After completion of the reaction, the produced solid was removed by filtration, and the solvent was distilled off under reduced pressure to give a solid. The resulting solid was recrystallized with THF/hexane (1/5) at -35°C for two days to give a phosphazene compound (1) (0.52 g, 37%).

The compound (1) was subjected to $^{31}$P-NMR analysis, and peaks at 27.8 ppm (d) and 16.6 ppm (t) were confirmed. Thereby, the phosphazene compound (1) was found to be a phosphazene bond-containing compound having a structure represented by the following formula.

[Chem. 22]

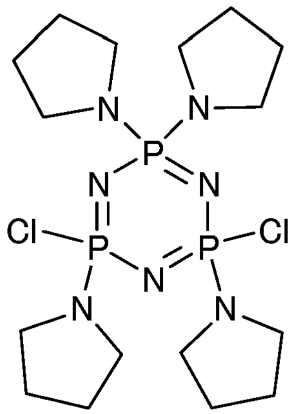

**Phosphazene compound (1)**

Example 1: Production of phosphazene bond-containing polymer (1)

A side-arm flask purged with nitrogen was charged with the phosphazene compound (1) (0.75 g, 1.55 mmol), 1,3-di-4-piperidylpropane (0.33 g, 1.55 mmol), tetrabutylammonium bromide (50 mg, 0.16 mmol), potassium carbonate (0.63 mg, 4.56 mmol), and dehydrated THF (1.5 mL). They were reacted at 66°C for 30 hours with stirring. After completion of the reaction, the reaction liquid was added dropwise to water (100 mL), and the produced white solid was collected by suction filtration. The solid was dried under reduced pressure to give a polymer (1a) (0.80 g, 83%).

The polymer (1a) was subjected to $^{31}$P-NMR analysis, and peaks at 20.3 ppm (m) and 18.2 ppm (m) were confirmed. Thereby, the polymer (1a) was found to be a phosphazene bond-containing polymer mainly having a structural unit represented by the following formula as a repeating unit.

The polymer was analyzed by gel permeation chromatography and was found to have a number average molecular weight of about 7,000 and a weight average molecular weight of about 12,000.

[Chem. 23]

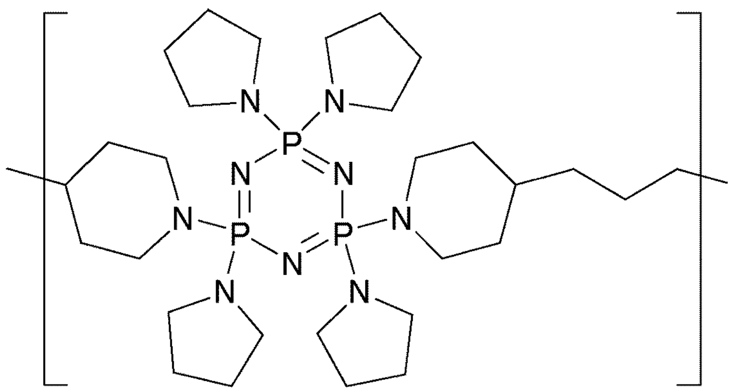

Next, a side-arm flask purged with nitrogen was charged with the resulting polymer (1a) (0.70 g, 1.12 mmol), methyl iodide (1.60 g, 11.2 mmol), and dehydrated THF (9 mL), followed by reacting at 60°C for three hours. The solvent was distilled off under reduced pressure to give a polymer (1) (0.84 g, 98%).

The polymer (1) was subjected to $^{31}$P-NMR analysis, and peaks at 18.3 ppm (m), 15.9 ppm (m), 12.2 ppm (m),

and 9.7 ppm (m) were confirmed. Thereby, the polymer (1) was found to be a phosphazene bond-containing polymer having structural units represented by the following formulas as repeating units. The result of the $^{31}$P-NMR analysis also indicated that the percentage of the cationized structural unit was about 60%.

The resulting polymer (1) was subjected to chemical stability evaluation (evaluation A). The result indicated that the residual rate was 80% or more even after one month of immersion.

[Chem. 24]

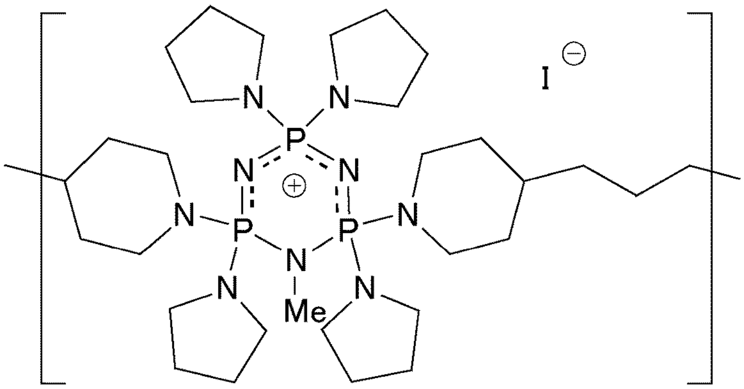

[Chem. 25]

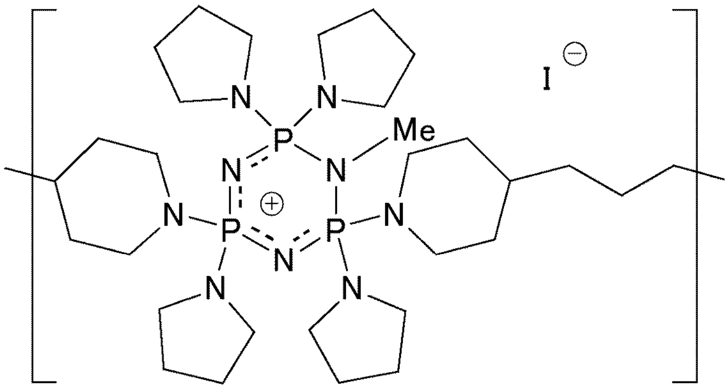

Example 2: Preparation of anion exchange membrane (Preparation of anion exchange membrane (single membrane))

A 9 mL screw-cap tube (Maruem Corporation, No. 3) containing the polymer (1) (0.5 g) obtained in Example 1 and methanol (2.5 g) was shaken using a vortex mixer and an ultrasonic cleaner until the substance was dissolved to be no longer visible. Thus, a polymer solution (20% by weight) was prepared. The polymer solution was applied onto a release PET film (TOYOBO CO., LTD., K1504) with an applicator, heated in an oven at 60°C for 24 hours under normal pressure, and then vacuum-dried at room temperature for 24 hours. Thereafter, the membrane was peeled off from the PET film to give an anion exchange membrane (single membrane) having a size of 2.5 cm × 2.5 cm and a thickness of 100 μm. The resulting membrane was immersed in a 1 M NaOH aqueous solution at room temperature for 62 hours for salt exchange, and washed with a small amount of deionized water to prepare a $OH^-$ form anion exchange membrane.

(Preparation of anion exchange membrane (composite membrane))

A 20% by weight solution of the polymer (1) produced as described above was applied onto a 2.5 cm × 10 cm microporous film (made of PP, single layer, thickness 22 μm, porosity 41%). The microporous film was impregnated with the polymer solution, the excess liquid on both sides of the film was removed, and the film was dried at room temperature for 24 hours to give an anion exchange membrane (composite membrane). The film had a thickness of 22 μm. The resulting membrane was immersed in a 1 M NaOH aqueous solution at room temperature for 24 hours for salt exchange, and washed with a small amount of deionized water to prepare a $OH^-$ form anion exchange membrane.

The anion exchange membranes obtained in Example 2 were subjected to evaluation of electrochemical properties including ion exchange capacity and membrane resistance. The results shows that the single membrane

has an ion exchange capacity (IEC) of 0.75 mmol/g and the composite membrane has a membrane resistance of 0.17 ($\Omega\cdot cm^2$).

These results demonstrate that the membranes of the examples of the present invention can have excellent stability and achieve sufficient anion conductivity at the same time.

Synthesis Example 2: Synthesis of phosphazene compound (2)

A side-arm flask purged with nitrogen was charged with hexachlorocyclotriphosphazene (0.50 g, 1.44 mmol), dehydrated THF (10 mL), and triethylamine (5 mL), followed by stirring for dissolution. Thereafter, pyrrolidine (1.23 g, 17.29 mmol) was added, and the solution was refluxed for 44 hours. After completion of the reaction, the produced solid was removed by filtration, and the solvent was distilled off under reduced pressure to give a solid. Toluene (5 mL) was added to the solid so that the solid was dissolved. The resulting solution was transferred to a side-arm reaction vessel, and 1 M NaOH (5 mL) was added thereto. The contents were vigorously stirred at room temperature for two hours. The organic layer was extracted and dried over magnesium sulfate. The solvent was distilled off under reduced pressure to give a phosphazene compound (2a) (0.58 g, yield 72%).

The compound (2a) was subjected to $^{31}P$-NMR analysis, and a peak at 18.2 ppm (s) was confirmed. Thereby, the phosphazene compound (2a) was found to be a phosphazene bond-containing compound having a structure represented by the following formula.

[Chem. 26]

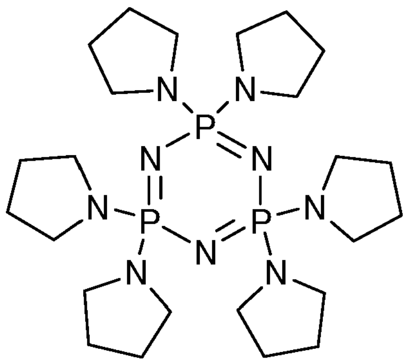

**Phosphazene compound (2a)**

Next, a side-arm reaction vessel purged with nitrogen was charged with the phosphazene compound (2a) (0.44 g, 0.79 mmol) and toluene (8 mL), followed by stirring for dissolution. Methyl iodide (0.23 g, 1.62 mmol) was added thereto, the temperature of the contents was raised, and the contents were refluxed for three hours. The solvent was distilled off to give a phosphazene compound (2) (0.36 g, yield 65%).

The compound (2) was subjected to $^{31}P$-NMR analysis, and peaks at 16.7 ppm (d) and 10.6 ppm (t) were confirmed. Thereby, the phosphazene compound (2) was found to be a phosphazene bond-containing compound having a structure represented by the following formula.

[Chem. 27]

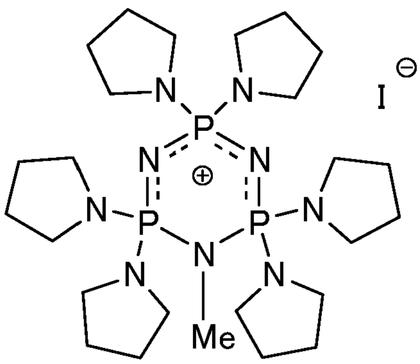

**Phosphazene compound** (2)

Synthesis Example 3: Synthesis of phosphazene compound (3)

A side-arm flask purged with nitrogen was charged with hexachlorocyclotriphosphazene (1.00 g, 2.88 mmol) and toluene (10 mL), followed by stirring for dissolution. The reaction liquid was cooled to -27°C. To the reaction liquid was added pyrrolidine (1.65 g, 23.20 mmol) using a dropping funnel. The mixture was warmed to room temperature and reacted for 24 hours. After completion of the reaction, the produced solid was removed by filtration, and the solvent was distilled off under reduced pressure to give a solid. The solid was recrystallized with THF/hexane (1/5) at -35°C for two days to give a phosphazene compound (3a) (0.52 g, 37%).

The compound (3a) was subjected to $^{31}$P-NMR analysis, and peaks at 27.8 ppm (d) and 16.6 ppm (t) were confirmed. Thereby, the phosphazene compound (3a) was found to be a phosphazene bond-containing compound having a structure represented by the following formula.

[Chem. 28]

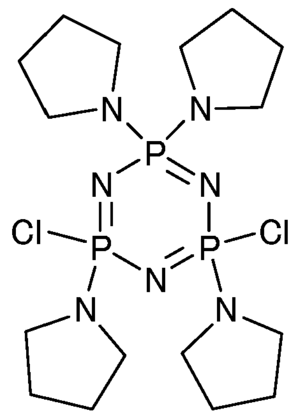

**Phosphazene compound (3a)**

A side-arm reaction vessel purged with nitrogen was charged with the phosphazene compound (3a) (0.20 g, 0.41 mmol) and toluene (2 mL), followed by stirring for dissolution. Thereafter, triethylamine (1 mL) and piperidine (0.28 g, 3.29 mmol) were added, and the solution was reacted at 100°C for 10 hours. After completion of the reaction, the produced solid was removed by filtration, and the solvent was distilled off under reduced pressure to give a phosphazene compound (3b) (0.21 g, yield 88%).

The phosphazene compound (3b) was subjected to $^{31}$P-NMR analysis, and peaks at 20.3 ppm (d) and 18.3 ppm (t) were confirmed. Thereby, the phosphazene compound (3b) was found to be a phosphazene bond-containing compound having a structure represented by the following formula.

[Chem. 29]

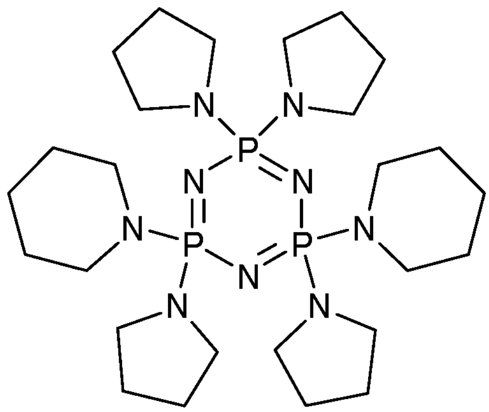

Phosphazene compound (3b)

Next, a side-arm reaction vessel purged with nitrogen was charged with the phosphazene compound (3b) (0.15 g, 0.28 mmol) and toluene (1.5 mL), followed by stirring for dissolution. Methyl iodide (73 mg, 0.51 mmol) was added thereto, the temperature of the contents was raised, and the contents were refluxed for three hours. Additional methyl iodide (73 mg, 0.51 mmol) was added thereto, the contents were refluxed for six hours, and the solvent was distilled off under reduced pressure to give a phosphazene compound (3) (0.20 g, 98%) as a mixture of positional isomers.

The compound (3) was subjected to $^{31}$P-NMR analysis, and peaks at 18.4 ppm (m), 16.0 ppm (t), 12.3 ppm (t), and 9.7 ppm (t) were confirmed. Thereby, the phosphazene compound (3) was found to be a phosphazene bond-containing compound having a structure represented by the following formula.

[Chem. 30]

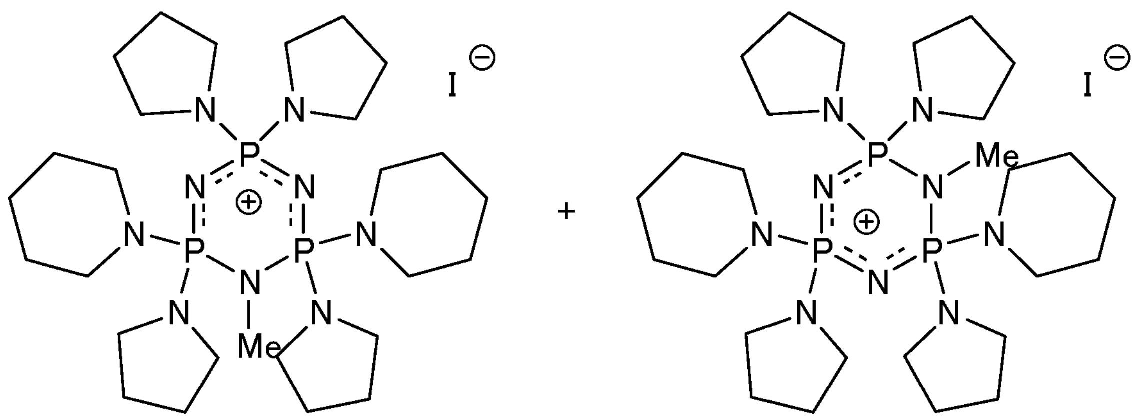

Phosphazene compound (3)

Reference Example 1: Ammonium compound

Commercially available benzyltriethylammonium chloride was used as a compound (r1) as it was.

The phosphazene compounds (2) and (3) obtained in Synthesis Examples 1 and 2 and the compound (r1) of Reference Example 1 were subjected to chemical stability evaluation. The phosphazene compounds (2) and (3) obtained in Synthesis Examples 1 and 2 were subjected to the chemical stability evaluation (A), and the ammonium compound (r1) of Reference Example 1 was subjected to chemical stability evaluation (B).

The evaluation results are shown in Table 1 together with the evaluation results of the polymer (1) obtained in Example 1. The polymer (1) and phosphazene compounds (2) and (3) were found to have high chemical stability.

[Table 1]

| Sample | Test conditions | Result |
|---|---|---|
| Polymer (1) | KOH (1M), methanol, 80°C | Residual rate was 95% or more after one month. |
| Phosphazene compound (2) | KOH (2M)), methanol/water = 5/1, 80°C | Residual rate was 80% or more after one month. |
| Phosphazene compound (3) | KOH (2M), methanol, 80°C | Residual rate was 80% or more after one month. |
| Compound (r1) | KOH (1M), methanol/water = 5/1, 80°C | Residual rate was 40% after two weeks |

Example 3: Production of phosphazene bond-containing polymer (2)

A side-arm flask purged with nitrogen was charged with the phosphazene compound (1) (2.0 g, 4.11 mmol), 1,3-di-4-piperidylpropane (0.87 g, 4.11 mmol), tetrabutylammonium bromide (50 mg, 0.16 mmol), potassium carbonate (1.69, 12.2 mmol), dehydrated THF (1.5 mL), dehydrated toluene (1 mL), and dehydrated diglyme (1 mL), followed by reacting at 113°C for 60 hours with stirring. After completion of the reaction, the reaction liquid was filtered through celite, the resulting filtrate was added dropwise to DMF (100 mL), and the produced white solid was collected by suction filtration. The solid was dried under reduced pressure to give a polymer (2a) (2.03 g, 79%).

The polymer (2a) was subjected to $^{31}$P-NMR analysis, and peaks at 20.3 ppm (m) and 18.2 ppm (m) were confirmed. Thereby, the polymer (2a) was found to be a phosphazene bond-containing polymer mainly having a structural unit represented by the following formula as a repeating unit.

The polymer (2a) was analyzed by gel permeation chromatography and was found to have a number average molecular weight of about 19,000 and a weight average molecular weight of about 60,000 in terms of polystyrene.

[Chem. 31]

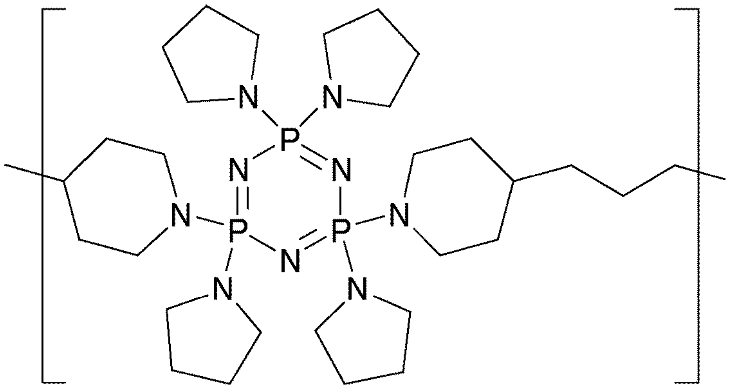

Next, a side-arm flask purged with nitrogen was charged with the polymer (2a) (1.80 g, 2.89 mmol), methyl iodide (2.05 g, 14.4 mmol), potassium carbonate (0.40 g, 2.89 mmol), and dehydrated toluene (10 mL), followed by reacting at 60°C for three hours. The solvent was distilled off under reduced pressure to give the polymer (1) (2.20 g, 99%).

The polymer (1) was subjected to $^{31}$P-NMR analysis, and peaks at 18.3 ppm (m), 15.9 ppm (m), 12.2 ppm (m), and 9.7 ppm (m) were confirmed. Thereby, the polymer (2) was found to be a phosphazene bond-containing polymer having structural units represented by the following formulas as repeating units.

The result of the $^{31}$P-NMR analysis also indicated that the percentage of the cationized structural unit was 90% or higher.

A single membrane was prepared by the method described in Example 2, and the IEC measured was 1.20 mmol/g.

A membrane prepared using the polymer (2a) and a membrane prepared using the polymer (2) were analyzed by solid-state $^{13}$C-NMR, solid-state $^{31}$P-NMR, and solid-state $^{15}$N-NMR. The results are shown in FIGS. 1 to 3.

As shown in the solid-state $^{13}$C-NMR spectrums in FIG. 1, the intensity of the peak around 35 ppm of the cationized polymer (2) is relatively higher than that of the non-cationized polymer (2a). As shown in the solid-state $^{31}$P-NMR spectrums in FIG. 2, the cationized polymer (2) has a peak shifted to higher magnetic field and having a shoulder on

the higher magnetic field side when compared to the non-cationized polymer (2a). As shown in the solid-state $^{15}$N-NMR spectrums in FIG. 3, the cationized polymer (2) has a lower intensity peak at around 60 ppm and a higher intensity peak at around 50 ppm, compared to the non-cationized polymer (2a).

As described above, characteristic spectrum changes were confirmed in the solid-state NMR analyses of the membrane samples.

[Chem. 32]

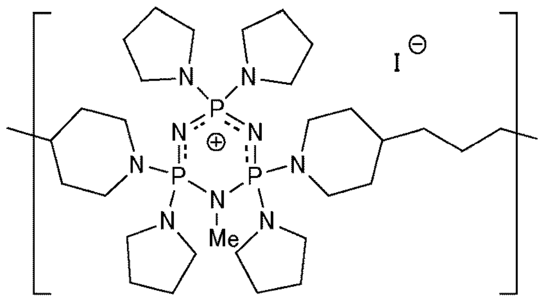

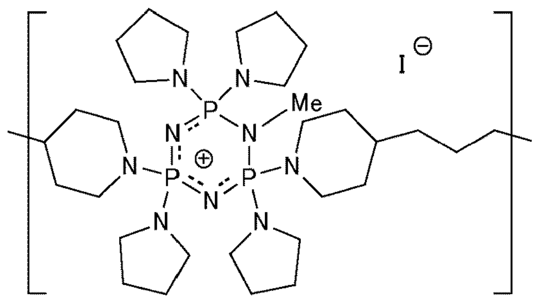

Synthesis Example 4: Synthesis of phosphazene compound (4)

A phosphazene compound (4) represented by the following formula in which four dimethylamines were introduced as substituents was synthesized as in Synthesis Example 1 except that pyrrolidine was replaced by dimethylamine.

The compound (4) was subjected to $^{31}$P-NMR analysis, and peaks at 32.1 ppm (d) and 24.7 ppm (t) were confirmed. Thereby, the phosphazene compound (4) was found to be a phosphazene bond-containing compound having a structure represented by the following formula.

[Chem. 33]

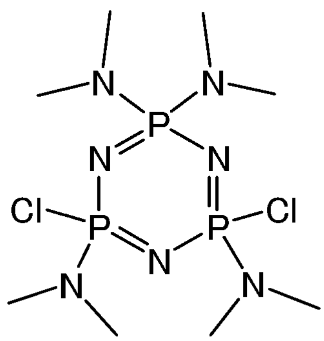

Phosphazene compound (4)

Example 4: Production of phosphazene bond-containing polymer (3)

A phosphazene-containing polymer (3) was synthesized as in Example 3, except that the phosphazene compound (1) was replaced by the phosphazene compound (4) obtained in Synthesis Example 4.

The polymer (3) was subjected to $^{31}$P-NMR analysis, and peaks at 25.2 ppm (m) and 23.8 ppm (m) were confirmed. Thereby, the polymer (3a) was found to be a phosphazene bond-containing polymer having a structural unit represented by the following formula as a repeating unit.

The polymer (3a) was analyzed by gel permeation chromatography and was found to have a number average molecular weight of about 13,000 and a weight average molecular weight of about 51,000 in terms of polystyrene.

[Chem. 34]

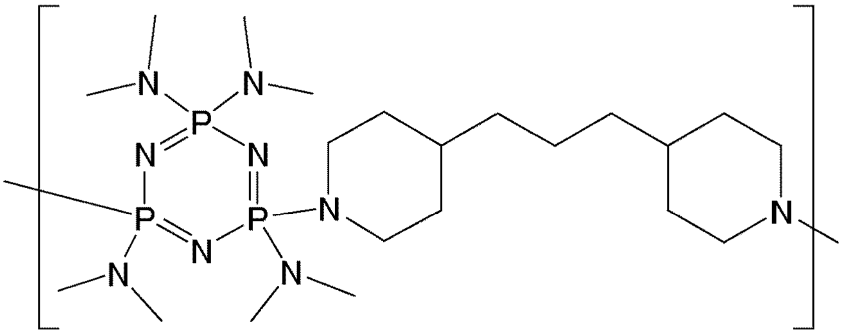

Next, a phosphazenium polymer (3) was synthesized as in Example 3, except that the polymer (2a) was replaced by the phosphazene-containing polymer (3a).

The polymer (3) was subjected to $^{31}$P-NMR analysis, and peaks at 22.1 ppm (m), 20.3 ppm (m), 16.3 ppm (m), 13.7 pm (m), and 10.4 ppm (m) were confirmed. Thereby, the polymer (3) was found to be a phosphazene bond-containing polymer having structural units represented by the following formulas as repeating units.

A single membrane was prepared by the method described in Example 2, and the IEC measured was 1.00 mmol/g.

[Chem. 35]

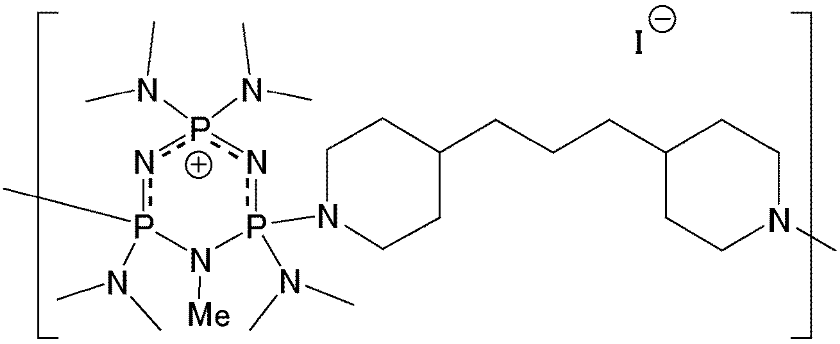

+

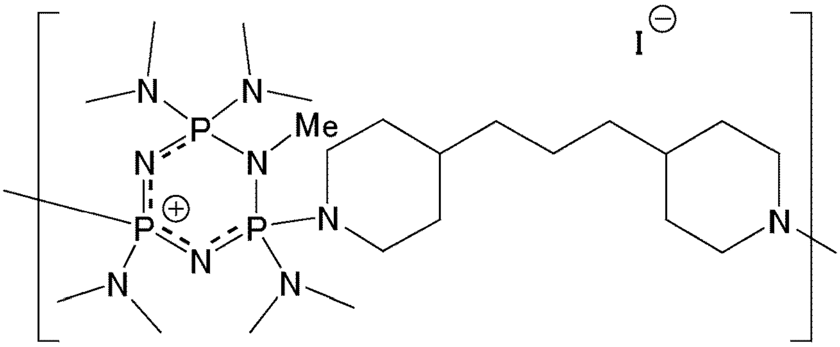

Example 5: Production of phosphazene bond-containing polymer (4)

A phosphazene-containing polymer (4a) having a structural unit represented by the following formula as a repeating unit was synthesized as in Example 3, except that 1,3-di-4-piperidylpropane was replaced by N,N'-dimethylethylenediamine.

The polymer (4a) was subjected to $^{31}$P-NMR analysis, and peaks at 25.9 ppm (m) and 20.3 ppm (m) were confirmed. Thereby, the polymer (4a) was found to be a phosphazene bond-containing polymer having a structural unit

represented by the following formula as a repeating unit.

[Chem. 36]

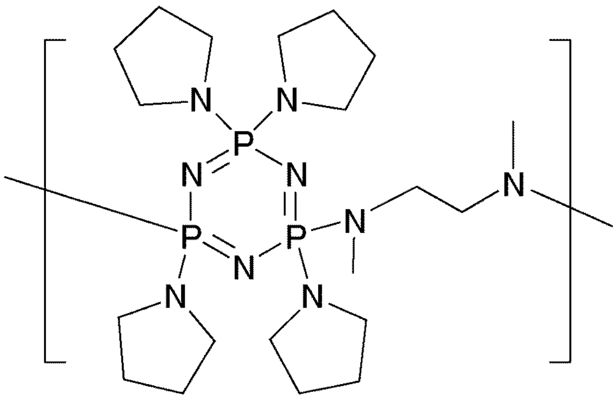

Next, a phosphazenium polymer (4) was synthesized as in Example 3, except that the polymer (2a) was replaced by the phosphazene-containing polymer (4a).

The polymer (4) was subjected to $^{31}$P-NMR analysis, and peaks at 26.3 ppm (m), 19.3 ppm (m), 19.1 ppm (m), 16.9 ppm (m), and 12.2 ppm (m) were confirmed. Thereby, the polymer (4) was found to be a phosphazene bond-containing polymer having structural units represented by the following formulas as repeating units.

A single membrane was prepared by the method described in Example 2, and the IEC measured was 0.98 mmol/g.

[Chem. 37]

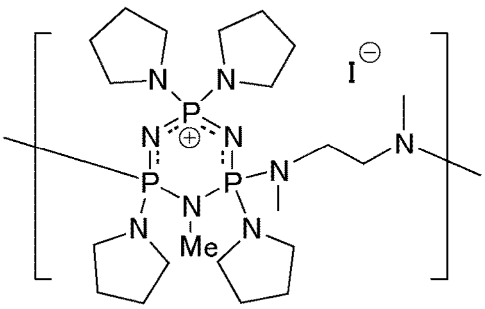

+

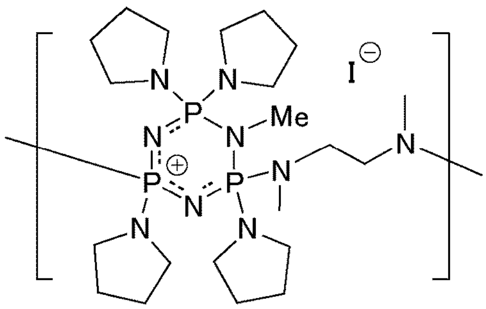

Example 6: Preparation of anion exchange membrane (blend membrane)

A 9-mL screw-cap tube (Maruem Corporation, No. 3) containing the polymer (2) (0.43 g) obtained in Example 3 and DMF (1.0 g) was shaken using a vortex mixer and an ultrasonic cleaner until the substance was dissolved to be no longer visible. Thus, a phosphazene polymer solution (30% by weight) was prepared. A solution of polysulfone in DMF (35% by weight) was prepared in the same manner. The phosphazene polymer solution (450 mg) and the polysulfone solution (43 mg) were mixed and homogeneously shaken with a vortex mixer and an ultrasonic cleaner to give a blended polymer solution. The polymer solution was applied onto a PET film with an applicator and dried by heating in an oven at 100°C for two hours under normal pressure. Thereafter, the membrane was peeled off from the PET film to give an anion exchange membrane (blend membrane) having a size of 2.5 cm × 2.5 cm and a thickness of 24 μm. The resulting membrane was immersed in a 1 M NaOH aqueous solution at room temperature for 62 hours for salt exchange, and washed with a small amount of deionized water to prepare a $OH^-$ form anion exchange membrane.

The membrane resistance measured as in Example 2 was 0.17 (Ω•$cm^2$).

## Claims

**1.** A phosphazene bond-containing polymer, comprising:

a phosphorus atom constituting a phosphazene bond, the phosphorus atom including a phosphorus atom to which a nitrogen-containing group is bonded; and
a nitrogen atom constituting the phosphazene bond, the nitrogen atom including a nitrogen atom to which a hydrocarbon group is bonded,
wherein the phosphazene bond-containing polymer is a cationic polymer, and
wherein the phosphazene bond-containing polymer has a cyclic-phosphazene structure in a main chain or a side chain.

**2.** The phosphazene bond-containing polymer according to claim 1, comprising:

(i) a structural unit (A-1) represented by the following formula (A-1):

[Chem. 1]

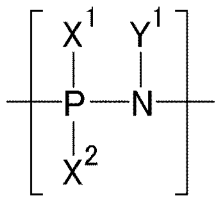

(A-1)

wherein $Y^1$ is a hydrocarbon group; $X^1$ and $X^2$ are each independently at least one selected from the group consisting of a hydroxy group, halogen atoms, a hydrocarbon group, a $OR^{11}$ group, a $C(=O)R^{12}$ group, a $SR^{13}$ group, and a nitrogen-containing group, with at least one of $X^1$ or $X^2$ being a nitrogen-containing group; the hydrocarbon group, the $OR^{11}$ group, the $C(=O)R^{12}$ group, the $SR^{13}$ group, and the nitrogen-containing group are each optionally a monovalent group, or optionally a divalent group bonded to the hydrocarbon group for $Y^1$, bonded to a phosphazene structure different from the phosphazene structure of the structural unit (A-1), or bonded to a structure that is not a phosphazene structure, in the phosphazene bond-containing polymer; $X^1$ and $X^2$ are optionally bonded to each other; $R^{11}$, $R^{12}$, and $R^{13}$ are each independently a hydrocarbon group; and the phosphorus atom P or nitrogen atom N in the formula is optionally positively charged, or
(ii) a structural unit (A-2) represented by the following formula (A-2) and a structural unit (A-3) represented by the following formula (A-3):

[Chem. 2]

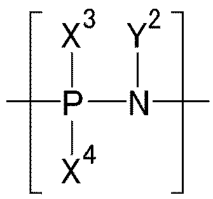

(A-2)

wherein $Y^2$ is a hydrocarbon group; $X^3$ and $X^4$ are each independently selected from the group consisting of a hydroxy group, halogen atoms, a hydrocarbon group, a $OR^{21}$ group, a $C(=O)R^{22}$ group, and a $SR^{23}$ group; the hydrocarbon group, the $OR^{21}$ group, the $C(=O)R^{22}$ group, and the $SR^{23}$ group are each optionally a monovalent group, or optionally a divalent group bonded to the hydrocarbon group for $Y^2$, bonded to a phosphazene structure different from the phosphazene structure of the structural unit (A-2), or bonded to a structure that is not a phosphazene structure, in the phosphazene bond-containing polymer; $X^3$ and $X^4$ are optionally bonded to each other; $R^{21}$, $R^{22}$, and $R^{23}$ are each independently a hydrocarbon group; and the phosphorus atom P or the nitrogen atom N in the formula is optionally positively charged,

[Chem. 3]

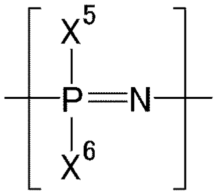 (A-3)

wherein $X^5$ and $X^6$ are each independently at least one selected from the group consisting of a hydroxy group, halogen atoms, a hydrocarbon group, a $OR^{31}$ group, a $C(=O)R^{32}$ group, a $SR^{33}$ group, and a nitrogen-containing group, with at least one of $X^5$ or $X^6$ being a nitrogen-containing group; the hydrocarbon group, the $OR^{31}$ group, the $C(=O)R^{32}$ group, the $SR^{33}$ group, and the nitrogen-containing group are each optionally a monovalent group, or optionally a divalent group bonded to a phosphazene structure different from the phosphazene structure of the structural unit (A-3), or bonded to a structure that is not a phosphazene structure, in the phosphazene bond-containing polymer; $X^5$ and $X^6$ are optionally bonded to each other; and $R^{31}$, $R^{32}$, and $R^{33}$ are each independently a hydrocarbon group.

**3.** The phosphazene bond-containing polymer according to claim 1 or 2, further comprising a counter anion.

**4.** The phosphazene bond-containing polymer according to any one of claims 1 to 3,
wherein the nitrogen-containing group is represented by the following formula (B-1):

$$NR^{b1}{}_n \qquad (B\text{-}1)$$

wherein n is 1 or 2; when n is 2, $R^{b1}$s are each independently a hydrogen atom or an organic group containing an optionally substituted monovalent or multivalent hydrocarbon group; and when n is 1, $R^{b1}$ is an organic group containing an optionally substituted multivalent hydrocarbon group.

**5.** An electrolyte material comprising the phosphazene bond-containing polymer according to any one of claims 1 to 4.

**6.** An anion exchange membrane comprising the phosphazene bond-containing polymer according to any one of claims 1 to 4.

**Patentansprüche**

**1.** Phosphazenbindungshaltiges Polymer, umfassend:

ein Phosphoratom, das eine Phosphazenbindung bildet, wobei das Phosphoratom ein Phosphoratom umfasst, an das eine stickstoffhaltige Gruppe gebunden ist; und
ein Stickstoffatom, das die Phosphazenbindung bildet, wobei das Stickstoffatom ein Stickstoffatom umfasst, an das eine Kohlenwasserstoffgruppe gebunden ist,
wobei das phosphazenbindungshaltige Polymer ein kationisches Polymer ist, und
wobei das phosphazenbindungshaltige Polymer eine cyclische Phosphazenstruktur in einer Hauptkette oder einer Seitenkette aufweist.

**2.** Phosphazenbindungshaltiges Polymer nach Anspruch 1, umfassend:

(i) eine Struktureinheit (A-1), dargestellt durch die folgende Formel (A-1)

[Chem. 1]

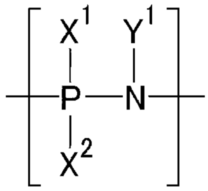

(A-1)

wobei $Y^1$ eine Kohlenwasserstoffgruppe ist; $X^1$ und $X^2$ jeweils unabhängig voneinander mindestens eines sind, ausgewählt aus der Gruppe bestehend aus einer Hydroxygruppe, Halogenatomen, einer Kohlenwasserstoffgruppe, einer $OR^{11}$-Gruppe, einer $C(=O)R^{12}$-Gruppe, einer $SR^{13}$-Gruppe und einer stickstoffhaltigen Gruppe, wobei mindestens eine von $X^1$ oder $X^2$ eine stickstoffhaltige Gruppe ist; die Kohlenwasserstoffgruppe, die $OR^{11}$-Gruppe, die $C(=O)R^{12}$-Gruppe, die $SR^{13}$-Gruppe und die stickstoffhaltige Gruppe jeweils wahlweise eine einwertige Gruppe oder wahlweise eine zweiwertige Gruppe, die an die Kohlenwasserstoffgruppe für $Y^1$, an eine von der Phosphazenstruktur der Struktureinheit (A-1) verschiedene Phosphazenstruktur oder an eine Struktur, die keine Phosphazenstruktur ist, im phosphazenbindungshaltigen Polymer gebunden ist, sind; $X^1$ und $X^2$ wahlweise miteinander verbunden sind; $R^{11}$, $R^{12}$ und $R^{13}$ jeweils unabhängig voneinander eine Kohlenwasserstoffgruppe sind; und das Phosphoratom P oder das Stickstoffatom N in der Formel wahlweise positiv geladen ist, oder

(ii) eine Struktureinheit (A-2), dargestellt durch die folgende Formel (A-2), und eine Struktureinheit (A-3), dargestellt durch die folgende Formel (A-3):

[Chem. 2]

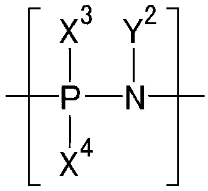

(A-2)

wobei $Y^2$ eine Kohlenwasserstoffgruppe ist; $X^3$ und $X^4$ jeweils unabhängig voneinander ausgewählt sind aus der Gruppe bestehend aus einer Hydroxygruppe, Halogenatomen, einer Kohlenwasserstoffgruppe, einer $OR^{21}$-Gruppe, einer $C(=O)R^{22}$-Gruppe und einer $SR^{23}$-Gruppe; die Kohlenwasserstoffgruppe, die $OR^{21}$-Gruppe, die $C(=O)R^{22}$-Gruppe und die $SR^{23}$-Gruppe jeweils wahlweise eine einwertige Gruppe oder wahlweise eine zweiwertige Gruppe, die an die Kohlenwasserstoffgruppe für $Y^2$, an eine von der Phosphazenstruktur der Struktureinheit (A-2) verschiedene Phosphazenstruktur oder an eine Struktur, die keine Phosphazenstruktur ist, im phosphazenbindungshaltigen Polymer gebunden ist, sind; $X^3$ und $X^4$ wahlweise miteinander verbunden sind; $R^{21}$, $R^{22}$ und $R^{23}$ jeweils unabhängig voneinander eine Kohlenwasserstoffgruppe sind; und das Phosphoratom P oder das Stickstoffatom N in der Formel wahlweise positiv geladen ist,

[Chem. 3]

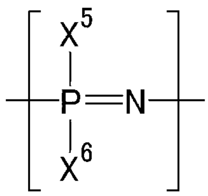

(A-3)

wobei $X^5$ und $X^6$ jeweils unabhängig voneinander mindestens eines sind, ausgewählt aus der Gruppe bestehend aus einer Hydroxygruppe, Halogenatomen, einer Kohlenwasserstoffgruppe, einer $OR^{31}$-Gruppe, einer $C(=O)R^{32}$-Gruppe, einer $SR^{33}$-Gruppe und einer stickstoffhaltigen Gruppe, wobei mindestens eine von $X^5$ oder $X^6$ eine stickstoffhaltige Gruppe ist; die Kohlenwasserstoffgruppe, die $OR^{31}$-Gruppe, die $C(=O)R^{32}$-Gruppe, die $SR^{33}$-Gruppe und die stickstoffhaltige Gruppe jeweils wahlweise eine einwertige Gruppe oder wahlweise eine zweiwertige Gruppe, die an eine von der Phosphazenstruktur der Struktureinheit (A-3) verschiedene Phosphazenstruktur oder an eine Struktur, die keine Phosphazenstruktur ist, im phosphazenbindungshaltigen Polymer gebunden ist, sind; $X^5$ und $X^6$ wahlweise miteinander verbunden sind; und $R^{31}$, $R^{32}$ und $R^{33}$ jeweils unabhängig voneinander eine Kohlenwasserstoffgruppe sind.

**3.** Phosphazenbindungshaltiges Polymer nach Anspruch 1 oder 2, weiterhin umfassend ein Gegenanion.

**4.** Phosphazenbindungshaltiges Polymer nach einem der Ansprüche 1 bis 3, wobei die stickstoffhaltige Gruppe durch die folgende Formel (B-1) dargestellt ist:

$$NR^{b1}{}_n \qquad (B\text{-}1)$$

wobei n 1 oder 2 ist; wenn n 2 ist, $R^{b1}{}_s$ jeweils unabhängig voneinander ein Wasserstoffatom oder eine organische Gruppe, die eine wahlweise substituierte einwertige oder mehrwertige Kohlenwasserstoffgruppe enthält, sind; und wenn n 1 ist, $R^{b1}$ eine organische Gruppe ist, die eine wahlweise substituierte mehrwertige Kohlenwasserstoffgruppe enthält.

**5.** Elektrolytmaterial, umfassend das phosphazenbindungshaltige Polymer nach einem der Ansprüche 1 bis 4.

**6.** Anionenaustauschmembran, umfassend das phosphazenbindungshaltige Polymer nach einem der Ansprüche 1 bis 4.

## Revendications

**1.** Polymère contenant une liaison phosphazène, comprenant :

un atome de phosphore constituant une liaison phosphazène, l'atome de phosphore comprenant un atome de phosphore auquel est lié un groupe contenant de l'azote ; et
un atome d'azote constituant la liaison phosphazène, l'atome d'azote comprenant un atome d'azote auquel est lié un groupe hydrocarboné,
dans lequel le polymère contenant une liaison phosphazène est un polymère cationique, et
dans lequel le polymère contenant une liaison phosphazène présente une structure phosphazène cyclique dans une chaîne principale ou une chaîne latérale.

**2.** Polymère contenant une liaison phosphazène selon la revendication 1, comprenant :

(1) une unité structurelle (A-1) représentée par la formule (A-1) suivante :

[Formule 1]

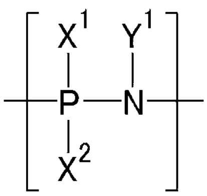

(A-1)

où $Y^1$ est un groupe hydrocarboné ; $X^1$ et $X^2$ sont chacun indépendamment au moins un choisi dans le groupe constitué par un groupe hydroxy, des atomes d'halogènes, un groupe hydrocarboné, un groupe $OR^{11}$, un groupe $C(=O)R^{12}$, un groupe $SR^{13}$ et un groupe contenant de l'azote, l'un au moins de $X^1$ ou $X^2$ étant un groupe contenant de l'azote ; le groupe hydrocarboné, le groupe $OR^{11}$, le groupe $C(=O)R^{12}$, le groupe $SR^{13}$ et le groupe contenant de l'azote sont chacun facultativement un groupe monovalent, ou facultativement un groupe divalent lié au groupe hydrocarboné pour $Y^1$, lié à une structure phosphazène différente de la structure phosphazène de l'unité structurelle (A-1), ou lié à une structure qui n'est pas une structure phosphazène, dans le polymère contenant une liaison phosphazène ; $X^1$ et $X^2$ sont facultativement liés l'un à l'autre ; $R^{11}$, $R^{12}$ et $R^{13}$ sont chacun indépendamment un groupe hydrocarboné ; et l'atome de phosphore P ou l'atome d'azote N dans la formule est facultativement chargé positivement, ou
(ii) une unité structurelle (A-2) représentée par la formule (A-2) suivante et une unité structurelle (A-3)

représentée par la formule (A-3) suivante

[Formule 2]

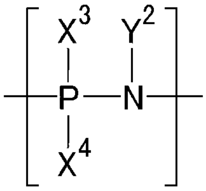

(A-2)

où $Y^2$ est un groupe hydrocarboné ; $X^3$ et $X^4$ sont chacun indépendamment choisis dans le groupe constitué par un groupe hydroxy, des atomes d'halogènes, un groupe hydrocarboné, un groupe $OR^{21}$, un groupe $C(=O)R^{22}$ et un groupe $SR^{23}$ ; le groupe hydrocarboné, le groupe $OR^{21}$, le groupe $C(=O)R^{22}$ et le groupe $SR^{23}$ sont chacun facultativement un groupe monovalent ou facultativement un groupe divalent lié au groupe hydrocarboné pour $Y^2$, lié à une structure phosphazène différente de la structure phosphazène de l'unité structurelle (A-2), ou lié à une structure qui n'est pas une structure phosphazène, dans le polymère contenant une liaison phosphazène ; $X^3$ et $X^4$ sont facultativement liés l'un à l'autre ; $R^{21}$, $R^{22}$ et $R^{23}$ sont chacun indépendamment un groupe hydrocarboné ; et l'atome de phosphore P ou l'atome d'azote N dans la formule est facultativement chargé positivement,

[Formule 3]

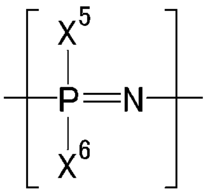

(A-3)

où $X^5$ et $X^6$ sont chacun indépendamment au moins un choisi dans le groupe constitué par un groupe hydroxy, des atomes d'halogènes, un groupe hydrocarboné, un groupe $OR^{31}$, un groupe $C(=O)R^{32}$, un groupe $SR^{33}$ et un groupe contenant de l'azote, l'un au moins de $X^5$ ou $X^6$ étant un groupe contenant de l'azote ; le groupe hydrocarboné, le groupe $OR^{31}$, le groupe $C(=O)R^{32}$, le groupe $SR^{33}$ et le groupe contenant de l'azote sont chacun facultativement un groupe monovalent ou facultativement un groupe divalent lié à une structure phosphazène différente de la structure phosphazène de l'unité structurelle (A-3), ou lié à une structure qui n'est pas une structure phosphazène, dans le polymère contenant une liaison phosphazène ; $X^5$ et $X^6$ sont éventuellement liés l'un à l'autre ; et $R^{31}$, $R^{32}$ et $R^{33}$ sont chacun indépendamment un groupe hydrocarboné.

**3.** Polymère contenant une liaison phosphazène selon la revendication 1 ou la revendication 2, comprenant en outre un contre-anion.

**4.** Polymère contenant une liaison phosphazène selon l'une quelconque des revendications 1 à 3, dans lequel le groupe contenant de l'azote est représenté par la formule (B-1) suivante

$$NR^{b1}{}_n \qquad (B-1)$$

où n vaut 1 ou 2 ; lorsque n vaut 2, les $R^{b1}$ sont chacun indépendamment un atome d'hydrogène ou un groupe organique contenant un groupe hydrocarboné monovalent ou multivalent facultativement substitué ; et lorsque n vaut 1, $R^{b1}$ est un groupe organique contenant un groupe hydrocarboné multivalent facultativement substitué.

**5.** Matériau électrolytique comprenant le polymère contenant une liaison phosphazène selon l'une quelconque des revendications 1 à 4.

**6.** Membrane échangeuse d'anions comprenant le polymère contenant une liaison phosphazène selon l'une quelconque des revendications 1 à 4.

FIG. 1

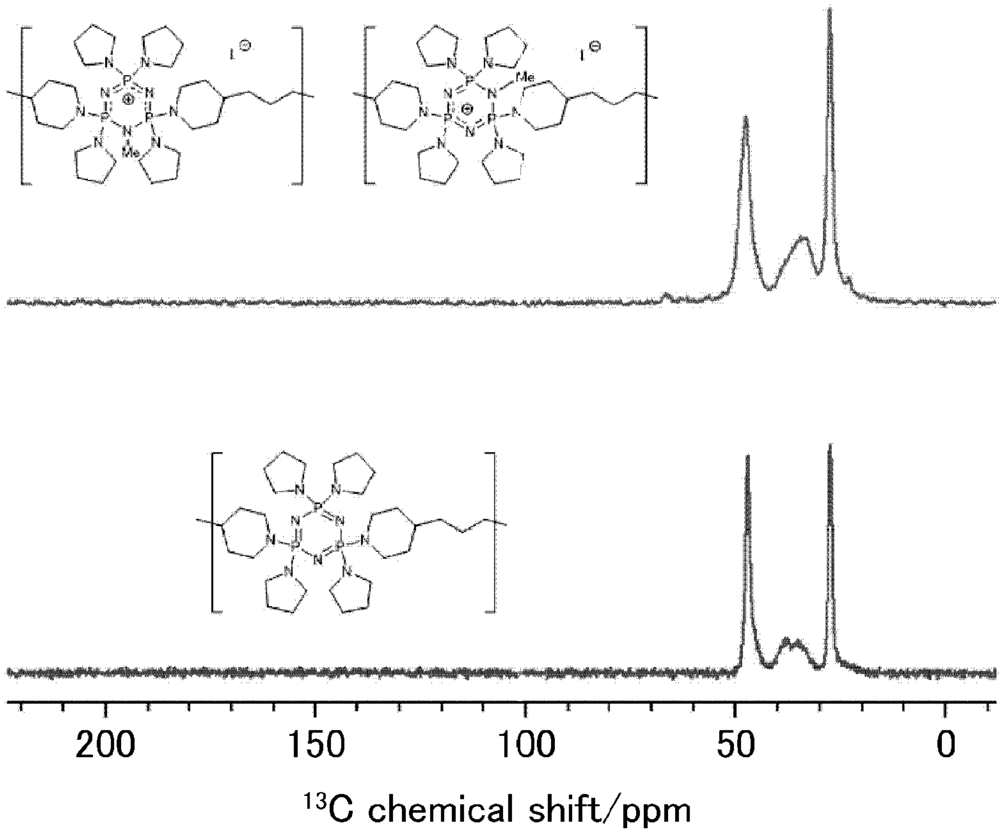

FIG. 2

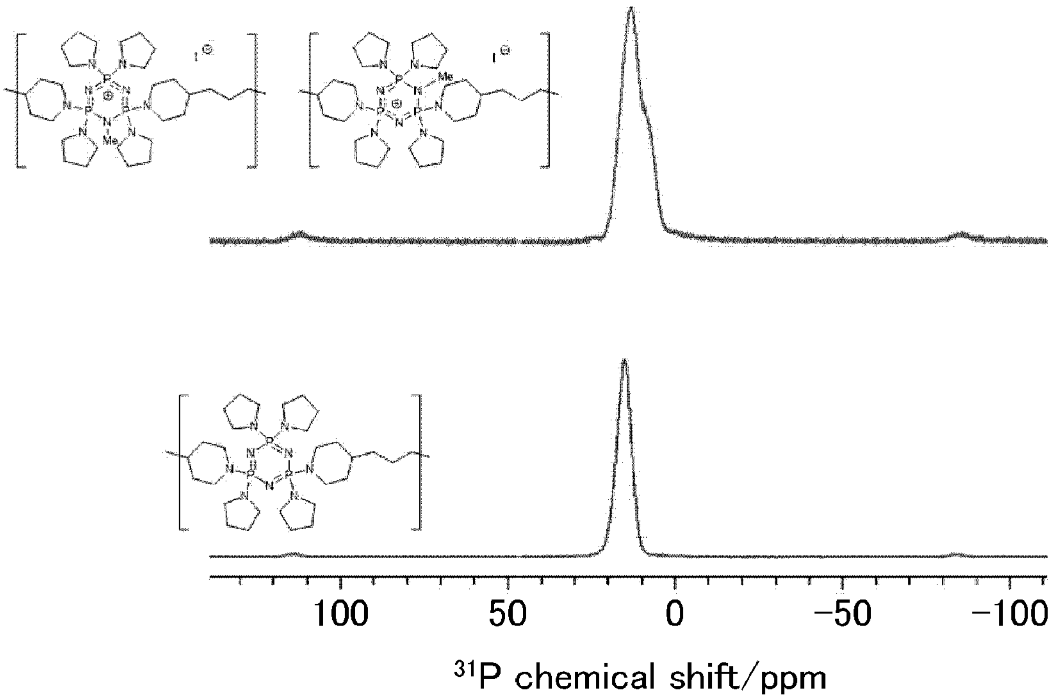

100
50
0
−50
−100
31P chemical shift/ppm


FIG. 3

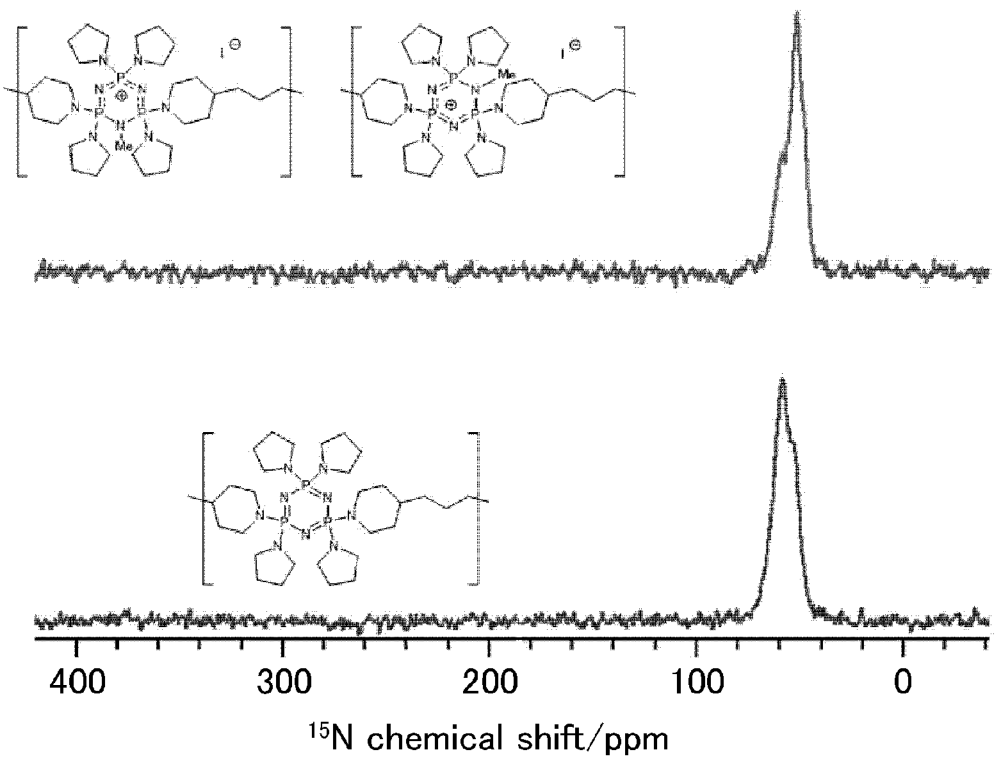

400
300
200
100
0
15N chemical shift/ppm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018070782 A
- JP 2013107916 A
- JP 2015125888 A
- JP 2015044760 A
- US 2006217526 A
- CN 112189278 A
- JP H08239395 A
- CN 109988332 A
- CN 104479135 A
- DE 2721826 A1


### Non-patent literature cited in the description


- *Macromolecules*, 2012, vol. 45, 1182-1189
- **KEAT et al.** *Journal of the Chemical Society*, 1976 (16), 1582
- **KEAT et al.** *Journal of the Chemical Society*, 1966, 908-913
- **ROTHEMUND et al.** *Chemical Society Reviews*, 2016, vol. 45 (19), 5200-5215